# EUROPEAN PATENT SPECIFICATION

(11) **EP 4 082 974 B1**
(45) Date of publication and mention of the grant of the patent: **15.07.2026**
(21) Application number: 21171570.1
(22) Date of filing: 30.04.2021
(51) Int. Cl.: C02F 1/461, C02F 1/469, A47L 15/00, A47L 15/24

(54) **CLEANING DEVICE AND PROCESS FOR CLEANING ITEMS**
REINIGUNGSVORRICHTUNG UND VERFAHREN ZUM REINIGEN VON GEGENSTÄNDEN
DISPOSITIF DE NETTOYAGE ET PROCÉDÉ DE NETTOYAGE D'ARTICLES

(43) Date of publication of application: 02.11.2022
(73) Proprietor: MEIKO Maschinenbau GmbH & Co. KG, 77652 Offenburg (DE)
(72) Inventor: Dürrse, Carsten, 77955 Ettenheim (DE); Gaus, Bruno, 77654 Offenburg (DE); van Linden, Niels, 3038 JE Rotterdam (NL); Schepers, Freek, 3743 EH Baarn (NL)
(74) Representative: Altmann Stößel Dick Patentanwälte PartG mbB

(56) References cited:
- CN-A- 111 777 130
- US-A1- 2009 159 448
- US-A1- 2013 126 353
- US-A1- 2014 014 145
- US-A1- 2019 276 940

## Description

### Technical Field

The present invention refers to a cleaning device for cleaning items and a process of cleaning items, in particular for use in commercial dishwashing and/or in large-scale kitchens. Cleaning devices of said kind may be used, for example, in facilities for catering, such as, in particular, office canteens, canteens in schools, public authorities, hospitals or care facilities. The cleaning device may be used, in particular, for cleaning items to be cleaned in the form of washware which is used directly or indirectly for preparing, storing or serving food and drinks. For example, the items to be cleaned may be dishes and/or trays. Other fields of use of the present invention are also feasible in principle, in particular fields of use with fundamentally any desired washware and/or in the domestic sector. Furthermore, use in cleaning care utensils, such as in cleaning and disinfection apparatuses, in particular so-called bedpan washers, for example, is also feasible. Use in cleaning apparatuses and/or disinfection apparatuses for personal protection equipment is also possible, for example for cleaning respiratory masks. Other fields of use are also possible in principle.

### Background art

A plurality of different cleaning devices are known from the prior art for cleaning and/or disinfecting one or more items to be cleaned. The present invention relates, without restricting further possibilities or further fields of use, to the field of commercial washing technology, specifically to the field of commercial dishwashing technology. Therein, besides automatic programmed washers with static washing processes, conveyor washers or pass-through washer, in which the items to be cleaned are transported through one or more washing chambers, are known. The design of these washers depends on various boundary conditions, such as a type of items to be cleaned, a soiling, a throughput or similar conditions. By way of example, reference may be made to cleaning devices which are described, for example, in WO 2005/070276 A1 or in WO 2015/091750 A1. Further, the invention may be used in other sectors in principle. The invention may also be used in the field of cleaning care utensils, for example as described in WO 2015/091750 A1, and/or cleaning personal protective equipment, for example as described in WO 2019/185809 A1. However, other fields of use are also feasible.

In cleaning devices known from the prior art, a plurality of cleaning chemicals may be used for the purpose of cleaning and/or disinfecting wash ware. Generally, a combination of alkali and complexing agents are used as cleaning chemicals. Additionally, cleaning chemicals often comprise bleaching agents and/or disinfectants. Typically, in commercial dishwashing machines, as an example, large amounts of sodium hydroxide solution are used. In most cases, the cleaning chemicals may be provided in liquid form to the cleaning devices. However, as cleaning chemicals are generally dangerous and/or hazardous substances, special handling, such as safe transportation and safe storage, of the cleaning chemicals is required. Supply of sodium hydroxide, as an example, in most countries, falls under the strict regulations of transport of hazardous materials. Further, operating staff of the cleaning devices has to be protected when handling hazardous substances, such as by wearing personal protective equipment. Further, hazardous substances generally need to be stored safely in a separate material store for hazardous substances. Moreover, these liquid cleaning substances are generally transported in containers for hazardous substances which are typically configured for single use. Thus, these containers may also require special treatment, specifically a separate disposal, which in turn requires additional transportation of empty hazardous material containers. Since cleaning chemicals are generally used diluted in the cleaning device, the cleaning chemicals may require containers with large volumes and, thus, may involve a great effort for transportation of the containers.

In order to avoid handling of hazardous liquid substances in cleaning devices, methods and devices are known which make use of solid cleaning chemicals. For example, solid sodium hydroxide may be used as a cleaning chemical. Alternatively, metal silicate cleaners are frequently used as cleaning chemicals. However, cleaning chemicals in solid form, when based on sodium hydroxide, may still require above-mentioned special storage, transport, handling and disposal requirements. Furthermore, cleaning chemicals in solid form, when based on carbonates or silicates rather than on sodium hydroxide as alkaline source, may not provide the same cleaning efficiency as compared to liquid cleaning substances. Further, solid cleaning chemicals, specifically solid chemicals based on carbonates or silicates, are often prone to be deposited on the items to be cleaned and on components of the cleaning device, so residuals of the solid cleaning chemicals may remain on the washware. Additionally, for some solid cleaning chemicals, efficiency for cleaning the items to be cleaned may be lower, since this efficiency is dependent of a pH value of the cleaning chemicals. Moreover, solid cleaning chemicals generally remain hazardous substances which also require special handling and, thus, the risk for the operating staff as well as the requirements for hazardous substances regarding transport and storage remains.

Generally, cleaning devices configured for generating at least some of the cleaning chemicals *in situ* are known from the prior art. For example, DE 10 2013 219 204 A1 discloses a dishwasher which is embodied as a program machine or as a conveyor dishwasher. The dishwasher has at least one wash tank for receiving a treatment liquid and at least one rinsing system for providing a rinse liquid. In order to be able to avoid expensive cleaning chemicals, the dishwasher has a generator for generating treatment liquid with at least one electrolysis device, the generator being connected or connectable to the wash tank and is configured for providing an alkaline solution in the wash tank of the dishwasher by electrolysis.

EP 2 440 109 B1 describes a method for operating a conveyor dishwasher and a conveyor dishwasher for washing washware. The conveyor dishwasher has at least one pre-rinse zone with at least one pre-rinse nozzle for spraying pre-rinse liquid onto the washware, and at least one final rinse zone with at least one final rinse nozzle for spraying final rinse liquid onto the washware. At least some of the final rinse liquid which is sprayed in the final rinse zone is reused as pre-rinse liquid. The conveyor dishwasher further has a metering device which is associated with the final rinse zone being provided for adding a disinfectant to the final rinse liquid in a metered manner. In order to be able to avoid any possible hygiene safety risks in the case of chemical disinfection, the document additionally provides a metering device which is associated with the pre-rinse zone to be provided for adding a disinfectant to the pre-rinse liquid in a metered manner. A sensor device is also provided and is designed to detect the concentration of disinfectant in the pre-rinse liquid which is sprayed in the pre-rinse zone. A control device is also provided and is designed to actuate one of the metering devices as a function of the concentration of disinfectant which is detected by the sensor device in such a way that disinfectant is added in a metered manner.

JPH06-319673 A discloses a dishwasher capable of improving the washing effect against oil stains, reducing the detergent consumption, keeping dishes clean, and suppressing the occurrence of malodor. The dishwasher comprises injecting washing water from an injection nozzle to dishes to be cleaned in the dishwasher. The dishwasher provides an electrolytic tub electrolyzing the water fed from the outside to produce acid water and alkali ion water.

Further, in the field of chemical engineering such as in large chemical plants, various devices and apparatuses are known for manufacturing solid or liquid chemicals such as alkali materials. As an example, for manufacturing acidic or alkaline materials in chemical plants, electrolysis methods are generally known in the field of chemical engineering.

WO 2016/162327 A1 and FR 3 034 689 A1 describe an electrolytic cell for producing at least one chemical substance, in particular selected from dihydrogen, dioxygen, halides, in particular chlorine or bromine, acids, in particular hypochlorous acid HClO, the hypochlorite ion ClO⁻, hydrochloric acid HCl or bases, in particular sodium hydroxide NaOH, by electrolysis of an electrolyte, the electrolyte possibly being water containing at least one salt, one base and/or one acid, in particular selected from the following list: NaCl, KCl, MgCl₂, CaCl₂, CuSO₄, FeSO₄, NaNO₃, KNO₃, Na₂SO₄, K₂SO₄, Cd(CN)₂, Cu(CN)₂, Ag(CN), Zn(CN), CuCl₂, Cu(OH)₂, Ni(OH)₂, NiCl₂, ZnCl₂, ZnSO₄, Zn(OH)₂, Pb(NO₃)₂, CdCl₂, Cd(OH)₂, the electrolytic cell comprising: an anodic side chamber and an anode; a cathodic side chamber and a cathode; at least two ion exchange membranes positioned between the anode and the cathode; and at least one intermediate chamber arranged between the two ion exchange membranes, the intermediate chamber being fed with electrolyte by hydraulic inlet and outlet connectors positioned at the periphery of the cell, in particular being positioned on the same side of the cell or on either side thereof.

Further, WO 2012/129735 A1 and US 2014/0014145 A1 describe an electrolysis device for producing alkaline water from water including an electrolysis vessel, a positive electrode, a negative electrode, a bipolar membrane element, and at least one cation exchangeable membrane within the electrolysis vessel. The bipolar membrane element has a cation exchangeable side and an anion exchangeable side, the cation exchangeable side being closer to the negative electrode than the anion exchangeable side. The at least one cation exchangeable membrane is arranged between the anion exchangeable side of the bipolar membrane element and the positive electrode, so as to define an alkali chamber between the bipolar membrane element and the cation exchangeable membrane. An ionic exchange resin is associated with the vessel, whereby flow of the water though the vessel and the ionic exchange resin produces alkaline water in the alkali chamber. Various options and modifications are possible. A related washing machine such as a dishwasher is also disclosed.

US 4,536,269 A discloses an apparatus for generating an acidified aqueous salt solution and an aqueous base in a multichamber two-compartment electrodialytic water splitter which comprises alternating bipolar and first cation permselective membranes and at least one additional substantially non-porous, water-swollen cation permselective or neutral membrane disposed between a cation face of the bipolar membrane and a face of said first cation membrane thereby defining at least two acid compartments and a base compartment positioned between an anode and a cathode. The method comprises the steps of: (a) introducing a liquid comprising water to the base compartment; (b) introducing a liquid comprising an aqueous soluble salt to a first acid compartment adjacent the base compartment; (c) serially transferring the liquid comprising the aqueous soluble salt from the first acid compartment to a second acid compartment adjacent the first acid compartment; (d) passing direct current through said water splitter thereby adding hydrogen ions to the first and second acid compartments, metal cations from the acid compartments to the base compartment, and adding hydroxide ions to the liquid comprising water in the base compartment; (e) withdrawing a liquid comprising aqueous base from the base compartment; and (f) withdrawing an acidified aqueous soluble salt from the second acid compartment.

US 4,608,141 A describes a method of generating a basified aqueous salt solution and an aqueous acid in a multichamber two-compartment electrodialytic water splitter having unit cells comprised of a bipolar membrane, a first anion permselective membrane and at least one additional substantially non-porous, water-swollen non-cation permselective membrane disposed between an anion face of the bipolar membrane and a face of said first anion membrane thereby forming at least two base compartments and an acid compartment, positioned between an anode and a cathode. The method comprises the steps of: (a) introducing a liquid comprising water to an acid compartment formed by a cation face of a bipolar membrane and a face of said first anion membrane; (b) introducing a liquid comprising an aqueous soluble salt to a first base compartment formed by a face of said first anion membrane and a face of said at least one additional non-cation permselective membrane; (c) serially transferring the liquid comprising the aqueous soluble salt from said first base compartment to the additional base compartment formed by a face of said at least one additional non-cation permselective membrane and an anion face of a bipolar membrane; (d) passing direct current through said water splitter thereby adding hydroxyl ions to the additional base compartment, transferring hydroxyl ions through said at least one non-cation permselective membrane from the additional base compartment to the said first base compartment, anions from the first base compartments to the acid compartment, and adding hydrogen ions to the liquid comprising water in the acid compartment; (e) withdrawing a liquid comprising aqueous acid from the acid compartment; and (f) withdrawing a basified aqueous soluble salt from the additional base compartment.

US 5,135,626 A discloses a method of recovery of base from material comprising base or acid and salt. The method is conducted in an apparatus comprising a cation membrane between two bipolar membranes.

US 5,198,086 A discloses a method and related apparatus useful to electrodialytically convert the salt of a strong base and a weak acid to base with improved purity; or the salt of a weak base and a strong acid to acid with improved purity.

US 2019/0276940 A1 discloses an electro-chemical activation (ECA) system including an anode chamber, a cathode chamber, and a neutralization chamber. The anode chamber includes an anode configured to convert water having an alkaline-metal chloride into an anodic electrolyte that includes hypochlorous acid. The cathode chamber includes a cathode configured to convert water into a cathodic electrolyte. The neutralization chamber includes a neutralization cathode configured to remove protons from the anodic electrolyte after it leaves the anode chamber. The ECA system is configured to recirculate the anodic electrolyte back through the anode chamber and the neutralization chamber at least one more time to produce a concentrated chlorine solution. The ECA system is further configured to recirculate the cathodic electrolyte back through the cathode chamber at least one additional time to produce a concentrated alkaline solution.

N. Linden, G. L. Bandinu, D. A. Vermaas, H. Spanjers, and J. B. van Lier: "Bipolar membrane electrodialysis for energetically competitive ammonium removal and dissolved ammonia production", Journal of Cleaner Production 2020, volume 259, 120788, discloses a process using bipolar membrane electrodialysis to remove ammonium from water and to simultaneously produce concentrated dissolved ammonia, without using chemicals.

AT 399 721 B describes a process for obtaining citric acid. In the process, solutions of organic acids, such as solutions of organic acids produced by fermentation and possibly also containing other constituents such as biomass, oxalic acid, gluconic acid etc., are filtered, such as by overflow filtration, and then treated in several steps consisting of raising and lowering the pH and removing various constituents by means of electrodialysis. By using electrodialysis with bipolar membranes, the required chemicals for raising and lowering the pH are circulated. To improve the purity of citric acid, it is possible to employ selective cation or anion exchange membranes.

US 5,194,130 A describes a method and an apparatus of electodialytically treating an acid such as citric acid to produce a desired salt of the anion of the acid, such as sodium citrate. A cation can be introduced into a solution via a cheap donor salt solution such as NaCl or KCl, without significantly altering or degrading the purity of the final product. The apparatus comprises a three-compartment cell, which comprises at least two adjacent anion selective membranes to accomplish a cation substitution reaction exploiting the differential selectivities of the adjacent anion membranes employed.

X. Tongwen and Y. Weihua describe in "Citric acid production by electrodialysis with bipolar membranes", Chemical Engineering and Processing 2002, volume 41, issue 6, pages 519 to 524, a production of citric acid from sodium citrate by means of electrodialysis, using bipolar membranes prepared from poly(phenylene oxide).

US 2014/014145 A1 describes an electrolysis device for producing alkaline water from water including an electrolysis vessel, a positive electrode, a negative electrode, a bipolar membrane element, and at least one cation exchangeable membrane within the electrolysis vessel. The bipolar membrane element has a cation exchangeable side and an anion exchangeable side, the cation exchangeable side being closer to the negative electrode than the anion exchangeable side. The at least one cation exchangeable membrane is arranged between the anion exchangeable side of the bipolar membrane element and the positive electrode, so as to define an alkali chamber between the bipolar membrane element and the cation exchangeable membrane. An ionic exchange resin is associated with the vessel, whereby flow of the water though the vessel and the ionic exchange resin produces alkaline water in the alkali chamber. Various options and modifications are possible. A related washing machine such as a dishwasher is also disclosed.

US 2009/159448 A1 describes an electrolysis device for producing alkaline water from water, which includes an electrolysis vessel, a pair of high porous electrodes arranged in the electrolysis vessel, and a cell unit arranged between the positive and negative electrodes. The pair of high porous electrodes respectively serve as a positive electrode and a negative electrode. The cell unit includes a bipolar membrane element and at least one cation exchangeable membrane. The bipolar membrane element has a cation exchangeable side and an anion exchangeable side. The cation exchangeable side is closer to the negative electrode than the anion exchangeable side. The cation exchangeable membrane is arranged between the anion exchangeable side of the bipolar membrane element and the positive electrode, so as to define an alkalic chamber between the bipolar membrane element and the cation exchangeable membrane.

Despite the advantages achieved by the known method and devices, several technical challenges remain in the field of cleaning devices, specifically for dishwashing. These challenges generally refer to an efficient and safe supply of potentially hazardous chemical consumables to cleaning devices. Thus, specifically, in the field of commercial cleaning devices, liquid hazardous substances, such as highly alkaline liquid or solid substances, are still widely used as cleaning chemicals, despite of the many disadvantages involved, including transport, handling and discharge of waste water. Specifically, discharging waste water of high alkalinity may pose a technical challenge to waste water treatment downstream from the cleaning device. Further, methods and devices for generating liquid cleaning chemicals *in situ* from precursors also involve significant technical challenges. Specifically, it has to be assured that appropriate precursors and appropriate *in situ* processing methods are provided. Specifically, the precursors should be non-hazardous and desirably biologically degradable substances, specifically after use in the cleaning device. Further, the processing of the materials has to be performed in a manner avoiding hazardous by-products, such as avoiding generating corrosive, poisonous or explosive gases such as chlorine, chlorine compounds, hydrogen or other hazardous gases, solids or liquids. Furthermore, the precursors should generate an optimal mix of cleaning chemicals in the wash solution for optimal cleaning results and efficiency.

Thus, there remains a general need for safe and efficient methods of supplying hazardous chemical consumables to cleaning devices, specifically at large scale as required e.g. in commercial dish washing machines.

### Problem to be solved

It is therefore desirable to a cleaning device and a process for cleaning items which at least largely address the above-mentioned technical challenges of known devices and methods. Specifically, a cleaning device for cleaning items and a process of cleaning items shall be proposed which ensure a high level of hygiene while meeting high safety standards, specifically with respect to the safety of operating staff and environmental standards.

### Summary

This problem is addressed by a cleaning device for cleaning items and a process of cleaning items with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present disclosure, a cleaning device for items is disclosed. The cleaning device comprises:
a. at least one cleaning chamber for receiving the items;
b. at least one fluid application device for applying at least one cleaning fluid to the items received in the cleaning chamber; and
c. at least one electrodialysis device configured for preparing at least one alkaline fluid and at least one acidic fluid from an aqueous medium comprising at least one salt, specifically a solution of at least one salt, by using bipolar membrane electrodialysis.

The cleaning device is configured for feeding at least a part of the alkaline fluid to the fluid application device, specifically for use in the cleaning fluid.

The term "cleaning" as used herein is a broad term and is to be given its ordinary and customary meaning to a person of ordinary skill in the art and is not to be limited to a special or customized meaning. The term specifically may refer, without limitation, to a process in which macroscopic and/or microscopic contaminants and/or impurities are fully or partially removed from one or more items to be cleaned. Additionally, the cleaning may also comprise a full or partial disinfection, i.e. a full or partial removal of microbial contaminations from the items to be cleaned.

Consequently, the term "cleaning device" also is a broad term and is to be given its ordinary and customary meaning to a person of ordinary skill in the art and is not to be limited to a special or customized meaning. The term specifically may refer, without limitation, to an arbitrary device configured for performing at least one cleaning process as defined above. Since the advantages of the present invention specifically may relate to the on-demand supply of large amounts of consumables for use in the cleaning fluid of commercial dishwashers, the invention specifically will be described in the context of commercial dishwashers. Other cleaning devices, however, may also be used. Further details and optional embodiments of the cleaning device will be given below.

Further, the term "item" as used in the context of the cleaning, also referred to as "item to be cleaned" or "wash ware", also is a broad term and is to be given its ordinary and customary meaning to a person of ordinary skill in the art and is not to be limited to a special or customized meaning. The term specifically may refer, without limitation, to a basically arbitrary object which is cleanable by the cleaning device. Therein, a single item may be cleaned, or a plurality of items may be cleaned simultaneously or sequentially, as will be described in further detail below.

Specifically, and without limiting further options, the items to be cleaned may comprise one or more items which directly or indirectly, are configured or intended for preparing, storing or serving of food or beverages, such as tableware, tablets, pots, pans, glasses or the like. Further exemplary embodiments will be given below. Thus, as an example, the cleaning device specifically may be embodied as a dishwasher, more specifically a dishwasher configured for commercial use, such as a dishwasher, having one or more tanks for storing and/or preparing the at least one cleaning fluid. Commercial dishwashers or dishwashers for industrial use typically, are configured for use in catering facilities adapted for a large number of guests, such as cafeterias or restaurants. Dishwashers set up for commercial use or industrial use in many cases have two or more circuits for cleaning fluid, such as at least one washing circuit and at least one rinsing circuit for the separate preparation of rinsing fluid, for example with a boiler or flow heater. As will be outlined in further detail below, the cleaning device may comprise a single cleaning chamber or a plurality of cleaning chambers. The cleaning device, specifically the dishwasher, may, as an example, be configured as a program cleaning device or program dishwasher with stationary washing methods, or as a conveyor cleaning device or a conveyor dishwasher or tunnel dishwasher, in which the items to be cleaned are conveyed by means of a conveyor device through one or multiple cleaning chambers. For possible embodiments of cleaning devices, specifically dishwashers, reference may be made e.g. to WO 2005/070276 A1 or WO 2015/091750 A1. The cleaning devices disclosed therein may also be used in the context of the present invention, with the modifications disclosed in further detail herein. It shall be noted, however, that other designs are also possible.

Additionally or alternatively, other items may be cleaned in the cleaning device. Thus, as an example, the cleaning device may be configured for cleaning utensils and/or devices for medical purposes and/or medical care, such as one or more containers for receiving human excretions, e.g. human excretions of at least 100 mL, e.g. urine bottles, bedpans, or the like. Again, reference may be made e.g. to WO 2015/091750 A1, and the cleaning devices disclosed therein. Further, additionally or alternatively, the items to be cleaned may comprise personal protective equipment (PPE), such as respirators, breathing masks, protective masks or other parts of personal protective equipment. For exemplary embodiments, reference may be made, e.g., to WO 2019/185809 A1. It shall be noted, however, that other cleaning devices and other items to be cleaned may also be possible. Exemplary embodiments will be given below.

The term "cleaning chamber" as used herein is a broad term and is to be given its ordinary and customary meaning to a person of ordinary skill in the art and is not to be limited to a special or customized meaning. The term specifically may refer, without limitation, to a chamber which is fully or partially closed and which is suited and/or configured for the cleaning process to be performed therein. The cleaning chamber specifically may comprise at least one housing, such as a housing comprising at least one of metal, plastic materials or materials, the housing fully or partially surrounding an interior of the cleaning chamber, in which the cleaning process may fully or partially be performed. The cleaning device may have a single cleaning chamber or may comprise a plurality of cleaning chambers, which, as an example, may be arranged in a sequential manner. The cleaning chamber, as an example, may comprise at least one opening for loading and unloading of items to be cleaned.

For example, the opening may comprise a door or a lid arranged at a front side of the cleaning chamber and/or at an upper side of the cleaning chamber. Alternatively, the opening may comprise a hood for closing the cleaning chamber, for example for hood-type cleaning devices, specifically for hood-type dishwashers. Further, the cleaning chamber may be fully or partially embodied as a tunnel cleaning chamber, specifically for conveyor cleaning devices, conveyor dishwashers or tunnel dishwashers. The tunnel cleaning chamber may specifically comprise at least one inlet opening and at least one outlet opening. However, other options are also feasible.

As outlined above, the cleaning device comprises the at least one fluid application device for applying the at least one cleaning fluid to the items received in the cleaning chamber. The term "cleaning fluid", also referred to as a "cleaning liquid", as used herein is a broad term and is to be given its ordinary and customary meaning to a person of ordinary skill in the art and is not to be limited to a special or customized meaning. The term specifically may refer, without limitation, to an arbitrary fluid, in particular a liquid, having a cleaning effect when impinging on the items to be cleaned. Specifically, the cleaning fluid may comprise an aqueous liquid, such as water and/or water comprising one or more additives, for example one or more cleaning concentrates and/or detergents and/or rinse aids and/or disinfectants. Further, the cleaning fluid may comprise one or more of the alkaline fluid and the acidic fluid, as will be outlined in further detail below. However, it may also be possible to feed at least a part of the aqueous medium comprising the at least one salt to the cleaning fluid.

The cleaning device may be configured for using a single cleaning fluid or a combination of different cleaning fluids. In case different cleaning fluids are used by the cleaning device, the cleaning fluids may be applied simultaneously or sequentially to the items to be cleaned. For example, the different cleaning fluids may be applied sequentially to the items remaining stationary within the cleaning device, specifically within the cleaning chamber. Alternatively, the different cleaning fluids may be applied to the items in different locations of the cleaning device, specifically in different cleaning chambers. For example, at least one first cleaning fluid may be applied to the items to be cleaned in a first cleaning chamber, followed by an application of at least one second cleaning fluid in a second cleaning chamber. Further cleaning fluids, such as a third cleaning fluid, a fourth cleaning fluid or even more cleaning fluids, may be applied in further cleaning chambers of the cleaning device. As an example, the cleaning fluid may comprise at least one first cleaning fluid for a purpose of washing and at least one second cleaning fluid for a purpose of rinsing. Examples will be given in further detail below.

The term "applying" as used in the context of "applying the cleaning fluid", also referred to as "application of the cleaning fluid", is a broad term and is to be given its ordinary and customary meaning to a person of ordinary skill in the art and is not to be limited to a special or customized meaning. The term specifically may refer, without limitation, to an arbitrary action of contacting the cleaning fluid to the items to be cleaned, in particular to a surface of the items to be cleaned. The application of the cleaning fluid to the items may comprise directly applying the cleaning fluid, such as by spraying, sprinkling, dripping, emitting a stream or any combination thereof and/or any other direct application of the cleaning fluid. Specifically, the cleaning fluid may be applied directly to the items to be cleaned such that the cleaning fluid contacts the items with a non-zero momentum. Alternatively or additionally, the application of the cleaning fluid may comprise indirectly applying the cleaning fluid to the items. For example, at least one part of the cleaning chamber may be fully or partially filled with the cleaning fluid such that the items received in this part of the cleaning chamber may be at least partially brought in contact with the cleaning fluid. However, other options for applying the cleaning fluid to the items or any combinations thereof are also feasible.

Applying the cleaning fluid to the items to be cleaned may specifically comprise applying such as by spraying or sprinkling, one or more of the alkaline fluid and/or the acidic fluid in a concentrated cleaning fluid, specifically not being diluted by one or more further fluids, such as water. The application of the concentrated cleaning fluid, specifically comprising the undiluted alkaline fluid and/or acidic fluid, may be followed by a time interval having the cleaning fluid applied to items to be cleaned and rinsing the cleaning fluid off the items to be cleaned. However, alternatively or additionally, applying the cleaning fluid may comprise applying a diluted cleaning fluid, specifically comprising one or more of the alkaline fluid and the acidic fluid diluted with one or more further fluids, to the items to be cleaned.

The application of the cleaning fluid may be performed in a single application mode in which the cleaning fluid may be applied once to the items to be cleaned. Alternatively or additionally, the application of the cleaning fluid may comprise a circulation application mode in which the cleaning fluid may be applied multiple times to the items. Such circulating modes and devices for circulating the cleaning fluid are known, for example, from conventional dishwashers and other washing devices. The circulation application mode may involve using a circulation pump configured for collecting cleaning fluid that was applied to the items and for applying this cleaning fluid once more to the items to be cleaned. A combination of the single application mode and the circulation application mode, specifically variable in order and repetition, may also be feasible. For example, in a first washing step, the cleaning fluid may be applied to the items using the circulation application mode, whereas in a second rinsing step, the cleaning fluid, specifically comprising a rinsing fluid, may be applied to the items using the single application mode.

The term "fluid application device" as used herein is a broad term and is to be given its ordinary and customary meaning to a person of ordinary skill in the art and is not to be limited to a special or customized meaning. The term specifically may refer, without limitation, to a device configured for applying the cleaning fluid to the items received in the cleaning chamber. The fluid application device may specifically comprise at least one nozzle system having at least one nozzle. Further, the fluid application device may comprise at least one pump and/or at least one piping system for providing the cleaning fluid to the nozzle system. As an example, the nozzle system and the piping system may be configured for applying the cleaning fluid from at least one fluid container to the items by using the at least one pump. Alternatively or additionally, the cleaning fluid may be directly provided to the nozzle system by at least one supply line, specifically without using a pump.

The cleaning device and the cleaning chamber may be configured for stationary cleaning, wherein the items to be cleaned remain stationary in the cleaning chamber and, as an example, are treated by subsequent cleaning steps of a cleaning program. Alternatively, as outlined above, the cleaning device may be configured as a conveying cleaning device, wherein the items to be cleaned are transported through the cleaning chamber. Thus, the cleaning chamber may comprise one or more cleaning compartments, wherein, for example, the items may remain stationary or may traverse the cleaning compartments sequentially.

As an example, the cleaning device may comprise one cleaning compartment, wherein the fluid application device may be configured for performing a process or program of cleaning items which will be described in further detail below, wherein the process may comprise a sequence of cleaning steps comprising applying one or more different cleaning fluids sequentially to the items received in the cleaning chamber, specifically in the one cleaning compartment. Alternatively, the items to be cleaned may be transported sequentially through one or more cleaning compartments of the cleaning chamber, wherein different cleaning fluids may be applied to the items using the fluid application device in the different cleaning compartments. For example, the cleaning compartments of the cleaning chamber may be selected from the group consisting of: a prewashing compartment; a washing compartment, wherein the washing compartment may be divided into at least one alkaline washing compartment, wherein in the alkaline washing compartment, the at least one alkaline fluid may be comprised by the cleaning fluid, and into at least one acidic washing compartment, wherein in the acidic washing compartment, the at least one acidic fluid may be comprised by the cleaning fluid; a rinsing compartment, wherein the rinsing compartment may be divided into one pump rinsing compartment and a subsequent fresh water rinsing compartment.

Further, at least one drying step may be provided, wherein the drying step, for example, may be performed in the cleaning chamber subsequent to the application of the cleaning fluid when the items are received stationary in one cleaning chamber or, as another example, may be performed in a drying compartment downstream the cleaning compartments of the cleaning chamber.

As outlined above, the cleaning device further comprises the at least one electrodialysis device configured for preparing the at least one alkaline fluid and the at least one acidic fluid from the aqueous medium comprising the at least one salt, specifically the solution of the at least one salt, by using bipolar membrane electrodialysis.

The term "preparing" as used herein is a broad term and is to be given its ordinary and customary meaning to a person of ordinary skill in the art and is not to be limited to a special or customized meaning. The term specifically may refer, without limitation, to an action of producing, synthesizing, converting or transforming at least one reactant into at least one product. Specifically, the preparing may involve at least one conversion reaction, specifically at least one of an electrochemical reaction, a redox reaction, a water dissociation reaction and an acid-base reaction, converting the at least one reactant to the at least one product. The one or more products of the preparing may comprise at least one of the alkaline fluid and the acidic fluid. The reactants of the preparing may comprise at least one of the aqueous medium comprising the at least one salt, specifically the solution of the at least one salt, more specifically one or more of a cation and an anion of the at least salt, and water, specifically ionized water comprising hydroxide ions and hydrogen cations.

The term "alkaline fluid" as used herein is a broad term and is to be given its ordinary and customary meaning to a person of ordinary skill in the art and is not to be limited to a special or customized meaning. The term specifically may refer, without limitation, to a fluid or a combination of fluids removed from an alkaline chamber of the electrodialysis device, as will be outlined in further detail below. The alkaline fluid may comprise at least one fluidic substance having a pH value greater than 7, such as pH>8, pH>10 or even pH>12. The pH-value of the fluid may be determined by common methods and devices, such by using colorimetric tests and/or a pH-meter and/or a conductivity sensor with a conductivity-pH calibration. These methods and devices are generally known to the skilled person. The alkaline fluid may be at least one of the cleaning fluids to be used in the cleaning device or, alternatively, may be added to at least one of the cleaning fluids. The alkaline fluid may specifically be a fluidic substance having a cleaning effect on the items to be cleaned. Specifically, the alkaline fluid may be or may comprise an aqueous medium, such as water, comprising sodium hydroxide. The alkaline fluid may be provided in the form of an aqueous stream comprising at least one alkali metal hydroxide MOH, specifically an aqueous stream comprising MOH produced in a process for simultaneously producing an aqueous stream comprising MOH and an aqueous stream comprising HA, as will be outlined in further detail below.

The term "acidic fluid" as used herein is a broad term and is to be given its ordinary and customary meaning to a person of ordinary skill in the art and is not to be limited to a special or customized meaning. The term specifically may refer, without limitation, to a fluid or a combination of fluids removed from an acidic chamber of the electrodialysis device, as will be outlined in further detail below. The acidic fluid may have a pH value of less than 7, e.g. pH<5 or pH<3, or may comprise at least one fluidic substance or component having a pH value of less than 7, e.g. pH<5 or pH<3. The pH value of the acidic fluid, over the duration of the process, may be constant or may change, e.g. decrease. Thus, the acidic fluid may be formed from a solution of at least one salt, wherein the solution may have a first pH value, wherein the acidic fluid may have at least one second pH value, wherein the second pH value is lower than the first pH value. Thus, as an example, the solution of the at least one salt may have a pH value of 7 or higher, and the acidic fluid may have a pH value of less than 7. In case a recirculation process is performed, as will be described in further detail below, the pH value may decrease, e.g. from the first value to the second value. Notwithstanding the option of feeding that the salt solution or a part thereof to the fluid application device, the acidic fluid having a pH value of less than 7 may optionally be fed to the fluid application device.

However, besides at least one acid, the acidic fluid may comprise one or more further components. As outlined above, the pH-value of the fluidic substance may be determined by common methods and devices, such as by using colorimetric test and/or a pH-meter and/or a conductivity sensor with a conductivity-pH calibration. The acidic fluid may specifically be or may comprise an aqueous medium comprising at least one monobasic carboxylic acid and/or at least one polybasic carboxylic acid, specifically a dicarboxylic acid or a tricarboxylic acid or a mixture of a dicarboxylic acid and a tricarboxylic acid, more specifically citric acid. Specifically, polybasic carboxylic acids are known to be complex-forming agents. However, other acids are also feasible, such as one or more of methylglycinediacetic acid, also referred to as "acid of MGDA", L-Glutamic acid N,N-diacetic acid, also referred to as "acid of GLDA", iminodisuccinic acid, also referred to as "acid of IDS", lactic acid, oxalic acid, gluconic acid, sulphuric acid, polyacrylic acid, bicarboxylic acid and phosphoric acid. The acidic fluid may comprise, besides at least one of the above-mentioned acids, at least one further component, specifically the at least one salt, more specifically at least one of the cations and the anions of the at least one salt. In the beginning of the bipolar membrane electrodialysis, an amount of the salt comprised by the acidic fluid may be higher than at a later stage of the process, and/or the amount of salt in the acidic fluid may decrease over the duration of the process. The amount of acid in the acidic fluid may increase with continuously performing the bipolar membrane electrodialysis resulting in a decreasing pH value of the acidic fluid.

The acidic fluid may be provided in the form of an aqueous stream comprising at least one Bronsted acid HA, specifically an aqueous stream comprising HA produced in a process for simultaneously producing an aqueous stream comprising MOH and an aqueous stream comprising HA, as will be outlined in further detail below.

The acidic fluid may be used in the cleaning device for various purposes. Thus, the acidic fluid may be used as the cleaning fluid and/or as one of the cleaning fluids in case more than one cleaning fluid are used in the device. Alternatively, the acidic fluid may be used as a component of the at least one cleaning fluid. Thus, the acidic fluid may be added to at least one of the cleaning fluids. Specifically, the acidic fluid may be added to at least one of the cleaning fluids for the purpose of at least one of washing, rinsing, disinfecting and/or decalcifying. For example, both the acidic fluid and the alkaline fluid may be added to the cleaning fluid for the purpose of washing. Specifically, by adding both the acidic fluid and the alkaline fluid to the cleaning fluid, it may be possible to use neutralized salts in the cleaning device for using the salt's calcium binding strength at high pH values of at least 7, more specifically of at least 10, which may specifically enhance cleaning power of the cleaning fluid.

The term "aqueous medium" as used herein is a broad term and is to be given its ordinary and customary meaning to a person of ordinary skill in the art and is not to be limited to a special or customized meaning. The term specifically may refer, without limitation, to a fluidic substance which at least partially comprises water. Specifically, the aqueous medium may refer to a fluid comprising a plurality of substances, wherein at least one of these substances is water. Alternatively, the aqueous medium may also refer to a single fluidic substance, wherein the single fluidic substance is water. The aqueous medium may be configured for incorporating one or more further substances, specifically for incorporating the at least one salt. Consequently, the term "aqueous medium comprising the at least one salt" may refer to an aqueous medium having incorporated the at least one salt. Specifically, the aqueous medium comprising the at least one salt may be or may comprise a solution of the at least one salt.

As used herein, the term "salt" may refer to a compound comprising at least one cation and at least one anion. The at least one salt may be solvable in the at least one aqueous medium, specifically in water. The salt may be dissociated upon solving in the aqueous medium such that the aqueous medium, specifically the solution of the at least one salt, may comprise the at least one cation and the at least one anion of the salt separated from each other. The at least one salt may comprise an alkali metal salt MA of a Bronsted acid HA. For example, the salt may be or may comprise a sodium salt of the polybasic carboxylic acid, specifically monosodium citrate or disodium citrate or trisodium citrate or a mixture of two or more thereof, preferably trisodium citrate. For example, the aqueous medium may comprise the salt of the polybasic carboxylic acid and, thus, the aqueous medium may comprise the cation of the salt of the polybasic carboxylic acid, specifically a sodium cation, and the anion of the salt of the polybasic carboxylic acid, specifically the polybasic carboxylic acid. However, other salts may also be feasible, such as one or more of methylglycinediacetic acid trisodium salt (MGDA), tetrasodium N,N-bis(carboxymethyl)-L-glutamate (GLDA), tetrasodium iminodisuccinate (IDS), sodium lactate, sodium oxalate, sodium gluconate, sodium sulphate, sodium carbonate, sodium polyacrylate and sodium tripolyphosphate. The aqueous medium comprising the at least one salt may comprise a mixture of two or more of the above-mentioned salts. For example, the aqueous medium comprising the at least one salt may comprise a mixture of MGDA and sodium citrate, specifically in a ration of three parts sodium citrate per one part MGDA. As another example, the aqueous medium comprising the at least one salt may comprise a mixture of GLDA and sodium citrate, specifically in a ration of three parts sodium citrate per one part GLDA. As another example, the aqueous medium comprising the at least one salt may comprise a mixture of IDS and sodium citrate, specifically in a ration of three parts sodium citrate per one part IDS. The aqueous medium comprising the at least one salt, specifically the solution of the at least one salt, may comprise a ratio of the at least one salt and the aqueous medium in the range of from 10 to 50 weight-%, preferably in the range of from 15 to 35 weight-%, more preferably in the range of from 20 to 35 weight-%, more preferably in the range of from 25 to 35 weight-%, more preferably in the range of from 30 to 35 weight-%, based on the total weight of the aqueous medium comprising the at least one salt. By way of example, a ratio of 2, 10, 20 and 35 weight-% corresponds to a concentration of 20, 100, 200 and 540 g/L, respectively.

The term "bipolar membrane electrodialysis" as used herein is a broad term and is to be given its ordinary and customary meaning to a person of ordinary skill in the art and is not to be limited to a special or customized meaning. The term specifically may refer, without limitation, to a process of separating components of at least one electrolytic liquid, specifically of an aqueous medium and/or an aqueous solution of at least one salt, specifically for separating cations and anions of the at least one salt comprised by the aqueous medium, by using a combination of an electrical field and at least one membrane, the at least one membrane comprising at least one bipolar membrane (BPM) and optionally also at least one further membrane selected from the group consisting of a cation exchange membrane (CEM) and an anion exchange membrane (AEM). The membranes, specifically, may separate different compartments of an electrodialysis device, also referred to as a bipolar membrane electrodialysis device, and the electric field may be applied across the compartments and may drive both the separation of the ions and the permeation and/or transport of the ions at the respective membranes and/or through the respective membranes. The separation and transport of the ions induced by the applied electric field may yield an accumulation of cations in specific compartments of the electrodialysis device and anions in compartments being different from the compartment of accumulated cations. Specifically, cations may be transported through cation exchange membranes, whereas anions may be transported through anion exchange membranes, as will be outlined in further detail below. The separation of the cations and the anions of the at least one salt may specifically be driven by the electric field. Thus, the separation of ions may be driven electrically and specifically may be performed without applying any external fluidic pressure to the aqueous medium, specifically to the solution of the salt, or any other fluids, as opposed e.g. to other separation techniques such as reverse osmosis. Consequently, the electrodialysis device may constructively be designed for low-pressure applications, without the necessity of providing for a pump for the separation process. Further the separation of ions may be driven electrically, wherein an electric process may easily be controlled in accordance with the actual need of supply materials such as the alkaline fluid and/or the acidic fluid, so the separation process by the electrodialysis device may e.g. be implemented into an electric control scheme of the cleaning device, as will be outlined in further detail below.

Further, the bipolar membrane electrodialysis may comprise separating the cations and the anions of the at least one salt into at least two fluids, specifically into the alkaline fluid and into the acidic fluid. The at least two fluids may be comprised in the at least two compartments of the electrodialysis device and, thus, may be separated by the at least one membrane, specifically by the at least one at least one bipolar membrane (BPM) and optionally also at least one further membrane selected from the group consisting of a cation exchange membrane (CEM) and an anion exchange membrane (AEM). Additionally, the separations of ions may be independent of a concentration of cations and anions present in the electrolytic liquid. Thus, the separation of ions may specifically not be driven by an ionic concentration gradient between the at least two fluids.

As a consequence of the separation of ions, the bipolar membrane electrodialysis may further involve a conversion of the aqueous medium comprising the at least one salt, specifically of the solution of the at least one salt, into the at least one acidic fluid and a conversion of an additional aqueous medium, such as water, into the at least one alkaline fluid.

Specifically, the bipolar membrane electrodialysis may comprise at least two conversion reactions, wherein the two conversion reactions may be performed separate from each other in two different chambers of the electrodialysis device, the chambers being separated by at least one of the membranes as mentioned above. The electrodialysis device will be described in further detail below. The bipolar membrane electrodialysis may comprise at least one first conversion reaction to form the at least one alkaline fluid, wherein the first conversion reaction may comprise an interaction of the cation of the at least one salt with at least one hydroxide ion, and at least one second conversion reaction to form the at least one acidic fluid, wherein the second conversion reaction may comprise an interaction of the anion of the at least one salt with at least one hydrogen cation. Thus, as an example, the following conversion reactions may be driven by the electric field:

M⁺ + OH⁻ ⇆ MOH

A⁻ + H⁺ ⇆ HA

Therein, M⁺ denotes the cation of the salt MA, OH⁻ denotes the hydroxide ion and MOH denotes the alkali metal hydroxide. Further, A⁻ denotes the anion of the salt MA, H⁺ denotes the hydrogen cation and HA denotes the acid HA. Although the cations and the anions in above-identified equations are denoted as being singly charged, it shall be noted, however, that the ions may also be multiply charged ions.

For example, the first conversion reaction may comprise an interaction of the cation of the sodium salt of the polybasic carboxylic acid with at least one hydroxide ion to form sodium hydroxide and the second conversion reaction may comprise an interaction of the anion of the sodium salt of the polybasic carboxylic acid with at least one hydrogen cation to form the polybasic carboxylic acid. The at least two conversion reactions may specifically be separated from each other by a bipolar membrane.

The term "bipolar membrane" as used herein is a broad term and is to be given its ordinary and customary meaning to a person of ordinary skill in the art and is not to be limited to a special or customized meaning. The term specifically may refer, without limitation, to a membrane layer setup, specifically a laminated layer setup, comprising at least one membrane layer that is only permeable for anions (anion exchange layer or anion exchange membrane) and at least one further membrane layer permeable only for cations (cation exchange layer or cation exchange membrane). The layers, as an example, may comprise polymer membrane layers, as will be outlined in further detail below. The layer permeable for anions only and the layer permeable for cations only may be in direct contact or may be linked via at least one intermediate layer. During bipolar membrane electrodialysis, an electrically driven separation of cations and anions typically takes place at the bipolar junction of the bipolar membrane, where the anion and the cation permeable layers are in direct contact, or at the interfaces between the cation exchange layer and the intermediate layer and between the anion exchange layer and the intermediate layer, respectively. Specifically, during bipolar membrane electrodialysis, the applied electric field may drive dissociation of water at the bipolar junction of the bipolar membranes. The water may dissociate in protons (H⁺) and in hydroxides (OH⁻) at the bipolar junction of the bipolar membrane. Thus, the cations permeating through the cation permeable layer of the bipolar membrane may comprise protons (H⁺), wherein the anions permeating through the anion permeable layer of the bipolar membrane may comprise hydroxide ions (OH⁻). This water dissociation process at the bipolar membrane may specifically be referred to as "bipolar ion exchange".

Specifically, the bipolar membrane may comprise at least one first layer allowing ions of one kind of charge to migrate through the first layer, and at least one second layer allowing ions of the other kind of charge to migrate through the second layer. Thus, the bipolar membrane may allow migration of ions of both kind of charges, wherein ions of one kind may migrate through the first layer in a first direction and ions of the other kind may migrate through the second layer in a second direction opposing the first direction. For example, the at least one first layer may comprise a cation exchange membrane, wherein the cation exchange membrane may allow migration of cations, specifically protons (H⁺), through the cation exchange membrane and may prevent migration of anions, and the at least one second layer may comprise an anion exchange membrane, wherein the anion exchange membrane may allow migration of anions, specifically hydroxide ions (OH⁻), through the anion exchange membrane and may prevent migration of cations. The at least one first layer, specifically the cation exchange membrane, may be arranged on a cathode side of the bipolar membrane and the at least one second layer, specifically the anion exchange membrane, may be arranged an anode side of the bipolar membrane.

The bipolar membrane may comprise, preferably may be a bilayered membrane comprising an anion exchange membrane and a cation exchange membrane. The anion exchange membrane may preferably comprise, more preferably may be an anion exchange membrane as defined in context of the present invention. The cation exchange membrane may preferably comprise, more preferably may be a cation exchange membrane as defined in the context of the present invention. Exemplary materials for the cation exchange membrane and the anion exchange membrane will be outlined in further detail below.

The term "electrodialysis device", also referred to as a "bipolar membrane electrodialysis device", as used herein is a broad term and is to be given its ordinary and customary meaning to a person of ordinary skill in the art and is not to be limited to a special or customized meaning. The term specifically may refer, without limitation, to a device configured for performing the bipolar membrane electrodialysis. Thus, the electrodialysis device may comprise at least two electrodes for applying the electric field and at least one bipolar membrane disposed in between the electrodes, as well as, optionally, at least one further membrane selected from the group consisting of a cation exchange membrane and an anion exchange membrane. The membranes, specifically, may separate different compartments of the bipolar membrane electrodialysis device, and the electric field may be applicable, by the electrodes, across the compartments. The bipolar membrane electrodialysis device may specifically comprise a fluidic stack arranged in between a cathode compartment and an anode compartment. The bipolar membrane electrodialysis may be performed in the fluidic stack of the electrodialysis device. However, the electrodialysis device may be described in further detail below. Thus, possible embodiments of the electrodialysis device will be described in further detail below.

As outlined above, the cleaning device is configured for feeding at least a part of the alkaline fluid to the fluid application device, specifically for use in the cleaning fluid. The term "feeding" as used in the context of "feeding the alkaline fluid" or "feeding the acidic fluid", is a broad term and is to be given its ordinary and customary meaning to a person of ordinary skill in the art and is not to be limited to a special or customized meaning. The term specifically may refer, without limitation, to providing the alkaline fluid and/or the acidic fluid to the fluid application device. The feeding may comprise using at least one pump, specifically for a pressurized feeding of the alkaline fluid and/or the acidic fluid. Thus, the term "feeding" may comprise applying pressure to the alkaline fluid and/or the acidic fluid for transporting the alkaline fluid or the acidic fluid to the fluid application device. A pressure-less transportation, such as a transport effected by gravity, is also feasible. The providing of the alkaline fluid, as well as, optionally, also the providing of the acidic fluid as mentioned in further detail below, may be controlled by at least one controller of the cleaning device, so that the alkaline fluid or the acidic fluid, respectively, may be provided in accordance with the actual needs of a cleaning program run by the controller. The alkaline fluid and/or the acidic fluid may be transported from the at least one electrodialysis device to the fluid application device, specifically independently from each other. For example, feeding the alkaline fluid to the fluid application device may comprise directly transporting the alkaline fluid from the electrodialysis device to the fluid application device. Further, feeding the acidic fluid to the fluid application device may comprise indirectly transporting the alkaline fluid from the electrodialysis device to the fluid application device. For example, the acidic fluid may be stored temporarily in at least one container, specifically in at least one buffer container and/or at least one acid container. In this context, the term "feeding at least a part" is a broad term and is to be given its ordinary and customary meaning to a person of ordinary skill in the art and is not to be limited to a special or customized meaning. The term specifically may refer, without limitation, to a situation in which one part of a fluid, such as the alkaline fluid and/or the acidic fluid, is fed to a first component of the cleaning device, for example to the fluid application device, and the other part of the fluid is fed to a second component of the cleaning device, for example to one or more storage tanks for storing the fluid. However, the term may also refer to a situation in which all of the fluid, specifically all of the alkaline fluid and/or the acidic fluid prepared in the electrodialysis device, is fed to the respective component of the cleaning device.

The cleaning device may be configured for feeding at least a part of the acidic fluid to the fluid application device. The feeding of the acidic fluid may be at least partially separate from the feeding of the alkaline fluid. The separate feeding of the alkaline fluid and of the acidic fluid may comprise having at least two separate feeding lines, specifically at least one feeding line for the alkaline fluid and at least one feeding line for the acidic fluid, for guiding the respective fluid to the fluid application device. The alkaline fluid and the acidic fluid may be fed separately to at least one common washing tank of the fluid application or, alternatively or additionally, to different washing tanks of the fluid application device. As an example, the alkaline fluid and the acidic fluid may be fed to the common washing tank such that in the mixed cleaning fluid, a pH value of at least 10 and a free calcium concentration of below 1E-5 mol/liters is obtained. These conditions in the cleaning fluid may specifically enhance cleaning efficiency of the cleaning fluid. Alternatively or additionally, a part of the acidic fluid and a part of the alkaline fluid may be combined after removal from the electrodialysis device and may be fed in one common feeding line to the fluid application device.

The cleaning device may be configured for using the acidic fluid for at least one purpose selected from the group consisting of:
- a washing process, wherein, in the washing process, both a part of the alkaline fluid and a part of the acidic fluid are applied to the items to be cleaned;
- an alkaline exposure process, wherein, in the alkaline exposure process, at least a part of the alkaline fluid is directly applied to the items to be cleaned, specifically sprayed onto the items to be cleaned, specifically in an undiluted fashion;
- an acidic exposure process, wherein, in the acidic exposure process, at least a part of the acidic fluid is directly applied to the items to be cleaned, specifically sprayed onto the items to be cleaned, specifically in an undiluted fashion;
- a washing process, wherein, in the washing process, both a part of the alkaline fluid and a part of the acidic fluid are fed to at least one common washing tank of the fluid application device;
- a washing process, wherein, in the washing process, a part of the alkaline fluid and a part of the acidic fluid are fed to different washing tanks of the fluid application device;
- a rinsing process, wherein, in the rinsing process, a part of the acidic fluid is applied to the items to be cleaned;
- a decalcifying process, wherein, in the decalcifying process, a part of the acidic fluid is applied to at least one of the fluid application device and the items to be cleaned, for decalcifying purposes; and
- a decalcifying process, wherein, in the decalcifying process, a part of the acidic fluid is applied to a feed stream of a reverse osmosis device comprised by the cleaning device.

The washing process, specifically when applying both a part of the alkaline fluid and a part of the acidic fluid to, as an example, the items to be cleaned or to the washing tank, may comprise feeding the alkaline fluid and the acidic fluid to the fluid application device such that one of the alkaline fluid and the acidic fluid may be higher in its concentration in the cleaning fluid. For example, a part of the alkaline fluid and a part of the acidic fluid may be fed to the fluid application device such that the alkaline fluid may be higher in its concentration in the cleaning fluid. As another example, a part of the alkaline fluid and a part of the acidic fluid may be fed to the fluid application device such that the acidic fluid may be higher in its concentration in the cleaning fluid. Further, in the washing process, applying a part of the alkaline fluid and/or a part of the acidic fluid to the items to be cleaning may comprise applying a part of the alkaline fluid or a part of the acidic fluid directly to the items to be cleaned or, alternatively, applying a diluted alkaline fluid and/or a diluted acidic fluid to the items to be cleaned.

Further, the at least one cleaning fluid may comprise at least one washing fluid. A washing fluid typically is a cleaning fluid used for a washing process, i.e. an initial cleaning process which is performed at least once, for the purpose of removing coarse contaminations. The fluid application device may comprise at least one washing device for applying the washing fluid to the items to be cleaned. The cleaning device may be configured for feeding the alkaline fluid to the washing device, specifically to at least one washing tank of the washing device. Thus, the at least one washing fluid may at least partially comprise the at least one alkaline fluid. The cleaning device may further be configured for feeding the acidic fluid to the washing device, specifically to the at least one washing tank of the washing device. However, the feeding of the acidic fluid may be separate from the feeding of the alkaline fluid.

The at least one cleaning fluid may further comprise at least one rinsing fluid. A rinsing fluid typically is a cleaning fluid used for a rinsing process, i.e. a cleaning process for removing fine contaminations and/or cleaning fluid from one or more previous cleaning steps, which is performed at least once after a washing process, such as a final rinsing process. The fluid application device may comprise at least one rinsing device for applying the rinsing fluid to the items to be cleaned. The rinsing device may fully or partially be integrated into the washing device, or the rinsing device may be separate from the washing device. The cleaning device may be configured for feeding at least a part of the acidic fluid to the rinsing device. The cleaning device may comprise at least one blending device for mixing the acidic fluid with at least one further component of the rinsing fluid, specifically at least one further component selected from the group consisting of: water, specifically freshwater, more specifically warm freshwater; a rinsing concentrate, specifically a rinsing concentrate comprising at least one surfactant, more specifically at least one non-ionic surfactant. Other options for mixing the rinsing fluid, specifically the at least one further component of the rinsing fluid, with a part of the acidic fluid may also be feasible, such as a feeding of a part of the acidic fluid in one or more of a boiler of the rinsing device and a storage container of the rinsing device storing the rinsing fluid or the further component of the rinsing fluid.

The cleaning device may comprise at least one brine container. The brine container may generally comprise a container connected to a fluidic system of the cleaning device and configured for storing an amount of a brine. The brine container may be configured for receiving a liquid supply of the aqueous medium comprising the at least one salt, specifically the solution of the at least one salt. Alternatively, the brine container may be configured for receiving a liquid supply of the aqueous medium and the at least one salt may be added manually to the brine container or, alternatively, vice versa. The brine container may be fluidically connected to the electrodialysis device, specifically to at least one acidic chamber of a fluidic stack of the electrodialysis device or to at least one brine chamber of the fluidic stack of the electrodialysis device. The brine container or a fluid system being connected to the brine container may comprise at least one pump for providing the aqueous medium comprising the at least one salt to the electrodialysis device, specifically directly to the acidic chamber and/or the brine chamber of the fluidic stack or indirectly via the at least one buffer container. Further, the brine container may comprise at least one sensor device for determining at least one property of the aqueous medium comprising the at least one salt, specifically the solution of the at least one salt. The at least one sensor device may be selected from the group consisting of: a conductivity sensor; a pH sensor; a level sensor; a sensor for measuring a fluid density, specifically a float; a spectral camera, specifically a IR spectral camera. Additionally, the brine container may be fluidically connected to the cleaning device, specifically to the fluid application device, such as directly via at least one feeding line and/or indirectly via a further container.

The cleaning device may comprise at least one recirculation loop, specifically at least one acidic recirculation loop, more specifically at least one closed recirculation loop or closed acidic recirculation loop, respectively. A recirculation loop generally may be a fluid guiding system configured for guiding the fluid in a recirculating fashion, specifically through the electrodialysis device. The at least one recirculation loop, specifically the at least one acidic recirculation loop, may fluidically connect the brine container and/or the buffer container with the electrodialysis device, specifically with the at least one acidic chamber of the fluidic stack of the electrolysis device, and vice versa. The cleaning device may be configured for repeatedly guiding the fluid, specifically acidic fluid, through the electrodialysis device, specifically through the at least one acidic chamber of the fluidic stack of the electrodialysis device. As outlined above, the aqueous medium comprising the at least one salt may be converted into the at least one acidic fluid in the acidic chamber. However, the conversion of the aqueous medium comprising the at least one salt into the acidic fluid may not be completed after a single circulation. After the single circulation, the acidic fluid may still comprise a part of the aqueous medium comprising the at least one salt. In the beginning of the bipolar membrane electrodialysis, an amount of the salt comprised by the acidic fluid may be higher than an amount of acid in the acidic fluid. The amount of the at least one salt in the acidic fluid may decrease upon repeatedly guiding the acidic fluid through the electrodialysis device. The pH-value of the acidic fluid may also decrease upon repeatedly guiding the acidic fluid through the electrodialysis device.

The recirculation loop, specifically the acidic recirculation loop, may comprise at least one circulation pump. The recirculation loop may further comprise the at least one buffer container, specifically at least one buffer container fluidically connected to the brine container.

The buffer container may be configured for storing an amount of the fluid, specifically the acidic fluid. In this example, the recirculated fluid in the recirculation loop may be repeatedly guided from the buffer container to the electrodialysis device and vice versa. The buffer container may further comprise at least one sensor device for determining at least one property of the amount of the acidic fluid, specifically at least one sensor device selected from the group consisting of: a conductivity sensor; a pH sensor; a level sensor; a sensor for measuring a fluid density, specifically a float; a spectral camera, specifically a IR spectral camera. Alternatively or additionally, the sensor device may be arranged in the recirculation loop, specifically in a fluidic connection of the recirculation loop. For example, the at least one sensor device of the buffer container may be configured for determining the pH-value of the acidic fluid, thereby determining if the aqueous medium comprising the at least one salt is sufficiently converted into the acidic fluid. As an example, the aqueous medium comprising the at least one salt may be regarded as sufficiently converted into the acidic fluid when the pH-value of acidic fluid is below a predetermined threshold, such as below a pH-value of at most 5.5, preferably of at most 4.5, more preferably of at most 3.5, more preferably of at most 2.5.

Thus, the electrodialysis device and/or the cleaning device may comprise at least one of the brine container, the buffer container and the acid container, with the features described above. Therein, various combinations are feasible, such as a combination of the buffer container with one or both of the brine container and the acid container, a combination of the brine container with one or both of the buffer container and the acid container, a combination of the acid container with one or both of the brine container and the buffer container, or a combination of the acid container, the brine container and the buffer container.

The cleaning device may comprise at least one container, specifically the at least one acid container, fluidically connected to at least one of the buffer container and the brine container, more specifically an acid container fluidically connected to the buffer container via at least one pump. The container, specifically the acid container, may be fluidically connected to the fluid application device. The acid container may be configured for storing an amount of the acidic fluid. The container, specifically the acid container, may also comprise at least one sensor device for determining at least one property of a fluid contained in the container, specifically at least one sensor device selected from the group consisting of: a level sensor; a conductivity sensor; a pH sensor; a spectral camera, specifically a IR spectral camera. The at least one pump may be configured for pumping fluid from the buffer container to the container, specifically to the acid container, more specifically for pumping the acidic fluid from the buffer container to the acid container. For example, the acidic fluid may pumped from the buffer container to the acid container if the sensor device of the buffer container determined a sufficient conversion of the aqueous medium comprising the at least one salt into the acidic fluid.

As another example, the cleaning device may comprise the brine container and the acid container. The brine container may be configured for receiving the supply of the aqueous medium comprising the at least one salt. The brine container may be fluidically connected to the electrodialysis device via at least one pump. In this example, the recirculated fluid in the recirculation loop may be repeatedly guided from the brine container to the electrodialysis device and vice versa. Thus, in this example, the brine container may function as a buffer container as described above. The brine container may be fluidically connected to the acid container via at least one pump for providing the acidic fluid to the acid container.

Further, the container, specifically the acid container, may be fluidically connected to the fluid application device, specifically to at least one of: the washing tank of the washing device of the fluid application device; a pre-washing tank of a prewashing device of the fluid application device; the rinsing tank of the rinsing device of the fluid application device; the blending device for blending various components of the rinsing fluid of the rinsing device of the fluid application device; a boiler of the rinsing device of the fluid application device; a storage tank of the rinsing fluid; a nozzle system of a cleaning compartment, specifically a nozzle system of the prewashing compartment, a nozzle system of the washing compartment and/or a nozzle system of the rinsing compartment. The fluid connection between the acid container and the fluid application device may comprise at least one pump.

The container, specifically the acid container, may further be fluidically connected to at least one drain of the cleaning device. The cleaning fluid may be removable from the cleaning device via the at least one drain, specifically after being applied to the items to be cleaned. The acidic fluid comprised by the container, specifically by the acid container, may be added to the cleaning fluid removed from the cleaning device, specifically for neutralizing the used cleaning fluid. However, the acidic fluid may also be added to one of the washing tanks, for example to the pre-washing tank, for neutralizing the used cleaning fluid prior to removal via the at least one drain. The term "neutralizing" as used herein is a broad term and is to be given its ordinary and customary meaning to a person of ordinary skill in the art and is not to be limited to a special or customized meaning. The term specifically may refer, without limitation, to the process of treating a composition such as a liquid in such a way that the pH value of the composition, after the treatment, is 7 or at least close to 7, such as in a tolerance range of 7±3, specifically 7±2, more specifically 7±1 or even 7±0.5.

The recirculation loop, specifically the acidic recirculation loop, more specifically at least one of the buffer container and the brine container, may be fluidically connected to the fluid application device, for applying fluid, specifically at least one of the acidic fluid and the aqueous medium comprising the at least one salt, to the items to be cleaned. Specifically and as an alternative to the recirculation of the acidic fluid, the acidic fluid may be fed to the fluid application device after the single circulation through the electrodialysis device. The fluid connection between the acidic recirculation loop and the fluid application device may comprise at least one pump for pumping the acidic fluid from the acidic recirculation loop, specifically from the buffer container, to the fluid application device.

The cleaning device may additionally comprise at least one tank for holding an amount of the at least one cleaning fluid. The tank may comprise at least one sensor device for determining at least one property of the amount of the at least one cleaning fluid, specifically at least one sensor device selected from the group consisting of: a level sensor; a conductivity sensor; a pH sensor; a turbidity sensor; a spectral camera, specifically a IR spectral camera.

The cleaning device may comprise at least one supply for providing an aqueous medium, specifically at least one water supply, such as a water supply having at least one supply isolation device for isolating a fluid network of the cleaning device from a water supply or a freshwater supply of the building in which the cleaning device is positioned. Specifically, the supply for providing an aqueous medium may comprise at least one freshwater supply. Additionally or alternative, the supply for providing an aqueous medium may comprise at least one osmotic water supply. The supply may be fluidically connected to the electrodialysis device, specifically to at least one alkaline chamber of the fluidic stack of the electrodialysis device. However, additionally or alternatively, the supply may be connected to further components of the cleaning device for providing the aqueous medium to further components of the cleaning device.

The cleaning device may comprise a once through flow path through the electrodialysis device for providing the alkaline fluid. As opposed to the recirculation loop, the once through flow path generally may be configured for guiding the fluid through the electrodialysis device only once. At least one inlet of the electrodialysis device may be connected to the supply for providing the aqueous medium and at least one outlet of the electrodialysis device, specifically at least one alkaline outlet, may be fluidically connected to the fluid application device for providing the alkaline fluid to the fluid application device, specifically without providing any recirculation. Additionally, the cleaning device may further comprise at least one recirculation loop, specifically at least one salt recirculation loop and/or at least one acidic recirculation loop. The cleaning device may be configured for repeatedly guiding at least one fluid, specifically the at least one aqueous medium comprising the at least one salt and/or the at least one acidic fluid, through the electrodialysis device. The once through flow path may comprise at least one pump for at least one of pumping the aqueous medium to the electrodialysis device and pumping the alkaline fluid to the fluid application device. The at least one pump of the once through flow path may specifically be arranged upstream the electrodialysis device.

As an example and without restricting further possible embodiments, the electrodialysis device of the cleaning device may comprise:
c.1 the fluidic stack comprising
   - at least one acidic chamber having at least one acidic outlet for providing the acidic fluid;
   - at least one alkaline chamber having the at least one alkaline outlet for providing the alkaline fluid; and
   - at least one bipolar membrane separating the acidic chamber and the alkaline chamber, the bipolar membrane enabling bipolar ion exchange, specifically involving water dissociation, between the acidic chamber and the alkaline chamber, and optionally at least one further ion exchange membrane;
c.2 a cathode compartment comprising at least one cathode electrode, the cathode compartment being separated from the fluidic stack by at least one membrane, specifically at least one of an ion exchange membrane and a bipolar membrane, more specifically at least one cation exchange membrane, enabling ion exchange, specifically an ion exchange involving unidirectional and/or bidirectional ion transport, specifically cation exchange, between the cathode compartment and the fluidic stack; and
c.3 an anode compartment comprising at least one anode electrode, the anode compartment being separated from the fluidic stack by the at least one membrane, specifically at least one of an ion exchange membrane and a bipolar membrane, more specifically at least one cation exchange membrane, enabling ion exchange, specifically an ion exchange involving unidirectional and/or bidirectional ion transport, specifically cation exchange, between the anode compartment and the fluidic stack,
wherein the fluidic stack is disposed in between the cathode compartment and the anode compartment.

The term "fluidic stack" as used herein, also referred to as "bipolar membrane stack", is a broad term and is to be given its ordinary and customary meaning to a person of ordinary skill in the art and is not to be limited to a special or customized meaning. The term specifically may refer, without limitation, to a device comprising a plurality or sequence of neighboring fluid chambers wherein the fluid chambers are separated by at least one membrane, specifically at least one membrane selected from the group consisting of a cation exchange membrane, an anion exchange membrane and a bipolar membrane. Specifically, the fluidic stack may comprise at least one sequence of the acidic chamber and the alkaline chamber separated by the bipolar membrane. For example, the fluidic stack may comprise a plurality of acidic chambers and alkaline chambers, wherein the plurality of acidic chambers and alkaline chambers are arranged sequentially one after another. Each sequence of one acidic chamber, one alkaline chamber and one bipolar membrane may be separated by one cation exchange membrane. Additionally, each sequence of the fluidic stack may comprise at least one brine chamber separated from the acidic chamber by one anion exchange membrane.

The term "acidic chamber" as used herein is a broad term and is to be given its ordinary and customary meaning to a person of ordinary skill in the art and is not to be limited to a special or customized meaning. The term specifically may refer, without limitation, to a cavity or cell in the electrodialysis device which is walled by at least two membranes and which is configured such that, during bipolar membrane electrodialysis, the acidic fluid is formed in the acidic chamber. On a side of the acidic chamber facing an anode electrode of the electrodialysis device, a bipolar membrane may be provided. On a side facing a cathode electrode of the electrodialysis device, either an anion exchange membrane or a cation exchange membrane may be provided. Specifically, the at least one second conversion reaction of the bipolar membrane electrodialysis may take place in the acidic chamber of the fluidic stack.

The acidic chamber may be an open cavity, specifically comprising at least one acidic chamber inlet and the at least one acidic outlet, such that the aqueous medium comprising the at least one salt may be passed through the acidic chamber thereby being converted into the acidic fluid. The at least one acidic chamber inlet may also be referred to as "inlet means for passing an aqueous stream comprising an alkali metal salt MA of an acid HA into a cell". Consequently, the term "acidic outlet" as used herein, also referred to as "outlet means for removing an aqueous stream comprising HA from a cell", is a broad term and is to be given its ordinary and customary meaning to a person of ordinary skill in the art and is not to be limited to a special or customized meaning. The term specifically may refer, without limitation, to a device for removing a fluid, specifically the acidic fluid, from the acidic chamber.

The term "alkaline chamber" as used herein is a broad term and is to be given its ordinary and customary meaning to a person of ordinary skill in the art and is not to be limited to a special or customized meaning. The term specifically may refer, without limitation, to a cavity or cell in the electrodialysis device which is walled by at least two membranes and which is configured such that, during bipolar membrane electrodialysis, the alkaline fluid is formed in the alkaline chamber. On a side of the alkaline chamber facing a cathode electrode of the electrodialysis device, a bipolar membrane may be provided. On a side facing an anode electrode of the electrodialysis device, specifically, a cation exchange membrane may be provided. Specifically, the at least one first conversion reaction of the bipolar membrane electrodialysis may take place in the alkaline chamber of the fluidic stack.

Further, the alkaline chamber may be an open cavity, specifically comprising at least one alkaline chamber inlet and the least one alkaline outlet, such that the aqueous medium may be passed through the alkaline chamber thereby being converted into the alkaline fluid. The at least one alkaline chamber inlet may also be referred to as "inlet means for passing an aqueous stream into a cell". Consequently, the term "alkaline outlet" as used herein, also referred to as "outlet means for removing an aqueous stream comprising MOH from a cell", is a broad term and is to be given its ordinary and customary meaning to a person of ordinary skill in the art and is not to be limited to a special or customized meaning. The term specifically may refer, without limitation, to a device for removing a fluid, specifically the alkaline fluid, from the alkaline chamber.

The term "cathode compartment" as used herein is a broad term and is to be given its ordinary and customary meaning to a person of ordinary skill in the art and is not to be limited to a special or customized meaning. The term specifically may refer, without limitation, to an element configured for holding or for accommodating the at least one cathode electrode. The cathode compartment further comprises at least one cathode chamber, wherein the cathode chamber may comprise at least one cathode chamber inlet, also referred to as "inlet means for passing an aqueous electrolyte stream into the cathode chamber", and at least one cathode chamber outlet, also referred to as "outlet means for removing an aqueous electrolyte stream from the cathode chamber", for streaming an electrode rinsing fluid through the cathode chamber. The cathode electrode is arranged in the cathode chamber, so the cathode electrode is accommodated in a rinsing fluid, specifically an electrolyte fluid. As used herein, the term "cathode electrode", also simply referred to as "cathode", is a broad term and is to be given its ordinary and customary meaning to a person of ordinary skill in the art and is not to be limited to a special or customized meaning. The term specifically may refer, without limitation, to an electrically conducting element, device or electrode which, when an electric voltage is applied thereto, attracts cations. The cathode electrode specifically may be the electrode to which, during bipolar membrane electrodialysis, a negative electric potential is applied. The cathode electrode may be in contact with the electrode rinsing fluid, specifically with an cathode rinsing fluid.

The term "cation exchange membrane" as used herein is a broad term and is to be given its ordinary and customary meaning to a person of ordinary skill in the art and is not to be limited to a special or customized meaning. The term specifically may refer, without limitation, to an ion-selective membrane allowing for permeation of at least one species of cations, whereas permeation of anions through the membrane is prevented. Specifically, a cation exchange membrane enabling ion exchange, specifically cation exchange, may allow ion transport, specifically cationic transport, through the membrane.

The cation exchange membrane, generally, may be an organic polymer-based cation exchange membrane comprising acidic functional groups, preferably strong acidic functional groups, more preferably sulfonic acid groups. The organic polymer may preferably comprise, more preferably may be one or more of a polyvinyl chloride polymer, a polystyrene polymer, a polyethylene polymer, a polysulfone polymer, a polyacrylate polymer, a polyamide polymer, and a polypropylene polymer. More preferably, the organic polymer may comprise, more preferably may be a polyvinyl chloride polymer.

For example, the cation exchange membranes may comprise cation exchange membranes commercially available as "PC SK" membranes. The PC SK cation exchange membrane may comprise a polyester reinforced membrane comprising sulfonic acid groups. The cation exchange membranes separating the fluidic stack from the cathode compartment and/or from the anode compartment may be different from the other cation exchange membranes. The cation exchange membranes separating the fluidic stack from the cathode compartment and/or from the anode compartment may comprise cation exchange membranes commercially available under "PC SC" membranes. The PC SC cation exchange membrane may comprise a polyvinylchloride reinforced membrane comprising sulfonic acid groups. The bipolar membranes, as an example, may comprise bipolar membranes commercially available as "PC bip" membranes. The PC bip membranes may comprise a cation exchange membrane layer made of a polyester reinforced membrane comprising sulfonic acid groups and an anion exchange membrane layer made of polyester reinforced membranes comprising ammonium groups. However, other options for the cation exchange membranes and for the bipolar membranes are also feasible.

In case, the electrodialysis device may comprise a plurality of cation exchange membranes, the cation exchange membranes comprised by the fluidic stack and the one or more bipolar membranes may be the same or different cation exchange membrane, preferably the same cation exchange membranes.

The term "anode compartment" as used herein is a broad term and is to be given its ordinary and customary meaning to a person of ordinary skill in the art and is not to be limited to a special or customized meaning. The term specifically may refer, without limitation, to an element configured for holding or accommodating the at least one anode electrode. The anode compartment further comprises at least one anode chamber, wherein the anode chamber may comprise at least one anode chamber inlet, also referred to as "inlet means for passing an aqueous electrolyte stream into the anode chamber", and at least one anode chamber outlet, also referred to as "outlet means for removing an aqueous electrolyte stream from the anode chamber", for streaming the electrode rinsing fluid through the anode chamber.

The anode electrode is arranged in the anode chamber, so the anode electrode specifically is accommodated in a rinsing fluid, specifically an electrolyte fluid. As used herein, the term "anode electrode", also simply referred to as "anode", is a broad term and is to be given its ordinary and customary meaning to a person of ordinary skill in the art and is not to be limited to a special or customized meaning. The term specifically may refer, without limitation, to an electrically conducting element, device or electrode which, when an electric voltage is applied thereto, attracts anions. The anode electrode specifically may be the electrode to which, during bipolar membrane electrodialysis, a positive electric potential is applied. The anode electrode is in contact with the electrode rinsing fluid, specifically in contact with an anode rinsing fluid.

Further, the cathode compartment comprises the cathode chamber for receiving a cathode rinsing fluid. The cathode electrode is disposed in the cathode chamber. Similarly, the anode compartment comprises the anode chamber for receiving an anode rinsing fluid. The anode electrode is disposed in the anode chamber.

The cathode rinsing fluid and the anode rinsing fluid specifically may be fully or at least partially identical. Thus, the cathode electrode and the anode electrode specifically may be accommodated in a common electrode rinsing fluid, comprising the cathode rinsing fluid and the anode rinsing fluid. Thus, specifically, the cathode chamber and the anode chamber are connected via at least one electrode rinse fluid path. The electrode rinse fluid path may be a loop, specifically a closed loop, wherein the electrodialysis device may optionally further comprise at least one circulation pump for circulating the at least one electrode rinsing fluid through the loop. Thereby, the electrode rinsing fluid may be circulated through the cathode chamber and the anode chamber via the electrode rinse fluid path. By using a common electrode rinsing fluid and/or an electrode rinse fluid path the cathode chamber and the anode chamber, specifically by recirculation, pH differences between the cathode chamber and the anode chamber may be avoided.

Further, the electrode rinse fluid may comprise an aqueous electrolyte stream comprising one or more of NaOH, H₂SO₄, NaNO₃, and at least one of the at least one salts, preferably one or more of NaOH, H₂SO₄, NaNO₃, Na₂SO₄, and trisodium citrate. A cross flow velocity of the stream of the electrode rinse fluid in the electrodialysis device may be in the range of from 0.1 to 20 cm/s, preferably in the range of from 0.2 to 5 cm/s, more preferably in the range of from 0.5 to 1 cm/s.

The electrode rinse fluid path may further comprise at least one degassing device, also referred to as "degassing means". The degassing device may comprise at least one of:
- a catalyst, specifically at least one hydrogen combustion catalyst, for catalyzing a redox reaction of gases produced in the anode compartment with gases produced in the cathode compartment, specifically of hydrogen and oxygen;
- a catalyst, specifically at least one hydrogen combustion catalyst, for catalyzing a redox reaction of gases produced in the cathode compartment with gases of an environment or surrounding of the degassing device;
- a sparking device;
- a frit; specifically a frit made of a porous ceramic material;
- a fan, specifically a fan for diluting a hydrogen level below an explosive level; and
- an open container, specifically an open container for degassing the electrode rinse fluid contained in the open container.

Alternatively or additionally, other options for removing hydrogen from the electrode rinse fluid path, such as a hydrogen fuel cell or a hydrogen storage tank, are also feasible. Thus, besides the option of simply removing the hydrogen, the hydrogen may be stored and/or used for other purposes, such as for energy storage and/or energy recuperation.

The catalyst may specifically comprise at least one platinum group metal, preferably one or more of platinum, rhodium and palladium, more preferably palladium. The platinum group metal may preferably be supported in an inert support material, preferably on an oxidic material comprising one or more of aluminum, titanium and silicon, more preferably aluminum, the oxidic material more preferably comprising alumina.

Further, the degassing device may comprise at least one sensor device, specifically at least one sensor device selected from the group consisting of a temperature sensor, a pressure sensor, a hydrogen sensor and an oxygen sensor. The sensor device may specifically be configured for monitoring the redox reaction. For example, the temperature sensor may be configured for monitoring a temperature in the degassing device, wherein the temperature may be indicative of the redox reaction taking place in the degassing device. Alternatively or additionally, the degassing device may comprise at least one hydrogen trap.

Further, the fluidic stack may additionally comprise at least one brine chamber for receiving the aqueous medium comprising the at least one salt, specifically the solution of the at least one salt. The term "brine chamber" as used herein is a broad term and is to be given its ordinary and customary meaning to a person of ordinary skill in the art and is not to be limited to a special or customized meaning. The term specifically may refer, without limitation, to a container or cavity for receiving the aqueous medium comprising the at least one salt, specifically the solution of the at least one salt. The brine chamber may be an open cavity, specifically comprising at least one brine chamber inlet and at least one brine outlet, such that the aqueous medium comprising the at least one salt may be passed through the brine chamber.

The fluidic stack may further comprise at least one anion exchange membrane separating the brine chamber and the acidic chamber. The term "anion exchange membrane" as used herein is a broad term and is to be given its ordinary and customary meaning to a person of ordinary skill in the art and is not to be limited to a special or customized meaning. The term specifically may refer, without limitation, to an ion-selective membrane allowing for permeation of at least one species of anions, whereas permeation of cations through the membrane is prevented. Specifically, an anion exchange membrane enabling ion exchange, specifically anion exchange, may allow ion transport, specifically anionic transport, through the membrane.

The anion exchange membrane may be an organic polymer-based anion exchange membrane comprising nitrogen- and/or non-nitrogen based functional groups. The nitrogen based functional groups preferably may comprise one or more of quarternary ammonium groups, benzimidazolium groups, guanidinium groups and pyridinium groups. The non-nitrogen based functional groups preferably may comprise one or more of phosphonium group and sulfonium groups. More preferably, the anion exchange membrane may be an organic polymer-based anion exchange membrane comprising nitrogen based groups, more preferably quarternary ammonium groups. The organic polymer may preferably comprise, more preferably may be one or more of a polyvinyl chloride polymer, a polystyrene polymer, a polyethylene polymer, a polysulfone polymer, a polyacrylate polymer, a polyamide polymer, and a polypropylene polymer. More preferably, the organic polymer may comprise, more preferably may be a polyvinyl chloride polymer.

For example, the anion exchange membranes may comprise anion exchange membranes commercially available as "PC Acid 100" membranes. The PC Acid 100 anion exchange membrane may comprise a polyester reinforced membrane comprising ammonium groups. However, other options for the anion exchange membranes are also feasible.

In case, the electrodialysis device may comprise a plurality of anion exchange membranes, the anion exchange membranes comprised by the fluidic stack and the one or more bipolar membranes may be the same of different anion exchange membranes, preferably the same anion exchange membranes.

The anion exchange membrane may enable anion exchange between the brine chamber and the acidic chamber. Thus, at least one species of anions may permeate through the anion exchange membrane between the brine chamber and the acidic chamber. An exchange of cations, however, between the brine chamber and the acidic chamber may be prevented by the anion exchange membrane. The configuration of the elctrodialysis device with the brine chamber being separated by the anion exchange membrane for the acidic chamber may specifically be envisaged when using salts having an acid with small molecular size, such as lactic acid. Thus, in case the aqueous medium comprising the at least one salt, specifically the solution of the at least one salt, is received in the brine chamber, the acidic chamber may receive a supply of an aqueous medium, which may be converted into the acidic fluid upon performing bipolar membrane electrodialysis and/or the acidic fluid, specifically when recirculating the acidic fluid through the electrodialysis device. The anions of the at least one salt, specifically the acid of the at least one salt, may be transported through the anion exchange membrane into the acidic chamber, thus converting the aqueous medium to the acidic fluid. As outlined above, the at least one second conversion reaction of the bipolar electrodialysis may be performed in the acidic chamber of the fluidic stack. The brine chamber may have at least one brine outlet for providing the aqueous medium comprising the at least one salt, specifically the solution of the at least one salt. The term "brine outlet" as used herein is a broad term and is to be given its ordinary and customary meaning to a person of ordinary skill in the art and is not to be limited to a special or customized meaning. The term specifically may refer, without limitation, to a device for removing a fluid, specifically the aqueous medium comprising the at least one salt, from the brine chamber.

The fluidic stack may comprise a plurality of the acidic chambers, a plurality of the alkaline chambers and a plurality of the bipolar membranes, and optionally a plurality of the brine chambers and a plurality of the anion exchange membranes and/or a plurality of the cation exchange membranes. Additionally, the fluidic stack may comprise a plurality of further ion exchange membranes, specifically a plurality of cation exchange membranes or a plurality of anion exchange membranes. The fluidic stack may comprise a plurality of stacked groups of chambers, specifically a plurality of repetitively iterating and essentially identical stacked groups comprising two or three chambers. The stacked group of chambers may also be referred to as "cell array", wherein each of the acidic chamber, the alkaline chamber or the brine chamber of the stacked group of chambers may be referred to as a "cell" of the cell array. Thus, as an example, the fluidic stack may comprise a 3-chamber design or 3-stack design having an iterating setup of n groups of chambers ABC, with A denoting a brine chamber, B denoting an acidic chamber, and with C denoting an alkaline chamber, wherein n is an integer equal or greater than one, such as in the range of 1 to 100, more specifically, in the range of 5 to 30. Alternatively, the fluidic stack may comprise a 2-chamber design or 2-stack design having an iterating setup of n groups of chambers BC, with B denoting an acidic chamber, and with C denoting an alkaline chamber, wherein n is an integer equal or greater than one, such as in the range of 1 to 100, more specifically, in the range of 5 to 30. In both designs, the acidic chamber B and the alkaline chamber C in each group may be separated by a bipolar membrane. Further, in the 3-chamber design, the brine chamber A and the acidic chamber B of each group may be separated by a further ion exchange membrane, such as via at least one of a cation exchange membrane and an anion exchange membrane. Further, in both designs, neighboring groups may be separated from each other via a further ion exchange membrane, such as via at least one of a cation exchange membrane and an anion exchange membrane, specifically via a cation exchange membrane. Finally, in both designs, the first group and the last group of the stack may be separated from the neighboring electrode compartments via a membrane, specifically via at least one of an ion exchange membrane and a bipolar membrane, more specifically via at least one cation exchange membrane.

The chambers of the fluidic stack, specifically at least one of the acid chamber, the alkaline chamber and, optionally the brine chamber, may be separated from each other by at least one spacer. The spacer may specifically refer to a structural element arranged in between the two membranes comprised by the fluidic stack and enabling passing a fluid through the chamber. The spacer in between two membranes may specifically form the cavities through which the respective fluid is passed. The spacer may be configured for providing fluidic sealing of the chamber. As an example, the spacer may be or may comprise at least one mesh arranged in between the two membranes comprised by the fluidic stack.

Thus, generally, the groups of chambers each may comprise at least one of the acidic chambers and at least one of the alkaline chambers. The at least one acidic chamber and the at least one alkaline chamber of each group may be separated by the bipolar membrane. Additionally, the groups of chambers each may comprise the at least one brine chamber being separated by the acidic chamber by the anion exchange membrane. The groups of chambers each may be walled on opposing sides by cation exchange membranes enabling cation exchange between the respective group of chambers and at least one of: a neighboring group of chambers, the anode compartment and the cathode compartment. The fluidic stack specifically may comprise 1 to 200 of the groups of chambers, specifically 5 to 100 of the groups of chambers, more specifically 10 to 50 of the groups of chambers. For example, the fluidic stack may comprise 20 groups of chambers. As will be outlined in further detail below, stacks of groups of chambers in this range, specifically fluidically switched in a parallel fashion, are generally suited for providing sufficient amounts of consumables for commercial dishwashers under suitable electrical operating conditions, such as operating voltage and/or operating current.

In addition, the groups of chambers each may further comprise at least one anion exchange membrane separating the brine chamber and the acidic chamber. The anion exchange membrane may enable anion exchange between the brine chamber and the acidic chamber of the respective group.

As an example, the groups of chambers of the fluidic stack may consist of two chambers, the acidic chamber and the alkaline chamber. This configuration of the bipolar membrane stack may specifically be referred to as "two-cell stack". The alkaline chamber of the fluidic stack and may be defined by a bipolar membrane on the cathode side and a cation exchange membrane on the anode side. The alkaline chamber may comprise inlet means for passing a stream of the aqueous medium into said chamber and outlet means for removing a stream of the alkaline fluid from said chamber. The acidic chamber may be defined by a cation exchange membrane on the cathode side and a bipolar membrane on the anode side. The acidic chamber may comprise inlet means for passing a stream of the aqueous medium comprising the at least one salt into said chamber and outlet means for removing a stream of the acidic fluid from said chamber.

In one example, the acidic fluid removed from the acidic chamber may be recirculated. Recirculating the acidic fluid may comprise passing at least a part of the acidic fluid as the aqueous medium comprising the at least one salt into the acidic chamber. Thus, the aqueous medium comprising the at least one salt being passed into the acidic chamber may comprise the salt in the beginning of using the electrodialysis device. Upon further circulating the aqueous medium through the acidic chamber, the aqueous medium comprising the at least one salt may comprise both, the salt and the acidic fluid. An amount of the acidic fluid in the aqueous medium being circulated through the acidic chamber may increase with repeated circulation, whereas an amount of the salt may decrease. However, other operation modes of passing the aqueous medium comprising the at least one salt through the acidic chamber are also feasible, such as a single pass through, as will be outlined in further detail below.

As another example, the groups of chambers of the fluidic stack may consist of three chambers, the acidic chamber, the alkaline chamber and the brine chamber. This configuration of the bipolar membrane stack may specifically be referred to as "three-cell stack". In this configuration, the fluidic stack may further comprise the at least one anion exchange membrane arranged between the cation exchange membrane and the bipolar membrane. The alkaline chamber may be defined by a bipolar membrane at the cathode side and a cation exchange membrane at the anode side. The alkaline chamber may comprise inlet means for passing the aqueous medium into the alkaline chamber and outlet means for removing the alkaline fluid from said chamber. The brine chamber may be defined by a cation exchange membrane at the cathode side and the anion exchange membrane at the anode side. The brine chamber may comprise inlet means for passing a stream of the aqueous medium comprising the at least one salt into said chamber and outlet means. The acidic chamber may be defined by the anion exchange membrane at the cathode side and the bipolar exchange membrane at the anode side. The acidic chamber may comprise inlet means and outlet means for removing the acidic fluid from said chamber. The outlet means of the brine chamber may be an outlet means for removing a stream of the aqueous medium comprising the at least one salt from the brine chamber. The inlet means of the acidic chamber may be inlet means for passing a stream of the acidic fluid into the acidic chamber.

The plurality of the acidic chambers may be fluidically connected to at least one common acidic outlet, wherein the plurality of the alkaline chambers may be fluidically connected to at least one common alkaline outlet, and wherein, optionally, the plurality of brine chambers may be fluidically connected to at least one common brine outlet.

The common acidic outlet may be configured for providing the acidic fluid prepared in the electrodialysis device, specifically for providing at least one combined stream of the at least one acidic fluid. The common acidic outlet may also be referred to as "outlet means for removing the aqueous stream comprising HA from the bipolar membrane stack". Specifically, the common acidic outlet may be configured for combining the acidic fluid provided by the acidic outlet of each acidic chamber. For example, the common acidic outlet may also comprise a combining device for combining the streams of the at least one acidic fluid from the plurality of acidic chambers to the combined stream of the at least one acidic fluid. Thus, the common acidic outlet may also be referred to as "combining means for combining x aqueous streams comprising HA".

The common alkaline outlet may be configured for providing the alkaline fluid prepared in the electrodialysis device, specifically for providing at least one combined stream of the at least one alkaline fluid. The common alkaline outlet may also be referred to as "outlet means for removing the aqueous stream comprising MOH from the bipolar membrane stack". Specifically, the common alkaline outlet may be configured for combining the alkaline fluid provided by the alkaline outlet of each alkaline chamber. For example, the common alkaline outlet may also comprise a combining device for combining the streams of the at least one alkaline fluid from the plurality of alkaline chambers to the combined stream of the at least one alkaline fluid. Thus, the common alkaline outlet may also be referred to as "combining means for combining x aqueous streams comprising MOH".

Similarly, the common brine outlet may be configured for providing the aqueous medium comprising the at least one salt from the electrodialysis device, specifically providing at least one combined stream of the aqueous medium comprising the at least one salt. Specifically, the common brine outlet may be configured for combining the aqueous medium comprising the at least one salt, specifically the solution of the at least one salt, provided by the brine outlet of each brine chamber. For example, the common brine outlet may comprise a combining device for combining the streams of the aqueous medium comprising the at least one salt from the plurality of brine chambers to the combined stream of the aqueous medium comprising the at least one salt.

Further, the plurality of the acidic chambers may be fluidically connected to at least one common acidic inlet. The common acidic inlet may also be referred to as "inlet means for passing an aqueous stream comprising MA to the bipolar membrane stack". The common acidic inlet may be configured for providing the aqueous medium comprising the at least one salt or, alternatively, the acidic fluid, to the at least one acidic chamber inlet which may be comprised by each acidic chamber. Specifically, the common acidic inlet may comprise a dividing device configured for dividing an incoming stream of the aqueous medium comprising the at least one salt or, alternatively, of the acidic fluid, into the streams of the aqueous medium comprising the at least one salt or the streams of the acidic fluid, respectively, into the acidic chambers. Thus, the common acidic inlet may be configured for providing at least a part of the incoming stream of the aqueous medium comprising the at least one salt to each of the acidic chambers, specifically via the acidic chambers inlets. Thus, the common acidic inlet may also be referred to as "dividing means to divide the aqueous stream comprising MA".

The plurality of the alkaline chambers may be fluidically connected to at least one common alkaline inlet. The common alkaline inlet may also be referred to as "inlet means for passing an aqueous stream to the bipolar membrane stack". The common alkaline inlet may be configured for providing the aqueous medium, specifically water, to the at least one alkaline chamber inlet which may be comprised by each alkaline chamber. Specifically, the common alkaline inlet may comprise a dividing device configured for dividing an incoming stream of the aqueous medium into the streams of the aqueous medium into the alkaline chambers.

Thus, the common alkaline inlet may be configured for providing at least a part of the incoming stream of the aqueous medium to each of the alkaline chambers, specifically via the alkaline chambers inlets. Thus, the common alkaline inlet may also be referred to as "dividing means to divide the aqueous stream".

Additionally, the plurality of brine chambers may be fluidically connected to at least one common brine inlet. The common brine inlet may be configured for providing the aqueous medium comprising the at least one salt, specifically the solution of the at least one salt, to the at least one brine chamber inlet which may be comprised by each brine chamber. Specifically, the common brine inlet may comprise a dividing device for dividing an incoming stream of the aqueous medium comprising the at least one salt into the brine chambers. Thus, the common brine inlet may be configured for providing at least a part of the incoming stream of the aqueous medium comprising the at least one salt to each of the brine chambers, specifically via the brine chamber inlets.

The cathode electrode and the anode electrode, each, may have an electrode area of at least 50 cm², specifically an electrode area of 50 cm² to 400 cm², more specifically an electrode area of 100 cm² to 300 cm², most specifically an electrode area of 200 cm². As will be outlined in further detail below, these electrode surfaces are specifically suitable for providing sufficient amounts of consumables such as alkaline fluid for commercial dishwashers under suitable electrical operating conditions, such as operating voltage and/or operating current. The area of the bipolar membrane, of the cation exchange membrane and, optionally, of the anion exchange membrane may correspond to the electrode area of the cathode electrode and the anode electrode.

The electrodialysis device may further comprise at least one electrodialysis controller. The term "electrodialysis controller" also is a broad term and is to be given its ordinary and customary meaning to a person of ordinary skill in the art and is not to be limited to a special or customized meaning. The term specifically may refer, without limitation, to a device being embodied in one or several parts and configured for at least partially controlling and/or regulating at least one operating parameter of the electrodialysis device. Specifically, the electrodialysis controller may be configured for one or more of changing, controlling and regulating one or more operating parameter, such as electric current density, electric voltage, fluid velocity, pumping power, valve position or a combination thereof. The electrodialysis controller may specifically comprise at least one data processing unit, such as a processor. The electrodialysis controller may be configured, such as by hardware and/or by software programming, for performing and/or controlling operation of the electrodialysis device. Further, the electrodialysis controller may comprise at least one volatile or non-volatile data storage. The electrodialysis controller may comprise at least one interface, such as a human-device interface, configured for entering commands and/or for outputting information. The at least one interface may comprise a wired interface and/or a wireless interface for unidirectionally or bidirectionally exchanging data or commands, specifically between the electrodialysis controller and the electrodialysis device and/or between the electrodialaysis controller and at least one further device, such as a control device of the cleaning device. For example, the electrodialysis controller may comprise at least one computer and/or at least one processor.

The electrodialysis controller may be configured for controlling the preparing of the at least one alkaline fluid and the at least one acidic fluid, specifically by controlling an electric power provided to the electrodialysis device, more specifically by controlling an electric current density and/or an electric voltage applied to the cathode electrode and the anode electrode of the electrodialysis device. Thus, it may be possible to enhance or lower the preparation of the alkaline fluid and the acidic fluid by controlling the electric power provided to the electrodialysis device, specifically in accordance with an amount of the cleaning fluid required in the cleaning device.

The electrodialysis controller may be configured for controlling feeding the aqueous medium comprising the at least one salt from one or more of the brine container and the buffer container to the electrodialysis device, specifically by controlling an electric power provided to a pump feeding the aqueous medium comprising the at least one salt from one or more of the brine container and the buffer container to the electrodialysis device.

Further, the cleaning device may comprise at least one control device for controlling an operation of the cleaning device. The term "control device" also is a broad term and is to be given its ordinary and customary meaning to a person of ordinary skill in the art and is not to be limited to a special or customized meaning. The term specifically may refer, without limitation, to a device being embodied in one or several parts and configured for at least partially controlling and/or regulating at least one operating parameter of the cleaning device. Specifically, the control device may be configured for one or more of changing, controlling and regulating one or more operating parameter, such as temperature, pressure, heating power, pumping power, valve position or a combination thereof. The control device may specifically comprise at least one data processing unit, such as a processor. The control device may be configured, such as by hardware and/or by software programming, for performing and/or controlling at least one cleaning process. Further, the control device may comprise at least one volatile or non-volatile data storage. The control device may comprise at least one interface, such as a human-device interface, configured for entering commands and/or for outputting information. The at least one interface may comprise a wired interface and/or a wireless interface for unidirectionally or bidirectionally exchanging data or commands, specifically between the cleaning device and at least one further device. For example, the control device may comprise at least one computer and/or at least one processor. The control device may be or may comprise a centralized control device and/or one or more decentralized control devices. The control device may be connected to one or more sensor device of the cleaning device and may be configured for processing one or more sensor signals received from the sensor devices.

The control device may be configured for controlling the feeding of the alkaline fluid to the fluid application device and optionally also for controlling the feeding of the acidic fluid to the fluid application device. The feeding of the alkaline fluid and/or the acidic fluid to the fluid application device may specifically be controlled independently from each other. For example, the control device may be configured for enabling the feeding of the alkaline fluid to the fluid application device, while the acidic fluid to the fluid application device is not fed to the fluid application device but is recirculated through the electrodialysis device. However, the control device may also be configured for controlling simultaneously feeding of both the alkaline fluid and the acidic fluid to the fluid application device. The control device may comprise at least one processor which may be configured, such as by software programming, for supporting controlling the operation of the cleaning device. The control device may be configured for controlling the use of the alkaline fluid and/or the acidic fluid in the cleaning device for one or more of the above-mentioned purposes.

The control device of the cleaning device and the electrodialysis controller may be separate devices, which, however, may be interconnected, e.g. by one or more wireless or wire bound control interfaces. Alternatively, however, the electrodialysis controller, may also fully or partially be integrated into the control device, or vice a versa. Thus, as an example, the control device may be a machine controller of the cleaning device, and the electrodialysis controller may be a part of the machine controller.

The control device may be configured for controlling the cleaning device to perform at least two different modes of operation. As an example, the at least two different modes of operation may comprise at least two different types of programs for running the cleaning device, such as at least two different types of cleaning programs and/or at least one cleaning program and at least one maintenance program, such as a maintenance program for filing the brine container and/or the buffer container with the aqueous medium comprising the at least one salt and/or a maintenance program for heating the cleaning device and/or the cleaning fluid. Further, the at least two different modes of operation may also, additionally or alternatively, comprise a initialization process, such as at least one of a filling process, a heat-up process and a top-up dosage process.

The control device may further be configured for controlling the electrodialysis controller differently in the at least two modes of operation. Thus, the control device may be configured for controlling the electrodialysis controller to provide sufficient consumables for the actual mode of operation of the cleaning device. Thereby, an on-demand production of consumables such as the alkaline fluid and/or the acidic fluid may be possible. Thus, a storage of large amounts of consumables may be avoided, since the actual production of these consumables may take place *in situ* within the cleaning device and, in accordance with the actual demand for these consumables.

The control device may be configured for controlling the electrodialysis controller in accordance with an amount of cleaning fluid actually required in the cleaning device, e.g. in the actual mode of operation. For example, in a first mode of operation, the control device may control the electrodialysis controller such that a high electric power, for example an electric current density of at least 300 A/m², specifically of 400 A/m², e.g. an electric current density of at least 300 A/m² to less than 500 A/m², e.g. an electric current density of 300 A/m² to 400 A/m², e.g. at an electric voltage of 42 V or less, is applied to the electrodialysis device in case high amounts of cleaning fluid are required in the cleaning device. In a second mode of operation, the control device may control the electrodialysis controller such that a low electric power, for example an electric current density lower than 300 A/m², specifically of 200 A/m², e.g. an electric current density of 200 A/m² to 300 A/m², e.g. at an electric voltage of 42 V or less, is applied to the electrodialysis device in case small amounts of cleaning fluid are required in the cleaning device. As will be outlined in further detail below, these operating parameters are generally suited for providing sufficient amounts of consumables such as alkaline fluid for commercial dishwashers, and, still, are within the range of typical electrical operating parameters of commercial dishwashers.

The cleaning device may further comprise at least one transport device for transporting the items to be cleaned through the cleaning chamber. For example, the transport device may comprise a conveyor, such as a belt conveyor and/or a chain conveyor, for transporting the items to be cleaned. The cleaning chamber may comprise a plurality of cleaning compartments sequentially arranged in a transport direction of the transport device. The cleaning compartments may comprise at least two compartments selected from the group consisting of: the prewashing compartment; the washing compartment; the rinsing compartment.

For example, the cleaning compartments may comprise the at least one first washing compartment, also referred to as the alkaline washing compartment, and at least one second washing compartment, also referred to as the acidic washing compartment, disposed downstream of the first washing compartment in the transport direction. The cleaning device may be configured for feeding the alkaline fluid into the first washing compartment and for feeding the acidic fluid into the second washing compartment. It may also be possible to arrange the first washing compartment downstream the second washing compartment. As another example, it may be possible to feed both, the alkaline fluid and the acidic fluid into at least one of the washing compartments. Further, the cleaning device may be configured for feeding the acidic fluid into at least one of the prewashing compartment arranged upstream of the at least one washing compartment and the rinsing compartment arranged downstream of the at least one washing compartment. Further, the cleaning device may be configured for feeding each of the alkaline fluid and/or the acidic fluid in a separate washing compartment additional to the above-mentioned washing compartments.

The cleaning compartments each may comprise compartment tanks, wherein the compartment tanks optionally may be fluidically connected, such as in a cascade manner, allowing for fluid transfer between the compartment tanks, specifically in a direction opposing the transport direction. Additionally or alternatively, the compartment tanks may comprise a bypass fluidically connecting one or more of the compartment tanks, allowing fluid transfer independent from above-mentioned cascade fluid connection.

As an example, at least one of the cleaning compartments may comprise an alkaline compartment tank for storing the alkaline fluid or a fluid containing the alkaline fluid, and/or at least one of the cleaning compartments may comprise an acid compartment tank for storing the acidic fluid and/or a fluid containing the acidic fluid. The cleaning device may be configured for feeding the alkaline fluid and/or the acidic fluid to the alkaline compartment tank and the acid compartment tank, respectively, specifically before a washing process in the cleaning device starts and/or during a washing or rinsing process.

Further, the cleaning device may comprise the at least one drying compartment comprising at least one blower device for drying the items to be cleaned. The at least one drying compartment may be arranged downstream of at least one of the washing compartment and the rinsing compartment.

In a further aspect of the present disclosure, a use of the cleaning device according to the present disclosure, such as according to any one cleaning device disclosed above and/or according to any one cleaning device disclosed in further detail below, is disclosed. The cleaning device is used for cleaning the at least one item selected from the group consisting of:
- objects for at least one of the preparation, the transport, the mixing, the storage and the presentation of at least one of food and beverages, specifically at least one of crockery, glasses, cutlery, containers, boxes, baskets, trays, pots, bowls, bottles, carafes, jugs and trolleys;
- medical objects and accessories, specifically at least one of care utensils, kidney dishes, wash bowls, tweezers, scissors, forceps, endoscopes and containers for human excreta, specifically at least one of bedpans, stool buckets and urine bottles;
- personal protective equipment items and accessories, specifically at least one of: items and accessories for occupational safety and health, specifically at least one of respiratory masks, breathing air regulators, automatic lung ventilators, protective helmets, ear protectors, spectacles, visors, carrying frames, breathing gas cylinders, gloves, shoes, boots and aprons; and
- laundry, specifically at least one of clothing, laundry of industrial safety equipment, laundry of personal protective equipment.

In a further aspect of the present disclosure, a process of cleaning items is disclosed. The process comprises the following steps which specifically may be performed in the given order. It shall be noted, however, that a different order is also possible. Further, it is also possible to perform one or more of the process steps once or repeatedly. Further, it is possible to perform two or more of the process steps simultaneously or in a timely overlapping fashion. The process may comprise further steps which are not listed.

The process of cleaning items comprises:
i. receiving the items to be cleaned in the at least one cleaning chamber of the cleaning device;
ii. preparing the at least one alkaline fluid and the at least one acidic fluid from the aqueous medium comprising the at least one salt, specifically the solution of the at least one salt, by using bipolar membrane electrodialysis in the at least one electrodialysis device of the cleaning device; and
iii. feeding the at least one alkaline fluid to at least one fluid application device of the cleaning device; and
iv. applying the at least one cleaning fluid to the items received in the cleaning chamber by using the at least one fluid application device of the cleaning device.

Specifically, in the process, the cleaning device according to the present disclosure, such as according to any one cleaning device disclosed above and/or according to any one cleaning device disclosed in further detail below, is used.

In the process, step ii. may comprise passing a stream of the aqueous medium into the electrodialysis device, specifically via the at least one alkaline chamber inlet into the at least one alkaline chamber of the fluidic stack of the electrodialysis device, more specifically via the at least one common alkaline inlet. Further, step ii. may comprise removing a stream of the at least one alkaline fluid from the electrodialysis device, specifically via the at least one alkaline outlet of the at least one alkaline chamber of the fluidic stack of the electrodialysis device, more specifically via the at least one common alkaline outlet. As outlined above, the at least one alkaline fluid comprises the aqueous medium comprising an alkali metal hydroxide MOH, wherein M may comprise one or more of Na, K, and Li, preferably one or more of Na and K, more preferably Na, wherein more preferably, M may be Na.

Further, the at least one alkaline fluid may comprise the aqueous medium, specifically water, comprising sodium hydroxide. Via the stream of the at least one alkaline fluid, sodium hydroxide may be obtained at a rate in the range of from 0.5 to 4 g/min, preferably in the range of from 1.5 to 3.75 g/min, more preferably in the range of from 2 to 3.5 g/min, more preferably in the range of from 2.5 to 3.25 g/min. A volume flow rate at which the stream of the aqueous medium may be passed into the electrodialysis device may be in the range of from 0.25 to 5 L/h, preferably in the range of from 0.5 to 3 L/h, more preferably in the range of from 0.75 to 1.5 L/h.

Further, step ii. may comprise passing a stream of the aqueous medium comprising the at least one salt, specifically the solution of the at least one salt, into the electrodialysis device, specifically via the at least one acidic chamber inlet into the at least one acidic chamber of the fluidic stack of the electrodialysis device, more specifically via the at least one common acidic inlet. Additionally, step ii. may comprise removing a stream of the at least one acidic fluid from the electrodialysis device, specifically via the at least one acidic outlet of the at least one acidic chamber of the fluidic stack of the electrodialysis device, more specifically via the at least one common acidic outlet.

Alternatively, in case the electrodialysis device comprises the fluidic stack having the plurality of stacked groups of chambers comprising three chambers, step ii. may comprise passing a stream of the aqueous medium comprising the at least one salt, specifically the solution of the at least one salt, into the electrodialysis device, specifically via the at least one brine chamber inlet into the at least one brine chamber of the fluidic stack of the electrodialysis device, more specifically via the at least one common brine inlet. However, in this configuration, step ii. may also comprise removing the stream of the at least one acidic fluid from the electrodialysis device, specifically via the at least one acidic outlet of the at least one acidic chamber of the fluidic stack of the electrodialysis device, more specifically via the at least one common acidic outlet. The aqueous medium comprising the at least one salt may be removed from the brine chamber via the at least one brine outlet, specifically via the at least one common brine outlet. The acidic chamber, however, may be provided with the acidic fluid via the acidic chamber inlet, specifically via the common acidic inlet. The acidic fluid removed from the acidic chamber may be more acidic than the acidic fluid provided to the acidic chamber, e.g. having a lower pH-value than before.

As outlined above, the aqueous medium comprising the at least one salt, specifically the solution of the at least one salt, may comprise the alkali metal salt MA of a Bronsted acid HA. Thus, the at least one acidic fluid may comprise the aqueous medium comprising the Bronsted acid HA. The Bronsted acid HA may have one or more pKa values, wherein at least one pKa value may be in the range of from 2 to 7. Specifically, the acid HA may also comprise anions being capable of dissociating at least one proton, such as hydrogen carbonate, hydrogen phosphate and dihydrogen phosphate. The Bronsted acid HA may also have two or more pKa values and wherein at least one, preferably at least two pKa values, may be in the range of from 2 to 7. Generally, the pKa values may change over the duration of the process. As an example, the preferred values as mentioned may refer to the end product of the acidic fluid. The pKa values may be specified for the pure acid HA rather than for the acidic fluid. Generally, the acid HA with the preferred pKa value in the range of from 2 to 7, more specifically in the range of from 3 to 6.5, may result in higher current efficiencies during the process. The salt MA or at least one of the salts MA may have a calcium dissociation constant pCa of at least 5. In the process, from 1 kg of the at least one alkali metal salt MA, M preferably being Na, at least 350 g, preferably at least 400 g MOH, preferably NaOH, may be produced. The at least one alkali metal salt MA may be present in the aqueous medium comprising the at least one salt, specifically in the solution of the at least one salt, in an amount in the range of from 20 to 100 %, preferably in the range of from 75 to 100 %, more preferably in the range of from 85 to 100 %, more preferably in the range of from 95 to 100 % of its solubility at 5 °C.

Further, in the process, the at least one acidic fluid may be produced comprising at least two Bronsted acids HA. At least one Bronsted acid HA may have at least one pKa value in the range of from 2 to 7. Further, at least one of the salts MA may have a calcium dissociation constant pCa of at least 5. In this example, at least two alkali metal salts MA may be comprised by the aqueous medium comprising the at least one salt, specifically by the solution of the at least one salt. Preferably, M may be the same in the at least two alkali metal salts MA, wherein from 1 kg of the alkali metal salts MA, M preferably being Na, at least 350 g, preferably at least 400 g MOH, preferably NaOH, may be produced. At least one of the salts MA, preferably each of the salts of MA, may be present in the aqueous medium comprising the at least one salt, specifically in the solution of the at least one salt, in an amount in the range of from 20 to 100 %, preferably in the range of from 75 to 100 %, more preferably in the range of from 85 to 100 %, more preferably in the range of from 95 to 100 % of its solubility at 5 °C.

Further, in the process, a cross flow velocity of any one of the stream of the aqueous medium, the stream of the at least one alkaline fluid, the stream of the aqueous medium comprising the at least one salt and the stream of the at least one acidic fluid through the electrodialysis device may be in the range of from 0.01 to 5 cm/s, preferably in the range of from 0.1 to 3 cm/s, more preferably in the range of from 0.05 to 1 cm/s.

Further, the aqueous medium comprising the at least one salt, specifically the solution of the at least one salt, may comprise the sodium salt of the Bronsted acid HA. Thus, the at least one acidic fluid may comprise the aqueous medium comprising the Bronsted acid HA. The acid HA may comprise a monobasic or a polybasic carboxylic acid, preferably a monocarboxylic acid or a dicarboxylic acid or a tricarboxylic acid or a mixture of a monocarboxylic acid and a dicarboxylic acid or a mixture of a monocarboxylic acid and a tricarboxylic acid or a mixture of a dicarboxylic acid and a tricarboxylic acid or a mixture of a monocarboxylic acid and a dicarboxylic acid and a tricarboxylic acid. Specifically, the acid may comprise, preferably consists of, lactic acid or citric acid or methyl glycine diacetic acid. More preferably, the organic acid may comprises, most preferably consists of, citric acid.

The alkali metal salt MA of the acid HA may comprise one or more of monoalkali metal citrate, dialkali metal citrate and trialkali metal citrate, preferably one or more of monosodium citrate, disodium citrate and trisodium citrate, more preferably trisodium citrate. More preferably, the alkali metal salt MA of the acid HA may be trisodium citrate. As another example, the alkali metal salt MA may comprise inorganic buffering salts, such as one or more of sodium carbonate, sodium bicarbonate, sodium phosphate and other combination of Na⁺ and PO₄³⁻.

The alkali metal salt MA may be selected from the group consisting of: citrate; citrates; MGDA; GLDA; IDS; lactate; oxalate; gluconate; sulphate; carbonate; polyacrylate and mixtures of two or more thereof. Preferably, the alkali metal salt MA comprises citrates or MGDA or a mixture thereof, in particular when being used in the electrodialysis device having only the acidic chamber and the alkaline chambers. However, when being used in the electrodialysis device having the acidic chambers, the alkaline chambers and the brine chambers, the alkali metal salt may preferably comprise one or more of: lactate; acetate; gluconate; oxalate; sulphate; carbonate; polyacrylate; and mixtures of two or more thereof.

A flow rate at which the stream of the aqueous medium comprising the at least one salt, specifically the solution of the at least one salt, may be passed into the electrodialysis device may be in the range of from 0.25 to 25 L/h, preferably in the range of from 0.5 to 20 L/h, more preferably in the range of from 0.75 to 15 L/h. Specifically, in case the acidic fluid is not recirculated through the electrodialysis device, the flow rate at which the stream of the aqueous medium comprising the at least one salt, specifically the solution of the at least one salt, may be passed into the electrodialysis device may be in the range of from 0.25 to 3 L/h, preferably in the range of from 0.5 to 2 L/h, more preferably in the range of from 0.75 to 1.5 L/h. In case the acidic fluid may be repeatedly guided through the electrodialysis device, the flow rate at which the stream of the aqueous medium comprising the at least one salt, specifically the solution of the at least one salt, and/or the stream of the recirculated acidic fluid may be passed into the electrodialysis device may be in the range of from 5 to 25 L/h, preferably in the range of from 7.5 to 20 L/h, more preferably in the range of from 10 to 15 L/h.

The aqueous medium comprising the at least one salt, specifically the solution of the at least one salt, may contain the salt, specifically the sodium salt of the polybasic carboxylic acid, in an amount in the range of from 10 to 50 weight-%, preferably in the range of from 15 to 35 weight-%, more preferably in the range of from 20 to 35 weight-%, more preferably in the range of from 25 to 35 weight-%, more preferably in the range of from 30 to 35 weight-%, based on the total weight of the aqueous medium comprising the at least one salt.

The at least one alkaline fluid, specifically the alkaline fluid used in the cleaning fluid, may have a pH of at least 12, preferably of at least 12.5, more preferably of at least 13, determined by using at least one pH sensor and/or at least one conductivity sensor with a conductivity-pH calibration. The at least one acidic fluid, specifically the acidic fluid being sufficiently converted, may have a pH of at most 5.5, preferably of at most 4.5, more preferably of at most 3.5, more preferably of at most 2.5.

Further, the process may comprise:
v. feeding at least a part of the acidic fluid to the fluid application device.

As outlined above, the bipolar membrane electrodialysis may comprise using an applied electric field. Specifically, in step ii., an electric current density of 10 A/m² to 1500 A/m² may be used, specifically of 100 A/m² to 1000 A/m², more specifically of 200 A/m² to 400 A/m². Additionally or alternatively, in step ii., an electric voltage of less than 50 V may be used, specifically an electric voltage of 42 V or less.

The process may further comprise a plurality of partial process steps. The partial process steps may comprise at least two process steps selected from the group consisting of:
- a washing process, wherein, in the washing process, both a part of the alkaline fluid and a part of the acidic fluid are applied to the items to be cleaned;
- a washing process, wherein, in the washing process, both a part of the alkaline fluid and a part of the acidic fluid are fed to at least one common washing tank of the fluid application device;
- a washing process, wherein, in the washing process, a part of the alkaline fluid and a part of the acidic fluid are fed to different washing tanks of the fluid application device;
- a rinsing process, wherein, in the rinsing process, a part of the acidic fluid is applied to the items to be cleaned;
- a decalcifying process, wherein, in the decalcifying process, a part of the acidic fluid is applied to at least one of the fluid application device and the items to be cleaned, for decalcifying purposes; and
- a decalcifying process, wherein, in the decalcifying process, a part of the acidic fluid is applied to a feed stream of a reverse osmosis device comprised by the cleaning device.

Specifically, the plurality of partial process steps may be performed in a manner selected from the group consisting of:
- the items to be cleaned may remain stationary in the cleaning chamber, wherein the partial process steps may be performed sequentially in time;
- the items to be cleaned may be transported sequentially through the plurality of cleaning compartments of the cleaning chamber, the cleaning compartments may be configured for performing different partial process steps.

The process may further comprise removing the items to be cleaned from the cleaning chamber and decalcifying at least a part of the cleaning device, specifically at least a part of the fluid application device, by using the acidic fluid.

Further, the process may comprise self-testing the electrodialysis device. The self-testing may comprise passing the stream of the aqueous medium comprising the at least one salt and the stream of the aqueous medium through the electrodialysis device without providing electric power to the electrodialysis device. The self-testing may comprise determining a conductance of the electrodialysis device. In case a peak in the conductance is observed, the self-testing may indicate a defective electrodialysis device. The self-testing may be performed prior to step i.. Alternatively or additionally, the self-testing may comprise determining the conductivity of the recirculated fluid via a sensor device in the recirculation loop and/or via the sensor device in the buffer container.

In a further aspect of the present disclosure, a use of the at least one electrodialysis device in the cleaning device for cleaning items is disclosed. The electrodialysis device is used for providing the at least one alkaline fluid and optionally the at least one acidic fluid from the aqueous medium comprising the at least one salt. The electrodialysis device is configured for bipolar membrane electrodialysis. The cleaning device comprises the at least one cleaning chamber for receiving the items and the at least one fluid application device for applying at least one cleaning fluid to the items received in the cleaning chamber as outlined in further detail above.

The process and devices according to the present disclosure provide a large number of advantages over known methods and devices of similar kind. Specifically, the cleaning device comprises the electrodialysis device, thereby providing means for preparing the cleaning fluid, specifically the alkaline fluid and the acidic fluid, directly at the site of the cleaning device. The alkaline fluid and the acidic fluid are prepared by means of electrodialysis in the electrodialysis device from the aqueous medium comprising the at least one salt. Thus, the cleaning device may be configured for producing the cleaning fluid from a single starting substance. The cleaning device may use a solution of a solid salt or a mixture of solid salts for preparing the alkaline fluid and the acidic fluid. These solid salts may, in general, facilitate handling of the cleaning device.

Further, the acidic fluid may be used in the cleaning device for various purposes. As an example, the acidic fluid may be used as a complexing agent in the cleaning device, whereby the complexing agent may enhance the cleaning performance of the alkaline fluid, specifically comprising sodium hydroxide. The acidic fluid may be used as the complexing agent in the cleaning device and, alternatively or additionally, may be used for other purposes such as for rinsing, decalcifying and/or for disinfecting. In addition, the acidic fluid may be beneficial for dispersing dirt, inhibiting corrosion, bleaching and/or for color and odor.

As an example, the salt may comprise one or more of the following: sodium citrate; MGDA; GLDA; IDS; sodium tripolypolyphosphate; sodium lactate; sodium oxalate; sodium gluconate; sodium sulphate; sodium carbonate; sodium polyacrylate. Some of the salts may have a high molecular size, for example sodium citrate, such that electrodialysis in the so-called three-stack compartment is an inefficient process. Therefore, these salts may be used in the two-stack compartment having only the acidic chamber and the alkaline chamber in the electrodialysis device. The use of salts having a high molecular size, such as sodium citrate, may be efficiently performed in the configuration of the electrodialysis device having only the acidic chamber and the alkaline chamber. An efficient process may comprise recirculating the aqueous medium comprising the at least one salt through the acidic chamber of the electrodialysis device while the aqueous medium being converted into the alkaline fluid is passed once through the alkaline chamber. In this example, sodium hydroxide as the alkaline fluid and citric acid as the acidic fluid may be efficiently prepared by the electrodialysis device. Alternatively or additionally, the alkaline fluid and the acidic fluid may be passed to a storage tank for storing the respective fluid. Thus, it may be possible to prepare the alkaline fluid and the acidic fluid prior to their use in the cleaning device or, even provided these fluids for multiple cleaning devices. Therefore, if the salt has to be refilled in the cleaning device and the electrodialysis device has to stop working, alkaline fluid and acidic fluid may still be available in the cleaning device. For cleaning devices having a large demand of cleaning fluid, storing the alkaline fluid and the acidic fluid may enable balancing a peak demand of the cleaning device for cleaning fluid. The preparation of alkaline fluid and acidic fluid may be controlled by the control device, specifically by the electrodialysis controller, by adapting the electric power provided to the electrodialysis device. Alternatively, however, the alkaline fluid and the acidic fluid may also be passed only once through the electrodialysis device and may be directly provided to the cleaning device.

The output of the electrodialysis device may be dependent on the applied electric voltage and/or the electric current density. Thus, the output of the electrodialysis device may be controllable by adjusting the applied electric voltage and/or the electric current density, preferably the electric current density. The output of the alkaline fluid and/or the acidic fluid of the electrodialysis device may be adapted to the cleaning device's demand. For example, when filling the cleaning device, specifically the washing tank, with fresh water, the alkaline fluid may have to be provided in short time to ensure a sufficient dosage of cleaning fluid in the washing tank. This may be achieved by applying a high electric current density to the electrodialysis device. Further, controlling the output of the electrodialysis device may prevent the electrodialysis device from being unnecessarily switched on and off. Thus, the operation mode of the electrodialysis device may specifically be a gentle operation mode.

Further, the control device may be configured for controlling the feeding of the alkaline fluid and/or the acidic fluid to the fluid application device, thereby keeping a concentration of the alkaline fluid and/or the acidic fluid in the cleaning compartments constant, specifically by controlling a dosing quantity of the alkaline fluid and/or the acidic fluid being fed to the fluid application device. Thus, difference in the production of the alkaline fluid and the acidic fluid in the electrodialysis device may be compensated by the control device. The concentration of alkaline fluid and/or acidic fluid in the cleaning compartments may be determined by the at least one sensor device in the at least one tank for holding the amount of cleaning fluid. The control device may be configured for receiving a signal of the sensor device and for adapting the dosing quantities of the alkaline fluid and/or the acidic fluid to ensure constant concentration of the alkaline fluid and/or the acidic fluid in the cleaning compartments.

Moreover, the alkaline fluid may be provided directly from the electrodialysis device to the washing device, specifically to the washing tank. The at least one pump in the once through flow path may be arranged upstream the electrodialysis device such that the pump may not contact the alkaline fluid prepared in the electrodialysis device. Thus, contact of the pump in the once through flow path with the alkaline fluid may be avoided. Therefore, corroding effects in the pump due to aggressive cleaning fluids can be avoided, whereby the lifespan of the pump may be prolonged.

Further, defects of the electrodialysis device may be determined automatically when starting the electrodialysis device. Upon starting the electrodiaylsis device, pumping of the aqueous medium comprising the at least one salt through the acidic chamber and/or the brine chamber of the fluidic stack may be started followed by pumping the aqueous medium through the alkaline chamber of the fluidic stack. The electric current may initially not be applied to the fluidic stack. Thus, the bipolar membrane electrodialysis may not take place in this configuration. However, electric conductance of the fluidic stack and/or the conductivity of the recirculated fluid via the sensor device in the recirculation loop and/or via the sensor device in the buffer container may be monitored, whereby a signal in the electric conductance and/or the electrical conductivity may indicate a defective fluidic stack, for example caused by a leaky membrane. It may also be possible to detect a defective membrane being closer to the anode or to the cathode. Thus, monitoring the electric conductance may be used for determining defects in the fluidic stack.

The devices according to the present disclosure may also provide means for safely neutralizing by-products of the bipolar membrane electrodialysis. For example, the degassing device may comprise the at least one catalyst for catalyzing the redox reaction of hydrogen and oxygen gases produced in the anode compartment and cathode compartment, respectively. The temperature sensor device may ensure exhaustive neutralization of hydrogen gases.

Furthermore, the cleaning device and the process for cleaning items may enhance safety and facilitate handling of cleaning devices. Specifically, an operating staff of the cleaning device may avoid any handling and contact of dangerous and/or hazardous substances.

Moreover, the acidic fluid may also be used for purpose of neutralizing wastewater of the cleaning device. As outlined above, the acidic fluid may be stored in the acid container. Thus, excessive acidic fluid that has not been used for cleaning, rinsing, disinfecting and/or decalcifying purposes may be used to neutralize the wastewater of the cleaning device when draining the cleaning device. Thus, it may be possible to lower the pH-value of the wastewater of the cleaning device to a range of from 6.5 to 9.

Further, the application of bipolar membrane electrodialysis using the electrodialysis device may enable the generation of sodium hydroxide and citric acid from a sodium citrate feed solution. The electrodialysis device may comprise a three-compartment having three chambers in each group of chambers or, alternatively, a two-compartment having two chambers in each group of chambers. The two-stack compartment may be preferred since intended transport processes may be reduced in the three-compartment configuration. Operation of the electrodialysis device in the two-compartment configuration and in batch operation mode may enable preparing the alkaline fluid, specifically a sodium hydroxide solution, with a pH value ranging in between 12.6 - 13.0 and preparing the acidic fluid, specifically an citric acid solution, with a pH value ranging in between 2.4 - 4.6 from the aqueous medium comprising the at least one salt, specifically from a sodium citrate solution with concentrations of 2 weight-% of sodium citrate. Thus, bipolar membrane electrodialysis may be able to effectively generate sodium hydroxide and citric acid from sodium citrate solution. Furthermore, operation of the electrodialysis device in a continuous operation mode may result in the generation of sodium hydroxide with a pH value up to 12.6 and citric acid with a pH value down to 5.4.

Specifically, the two-stack compartment of the electrodialysis device may allow effectively generating the alkaline fluid and the acidic fluid. The electrodialysis device may be operated under various operating conditions, such as with fixed electric potential and fixed current density, and various operation modes, such as the batch operation mode, the continuous operation and/or the semi-batch operation mode, indicating the high flexibility of the devices according to the present disclosure.

Further, the bipolar membrane electrodialysis performed in the electrodialysis device may enable production of the alkaline fluid, specifically sodium hydroxide, and of the acidic fluid, specifically citric acid, from the aqueous medium comprising the at least one salt, specifically from sodium citrate solution, with high sodium hydroxide concentrations, high sodium hydroxide production rates and also high conversion efficiencies. The electrodialysis device may be operated in the batch operation mode, the continuous operation mode or the semi-batch operation mode. Specifically, the continuous operation mode and the semi-batch operation mode may enable high current densities resulting in higher sodium hydroxide concentrations in the produced alkaline fluid, as well as higher sodium hydroxide production rates. However, the energy consumption may increase for higher current densities. For the continuous operation mode, an increase in current density may also result in higher conversion efficiencies. However, for higher concentrations of sodium citrate in the aqueous medium comprising the at least one salt and using the continuous operation mode, the conversion efficiency may decrease, because the additional amount of sodium may not be converted to sodium hydroxide for the set flow rates of 1 L/h for the aqueous medium comprising the at least one salt and the applied electric current densities of 100, 200 and 400 A/m². The conversion efficiency may be in the range from 5 - 28% for the continuous operation mode and for the used concentration of sodium citrate in the aqueous medium. On the contrary, the conversion efficiency may be at least 76% for the semi-batch operation mode and at the applied electric current densities of 100, 200 and 400 A/m² and at sodium citrate concentrations of 2, 10, 20 and 35 weight-%. Therefore, operation of the electrodialysis device in semi-batch operation mode may be preferred over continuous operation mode, as both high sodium concentrations concentration of 0.7 mol/L and production rates up to 0.5 g/min may be achieved, while also having high conversion efficiencies for the used sodium citrate concentrations. Moreover, the energy consumption to produce sodium hydroxide by using bipolar membrane electrodialysis from sodium citrate solutions ranged in between 1 - 3 kWh/kg-NaOH, which may be lower than the continuous operation mode and batch operation mode. Finally, a production of 3 g/min of sodium hydroxide may be achieved by using the electrodialysis device having an electrode area of at least 200 cm² and at least 20 groups of chambers.

The production of sodium hydroxide and citric acid from sodium citrate may be a function of the electric current density and the concentration of sodium citrate in the initial aqueous medium. The results showed that increasing the electric current density may result in an increase in the sodium hydroxide concentration and sodium hydroxide production rate, while also the energy consumption increases. Moreover, both operation in the continuous operation mode and the semi-batch operation mode may be beneficial for maximizing the sodium hydroxide concentration and production rate, as well as the conversion efficiency. In the continuous operation mode, it may be possible to achieve high sodium hydroxide concentrations up to 1.3 mol/L and high production rates up to 0.9 g/min. However, when higher concentrations of sodium citrate, for example 10, 20 and 35 weight-%, are used, the conversion efficiency may be in the range of 5 - 49%. In case of using 2 weight-% sodium citrate, the high conversion efficiencies may reach up to 89%. However, in practice a sodium citrate concentration of 35 weight-% may be desirable and operation in the semi-batch mode operation may be preferred. In the semi-batch operation mode, sodium hydroxide concentrations up to 0.7 mol/L and production rates up to 0.5 g/min may be achieved, while the conversion efficiency may be at least 76%. Thus, the semi-batch operation mode may be preferred over the continuous operation mode to achieve an efficient process. Increasing the sodium hydroxide production rate up to 3 g/min may be achieved by increasing both the electrode area to at least 200 cm² and the number of groups of chambers to at least 20.

However, for achieving a sodium hydroxide production rate of 3 g/min, various factors have to be considered. One possibility may be increasing the electric current density up to 1,200 - 2,400 A/m². In this example, the applied electric potential would also increase based on Ohm's Law and exceed 100 V. Because for the practical application a maximum electric potential of 42 V is feasible, this possibility is not preferred, but nevertheless possible. Another possibility to achieve sodium hydroxide production rate of 3 g/min may be using of at least sixty groups of chambers at a current density of at least 200 A/m², or even 400 A/m². However, increasing the number of the groups of chambers will again lead to an increase of the applied electric potential higher than 100 V. Thus, this possibility is not preferred, but nevertheless possible. A further possibility of achieving a sodium hydroxide production rate of 3 g/min may be providing a larger electrode area of 200 cm², which allows for more sodium transport at the same electric current density. Furthermore, the number of groups of chambers may be increased up to 20 groups of chambers, however, keeping the applied electric potential remains below 42 V. In this example, an applied electric current density of 200 A/m² in the semi-batch operation mode may enable sufficient conversion of 35 weight-% sodium citrate to sodium hydroxide and citric acid.

Thus, summarizing, the cleaning device according to the present disclosure, specifically the electrodialysis device, may be configured for efficiently producing the alkaline fluid, specifically sodium hydroxide, for example in the semi-batch operation mode. As an example, sequestrant salts may be used for producing the sodium hydroxide. However, other salts as indicated above may also be possible. Additionally, it may be possible to provide at least one of the aqueous medium comprising the at least one salt and the acidic fluid at least partially comprising the at least one salt to the cleaning device, specifically to the fluid application device, for using the sequestration power of the salt in the washing process. In the cleaning device, as an example, the alkaline fluid and the acidic fluid may be applied to the items to be cleaned in an alternating manner which may improve cleaning performance. Specifically in the semi-batch operation mode, it may be not necessary to wait for a complete conversion of the aqueous medium comprising the at least one salt into the acidic fluid, instead, however, the cleaning process may be started when the electrodialysis device is starting operation. Additionally, a combination of the buffer container and the brine container may enable refilling the aqueous medium comprising the at least one salt into the brine container while the cleaning device, specifically the electrodialysis device, is running and the acidic fluid is recirculated via the buffer container. Further, it may be possible to automatically use the acidic fluid for deliming one or more of the cleaning device and the items to be cleaned as acidic fluid is available in the acid container and/or the buffer container. The dosing of the alkaline fluid and the acidic fluid in the fluid application device may be controllable by determining a conductivity of the cleaning fluid being fed to the fluid application device. Thus, it may be possible to deliver always an appropriate amount of alkaline fluid and acidic fluid to the fluid application device. Finally, safety is improved since only non-hazardous substances may be used for preparing the alkaline fluid and the acidic fluid.

The cleaning device and the process for cleaning items according to the present disclosure may specifically overcome the general need for transporting and/or using hazardous substances in the field of cleaning devices. Specifically, the cleaning device may be operated without the need for external supply of liquid cleaning chemicals which are generally corrosive and, thus, may pose a risk for the operating staff of the cleaning device. Further, the cleaning device may be operated without the need for external supply of solid cleaning chemicals comprising sodium hydroxide. Theses solid cleaning chemicals may also be classified as hazardous substances and therefore typically have severe drawbacks in terms of transport and storage, similar to liquid cleaning chemicals. Additionally, the risk for the operating staff generally remains when using solid cleaning chemicals comprising sodium hydroxide since cartridges containing these solid chemicals have to be manually changed, specifically implying risks due to improper handling of the cartridges. Further, the cleaning device according to the present disclosure may also be operated without the need for using solid cleaning chemicals comprising carbonates and/or silicates. These cleaning chemicals may still be classified as irritant and may not show the same cleaning performance compared with cleaning chemicals comprising sodium hydroxide. The cleaning device and the method according to the present invention, specifically the concept of in-situ preparing the alkaline fluid and/or the acidic fluid within the cleaning device, may at least partially address these technical challenges. The device and process according to the present invention may avoid an external supply of hazardous materials such as a liquid solution of sodium hydroxide. Instead, non-hazardous salts may be supplied, which may specifically be safe and easy in handling, transport and storage, for preparing, specifically in-situ-preparing, the alkaline fluid and the acidic fluid for use in the cleaning fluid. Specifically, the cleaning device may be configured for preparing, specifically in-situ-preparing, sodium hydroxide from the aqueous solution comprising the at least one salt, whereby the same cleaning performance may be achieved compared with known liquid or solid cleaning chemicals comprising sodium hydroxide. The operating staff of the cleaning device may, thus, avoid getting in contact with the prepared alkaline fluid and acidic fluid. Furthermore, waste water of known cleaning devices may often have a high pH value, such a pH value of at least 10 or even more. The cleaning device according to the present disclosure may be configured for feeding at least a part of the acidic fluid to the drain of the cleaning device for at least partially neutralizing the used cleaning fluid, including the option of lower the pH value and/or the option of getting the pH value closer to 7, and, therefore may avoid problematic waste water.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a first embodiment of an electrodialysis device in a schematic view;
- Figure 2: shows a second embodiment of an electrodialysis device in a schematic view;
- Figure 3: shows an embodiment of flow paths through an electrodialysis device;
- Figures 4A to 4C: show different operation modes of an electrodialysis device;
- Figure 5: shows a first embodiment of a cleaning device for cleaning items in a schematic view;
- Figure 6: shows a second embodiment of a cleaning device for cleaning items in a schematic view;
- Figures 7 to 10B: show diagrams of an evolution of pH value (Figures 7, 8B, 9A and 10A) and of electrical conductivity (Figure 8A, 9B, 10B) of an acidic fluid and an alkaline fluid during operation of an electrodialysis device;
- Figure 11A to 12D: show diagrams of sodium hydroxide concentrations in an alkaline fluid (Figures 11A and 12 A), sodium hydroxide production rate (Figures 11B and 12B), energy consumption (Figure 11C and 12C) and conversion efficiency (Figures 11D and 12D) as a function of a ratio of at least one salt in an aqueous medium and of applied electric current densities;
- Figure 13: shows a diagram of electrical conductivity of an alkaline fluid as a function of sodium hydroxide concentration;
- Figure 14: shows an embodiment of a cleaning chamber in a sectional view;
- Figure 15: shows a flow chart of a process of cleaning items; and
- Figures 16A and 16B: show diagrams of an evolution of electrical conductivity of an alkaline fluid (Figure 11A) and of pH value of an acidic fluid (Figure 11B) for two different salts as a function of time.

### Detailed description of the embodiments

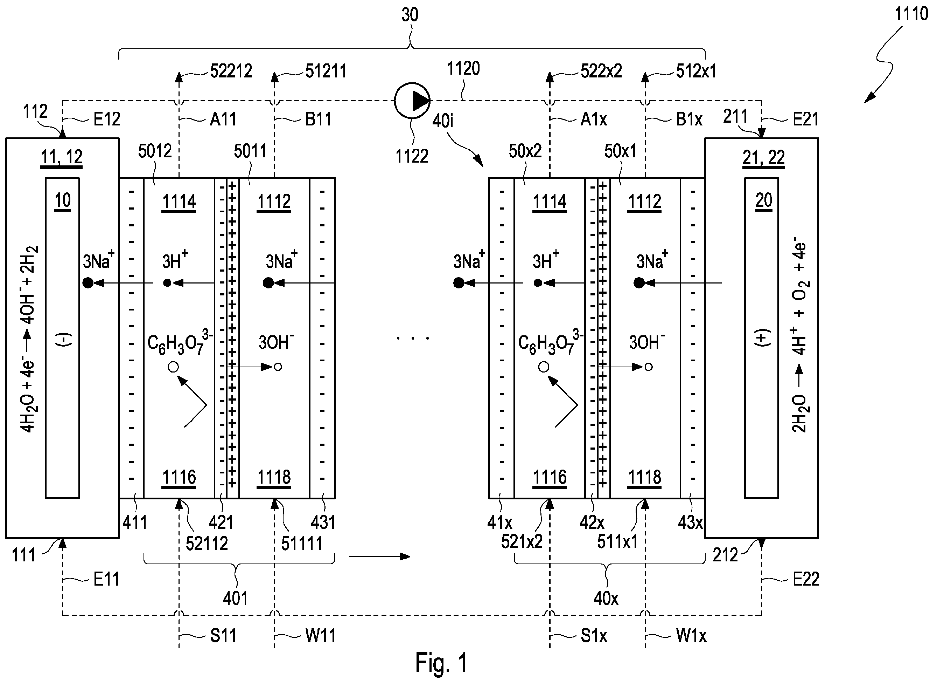

Figure 1 shows an exemplary embodiment of an electrodialysis device 1110 in a schematic view. The electrodialysis device 1110 is configured for preparing at least one alkaline fluid 1112 and at least one acidic fluid 1114 from an aqueous medium comprising at least one salt 1116, specifically a solution of the at least one salt, by using bipolar membrane electrodialysis. The electrodialysis device 1110 comprises a fluidic stack 30, a cathode compartment 11 and an anode compartment 21. As can be seen in Figure 1, the fluidic stack 30 is disposed in between the cathode compartment 11 and the anode compartment 21.

The fluidic stack 30 may comprise a plurality of stacked groups of chambers 40i, wherein i = 1, ... , x. Specifically, the fluidic stack 30 may comprise a plurality of repetitively iterating and essentially identical stacked groups comprising two or three chambers 50ik, wherein k = 1, 2 or 3. As shown in Figure 1, each stacked group of chambers 40i of the fluidic stack 30 comprises two chambers 50ik.

The fluidic stack 30 comprises at least one acidic chamber 50i2 having at least one acidic outlet 522i2 for providing the acidic fluid 1114. The acidic chamber 50i2 may further comprise at least one acidic chamber inlet 521i2 for streaming fluid through the acidic chamber 50i2. As shown in Figure 1, the acidic chamber inlet 521i2 may be configured for passing a stream S1i of the aqueous medium comprising the at least one salt 1116 into the acidic chamber 50i2. The aqueous medium comprising the at least one salt 1116 may be converted into the at least one acidic fluid 1114 in the acidic chamber 50i2 by using bipolar membrane electrodialysis. The acidic outlet 522i2 may be configured for removing a stream A1i of the at least one acidic fluid 1114 from the acidic chamber 50i2.

Further, the fluidic stack 30 comprises at least one alkaline chamber 50i1 having at least one alkaline outlet 512i1 for providing the alkaline fluid 1112. The alkaline chamber 50i1 may also comprise at least one alkaline chamber inlet 511i1 for streaming fluid through the alkaline chamber 50i1. The alkaline chamber inlet 511i1 may be configured for passing a stream W1i of an aqueous medium 1118 into the alkaline chamber 50i1, specifically for passing a stream of water. The aqueous medium 1118 may be converted into the at least one alkaline fluid 1112 in the alkaline chamber 50i1 by using bipolar membrane electrodialysis. The alkaline outlet 512i1 may be configured for removing a stream B1i of the at least one alkaline fluid 1112 from the alkaline chamber 50i1.

The fluidic stack 30 further comprises at least one bipolar membrane 42i separating the acidic chamber 50i2 and the alkaline chamber 50i1. The bipolar membrane 42i enables bipolar ion exchange between the acidic chamber 50i2 and the alkaline chamber 50i1. Each stacked group of chambers 40i may walled on opposing sides by a cation exchange membrane on the cathode side 41i and a cation exchange membrane on the anode side 43i. The cation exchange membranes 41i, 43i may enable cation exchange between the respective group of chambers 40i and at least one of: a neighboring group of chambers 40i, the anode compartment 21 and the cathode compartment 11.

Further, the aqueous medium comprising the at least one salt 1116, specifically the solution of the at least one salt, may comprise a sodium salt of a polybasic carboxylic acid. Thus, the at least one acidic fluid 1114 may comprise the aqueous medium comprising the polybasic carboxylic acid. The polybasic carboxylic acid may comprise a dicarboxylic acid or a tricarboxylic acid or a mixture of a dicarboxylic acid and a tricarboxylic acid, wherein the polybasic carboxylic acid may preferably comprise, more preferably may consist of, a tricarboxylic acid, wherein more preferably, the polybasic carboxylic acid may be citric acid. The sodium salt of the polybasic carboxylic acid may comprise monosodium citrate or disodium citrate or trisodium citrate or a mixture of two or more thereof, wherein the sodium salt of the polybasic carboxylic acid may preferably comprise, more preferably may be, trisodium citrate.

The cathode compartment 11 comprises at least one cathode electrode 10. The cathode compartment 11 is separated from the fluidic stack 30 by the at least one cation exchange membrane 411 enabling cation exchange between the cathode compartment 11 and the fluidic stack 30. However, other membranes, such as other ion exchange membranes or bipolar membranes, may also be feasible for separating the cathode compartment 11 and the fluidic stack 30. The cathode compartment 11 further comprises at least one cathode chamber 12 for receiving a cathode rinsing fluid. The cathode electrode 10 is disposed in the cathode chamber 12. The cathode chamber 12 may comprise at least one cathode chamber inlet 111 for passing the cathode rinsing fluid into the cathode chamber 12 and at least one cathode chamber outlet 112 for removing the cathode rinsing fluid from the cathode chamber 12.

The anode compartment 21 comprises at least one anode electrode 20. The anode compartment 21 is separated from the fluidic stack 30 by the at least one cation exchange membrane 43x enabling cation exchange between the anode compartment 21 and the fluidic stack 30. However, other membranes, such as other ion exchange membranes or bipolar membranes, may also be feasible for separating the anode compartment 21 and the fluidic stack 30. The anode compartment 21 comprises at least one anode chamber 22 for receiving an anode rinsing fluid. The anode electrode 20 is disposed in the anode chamber 22. The anode chamber 22 may comprise at least one anode chamber inlet 211 for passing the anode rinsing fluid into the anode chamber 22 and at least one anode chamber outlet 212 for removing the anode rinsing fluid from the anode chamber 22.

The cathode chamber 12 and the anode chamber 22 are connected via at least one electrode rinse fluid path 1120. The electrode rinse fluid path 1120 may be a loop, specifically a closed loop. The electrodialysis device 1110 may further comprise at least one circulation pump 1122 for circulating at least one electrode rinsing fluid through the loop. The electrode rinsing fluid may specifically comprise the cathode rinsing fluid and the anode rinsing fluid. The circulation pump 1122 may be configured for circulating a stream of the cathode rinsing fluid through the cathode chamber 12. The stream of the cathode rinsing fluid may comprise a stream of the cathode rinsing fluid E11 into the cathode chamber 12 and a stream of the cathode rinsing fluid E12 from the cathode chamber 12. The circulation pump 1122 may further be configured for circulating a stream of the anode rinsing fluid through the anode chamber 22. The stream of the anode rinsing fluid may comprise a stream of anode rinsing fluid E21 into the anode chamber 22 and a stream of the anode rinsing fluid E22 from the anode chamber 22.

The cathode electrode 10 and the anode electrode 20, each, may have an electrode area of at least 50 cm², specifically an electrode area of 50 cm² to 400 cm², more specifically an electrode area of 100 cm² to 300 cm², most specifically an electrode area of 200 cm². The area of the bipolar membrane 42i and the cation exchange membranes 41i, 43i may correspond to the electrode area of the cathode electrode 10 and the anode electrode 20.

The bipolar membrane electrodialysis may comprise using an applied electric field. Specifically, an electric voltage of less than 50 V may be applied in between the cathode electrode 10 and the anode electrode 20, more specifically an electric voltage of 42 V or less. The applied electric field may drive the bipolar membrane electrodialysis, specifically by separating ions being present in the aqueous medium comprising the at least one salt 1116 of the acidic chamber 50i2 and the aqueous medium 1118 of the alkaline chamber 50i1. As a consequence of the separation of ions, the bipolar membrane electrodialysis may further involve a conversion of the aqueous medium comprising the at least one salt 1116 into the at least one acidic fluid 1114 and a conversion of the aqueous medium 1118 into the at least one alkaline fluid 1112. An electric current density may be kept constant at a value in the range of 10 A/m² to 1500 A/m², specifically of 100 A/m² to 1000 A/m², more specifically of 200 A/m² to 400 A/m².

Specifically, the bipolar membrane electrodialysis may comprise at least two conversion reactions, wherein the two conversion reactions may be performed separate from each other in two different chambers 50ik of the electrodialysis device 1110. The bipolar membrane electrodialysis may comprise at least one first conversion reaction to form the at least one alkaline fluid 1112, wherein the first conversion reaction may comprise an interaction of the cation of the at least one salt with at least one hydroxide ion, and at least one second conversion reaction to form the at least one acidic fluid 1114, wherein the second conversion reaction may comprise an interaction of the anion of the at least one salt with at least one hydrogen cation. For example, the first conversion reaction may comprise an interaction of the cation of the sodium salt of the polybasic carboxylic acid with at least one hydroxide ion to form sodium hydroxide and the second conversion reaction may comprise an interaction of the anion of the sodium salt of the polybasic carboxylic acid with at least one hydrogen cation to form the polybasic carboxylic acid. The first conversion reaction may be performed in the acidic chamber 50i2, whereas the second conversion reaction may be performed in the alkaline chamber 50i1. Thus, the two conversion reactions may be separated from each other by the bipolar membrane 43i in the electrodialysis device 1110.

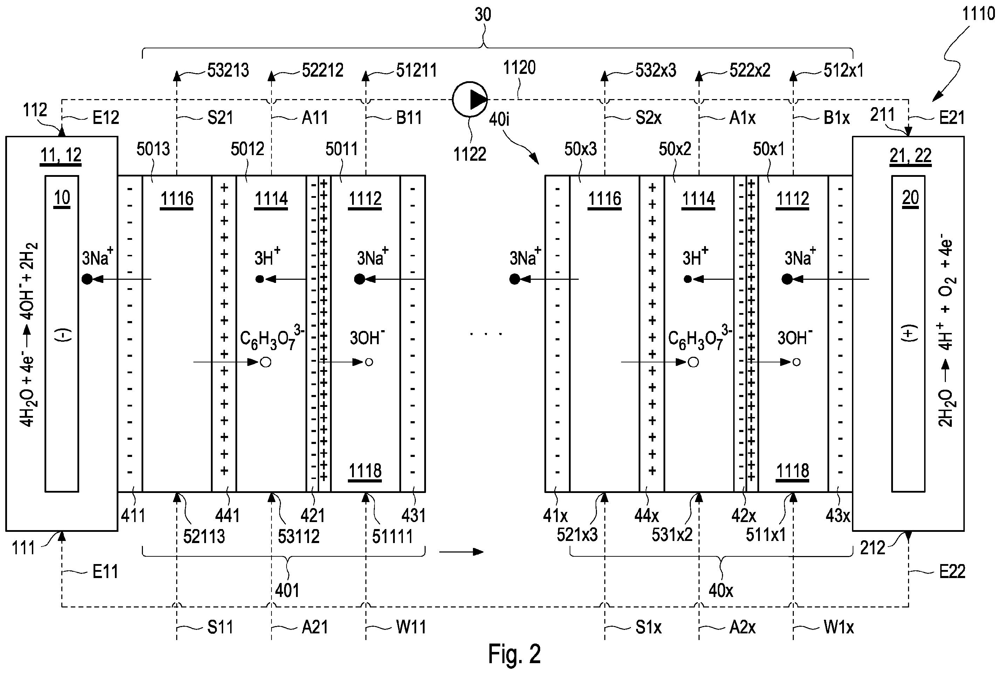

Additionally, the fluidic stack 30 may comprise at least one brine chamber 50i3. Such an alternative embodiment of the fluidic stack 30 can be seen in Figure 2, in which a second exemplary embodiment of the electrodialysis device 1110 is shown in a schematic view.

The brine chamber 50i3 may be configured for receiving the aqueous medium comprising the at least one salt 1116, specifically the solution of the at least one salt. Specifically, the brine chamber 50i3 may comprise at least one brine chamber inlet 521i3 for streaming fluid through the brine chamber 50i3. The brine chamber 50i3 may have at least one brine outlet 532i3 for providing the aqueous medium comprising the at least one salt 1116, specifically the solution of the at least one salt. Thus, in this exemplary embodiment of the electrodialysis device 1110, the brine chamber inlet 521i3 may be configured for passing the stream S1i of the aqueous medium comprising the at least one salt 1116 into the brine chamber 50i3. The brine outlet 532i3 may be configured for removing a stream S2i of the aqueous medium comprising the at least one salt 1116 from the brine chamber 50i3.

As can be seen in Figure 2, the fluidic stack 30 may further comprise at least one anion exchange membrane 44i separating the brine chamber 50i3 and the acidic chamber 50i2. The anion exchange membrane 44i may enable anion exchange between the brine chamber 50i3 and the acidic chamber 50i2. Specifically, the anions of the at least one salt, specifically the polybasic carboxylic acid of the at least one salt, may be transported through the anion exchange membrane 44i into the acidic chamber 50i2. Similarly to the bipolar membrane 42i and the cation exchange membranes 41i, 43i, the area of the anion exchange membrane 44i may correspond to the electrode area of the cathode electrode 10 and the anode electrode 20.

In the exemplary embodiment shown in Figure 2, the acidic chamber inlet is denoted by reference number 531i2. In this example, the acidic chamber inlet 531i2 may be configured for passing a stream A2i of the at least one acidic fluid 1114 into the acidic chamber 50i2. Alternatively, a stream of an aqueous medium may be passed into the acidic chamber 50i2 via the acidic chamber inlet 531i2. However, in the configuration of Figure 2, the acidic fluid 1114 removed from the acidic chamber 50i2 may be more acidic than the acidic fluid 1114 provided to the acidic chamber 50i2, e.g. having a lower pH-value.

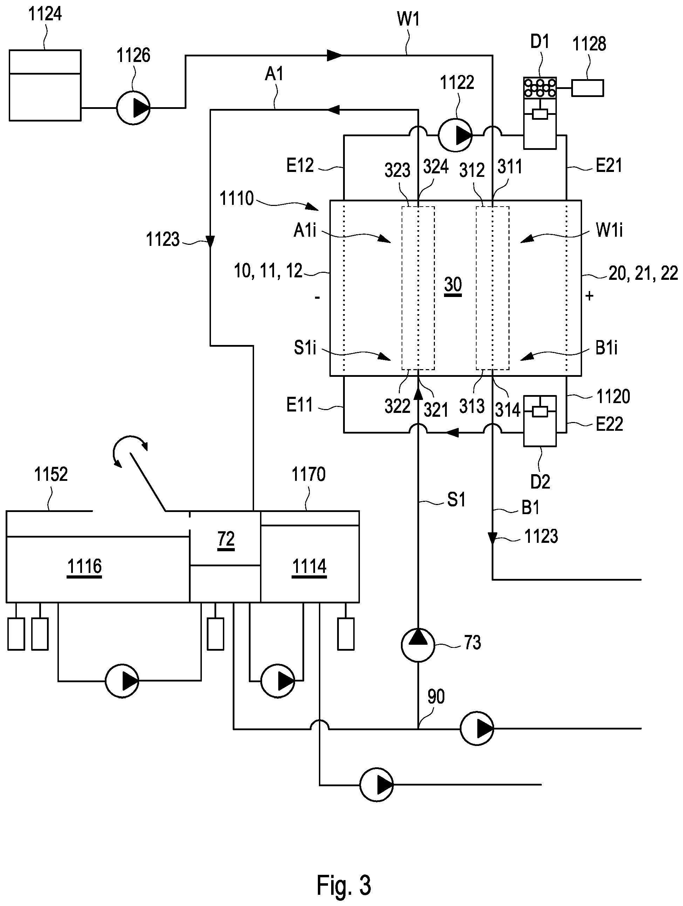

In Figure 3, an exemplary embodiment of flow paths through the electrodialysis device 1110 is shown in a schematic view. The electrodialysis device 1110 shown in Figure 3 may be embodied as explained above in the context of Figure 1. It shall be noted, however, that other embodiments of the electrodialysis device 1110 are also feasible in conjunction with Figure 3, for example the embodiment of the electrodialysis device 1110 of Figure 2 and/or other embodiments of the electrodialysis device 1110. The streaming directions of the fluids, which are indicated in Figure 3 by arrows 1123, are only exemplarily shown in Figure 3. However, streaming directions opposing the shown streaming directions are also feasible, for example, such that a flow of the fluids through the electrodialysis device 1110 in parallel can be achieved.

The electrodialysis device 1110 may comprise at least two different flow paths, wherein in a first flow path, an incoming stream W1 of the aqueous medium 1118 may be passed through the fluidic stack 30, thereby being converted into a combined stream B1 of the at least one alkaline fluid 1112, wherein in a second flow path, an incoming stream S1 of the aqueous medium comprising the at least one salt 1116 may be passed through the fluidic stack 30, thereby being converted into a combined stream A1 of the at least one acidic fluid 1114. As an example, the incoming stream W1 of the aqueous medium 1118 may be provided to the electrodialysis device 1110 from a container 1124 by means of a pump 1126. However, other options, such as a supply for providing the aqueous medium 1118 directly to the electrodialysis device 1110 may also be possible. Further, the incoming stream S1 of the aqueous medium comprising the at least one salt 1116 may be provided from a buffer container 72 by means of a pump 73. The second low path may comprise at least one separation device 90 for dividing the stream S1 in the direction of the fluidic stack 30 and/or in another direction, for example in the direction of a cleaning device, as will be outlined in further detail below.

As outlined above, the fluidic stack 30 may comprise a plurality of the acidic chambers 50i2, a plurality of the alkaline chambers 50i1 and a plurality of the bipolar membranes 43i, and optionally a plurality of the brine chambers 50i3 and a plurality of the anion exchange membranes 44i. However, in this exemplary embodiment, the fluidic stack 30 may be embodied as shown in Figure 1, i.e. only with the plurality of the acidic chambers 50i2 and the plurality of the alkaline chambers 50i1.

As can be seen in Figure 3, the plurality of the acidic chambers 50i2 may be fluidically connected to at least one common acidic outlet 324 and the plurality of the alkaline chambers 50i1 may be fluidically connected to at least one common alkaline outlet 314. Optionally, the plurality of brine chambers 50i3 may be fluidically connected to at least one common brine outlet which is not shown in Figure 3.

The plurality of the alkaline chambers 50i1 may be fluidically connected to at least one common alkaline inlet 311. The common alkaline inlet 311 may be configured for providing the aqueous medium 1118, specifically water, to the alkaline chamber inlets 511i1 which may be comprised by each alkaline chamber 50i1. Specifically, the common alkaline inlet 311 may comprise a dividing device 312 configured for dividing the incoming stream W1 of the aqueous medium 1118 into the streams W1i of the aqueous medium 1118 into the alkaline chambers 50i1. Thus, the common alkaline inlet 311 may be configured for providing at least a part of the incoming stream W1 of the aqueous medium to each of the alkaline chambers 50i1, specifically via the alkaline chambers inlets 511i1.

The common alkaline outlet 314 may be configured for providing the at least one alkaline fluid 1112 prepared in the electrodialysis device 1110, specifically the at least one combined stream B1 of the at least one alkaline fluid 1112. The common alkaline outlet 314 may be configured for combining the alkaline fluid 1112 provided by the alkaline outlets 512i1 of each alkaline chamber 50i1. For example, the common alkaline outlet 314 may also comprise a combining device 313 for combining the streams B1i of the at least one alkaline fluid 1112 from the plurality of alkaline chambers 50i1 to the combined stream B1 of the at least one alkaline fluid 1112.

Further, the plurality of the acidic chambers 50i2 may be fluidically connected to at least one common acidic inlet 321. The common acidic inlet 321 may be configured for providing the aqueous medium comprising the at least one salt 1116 to the at least one acidic chamber inlet 521i2 which may be comprised by each acidic chamber 50i2. Specifically, the common acidic inlet 321 may comprise a dividing device 322 configured for dividing an incoming stream S1 of the aqueous medium comprising the at least one salt 1116 or, alternatively, of the acidic fluid 1114, into the acidic chambers 50i2. Thus, the common acidic inlet 321 may be configured for providing at least a part of the incoming stream S1 of the aqueous medium comprising the at least one salt 1116 to each of the acidic chambers 50i2, specifically via the acidic chambers inlets 521i2.

The common acidic outlet 324 may be configured for providing the at least one acidic fluid 1114 prepared in the electrodialysis device 1110, specifically the at least one combined stream A1 of the at least one acidic fluid 1114. Specifically, the common acidic outlet 324 may be configured for combining the acidic fluid 1114 provided by the acidic outlets 522i2 of each acidic chamber 50i2. For example, the common acidic outlet 324 may also comprise a combining device 323 for combining the streams A1i of the at least one acidic fluid 1114 from the plurality of acidic chambers 50i2 to the combined stream A1 of the at least one acidic fluid 1114.

Further, as shown in Figure 3, the electrode rinse fluid path 1120 may further comprise at least one degassing device D1, D2. For example, the electrode rinse fluid path 1120 may comprise one degassing device D1 in between the cathode compartment 11 and the anode compartment 21 and one degassing device D2 in between the anode compartment 21 and the cathode compartment 11. The degassing device D1 may comprise at least one catalyst, specifically at least one hydrogen combustion catalyst, for catalyzing a redox reaction of gases produced in the anode compartment 21 with gases produced in the cathode compartment 11, specifically of hydrogen and oxygen or, alternatively, for catalyzing a redox reaction of gases produced in the cathode compartment 11 with gases of an environment or surrounding of the degassing device D1. The catalyst may specifically comprise at least one platinum group metal, preferably one or more of platinum, rhodium and palladium, more preferably palladium. The platinum group metal may preferably be supported in an inert support material, preferably on an oxidic material comprising one or more of aluminum, titanium and silicon, more preferably aluminum, the oxidic material more preferably comprising alumina. Further, the degassing device D1 may comprise at least one sensor device 1128, specifically at least one sensor device 1128 selected from the group consisting of a temperature sensor, a pressure sensor, a hydrogen sensor and an oxygen sensor. The sensor device 1128 may specifically be configured for monitoring the redox reaction. For example, the temperature sensor may be configured for monitoring a temperature in the degassing device D1, wherein the temperature may be indicative of the redox reaction taking place in the degassing device D1.

Other options for the degassing device are also feasible. For example, the degassing devices D1, D2 may further comprise at least one of: a sparking device; a frit; specifically a frit made of a porous ceramic material; a fan, specifically a fan for diluting a hydrogen level below an explosive level; an open container, specifically an open container for degassing the electrode rinse fluid contained in the open container. Alternatively or additionally, the degassing device D1 may comprise at least one hydrogen trap.

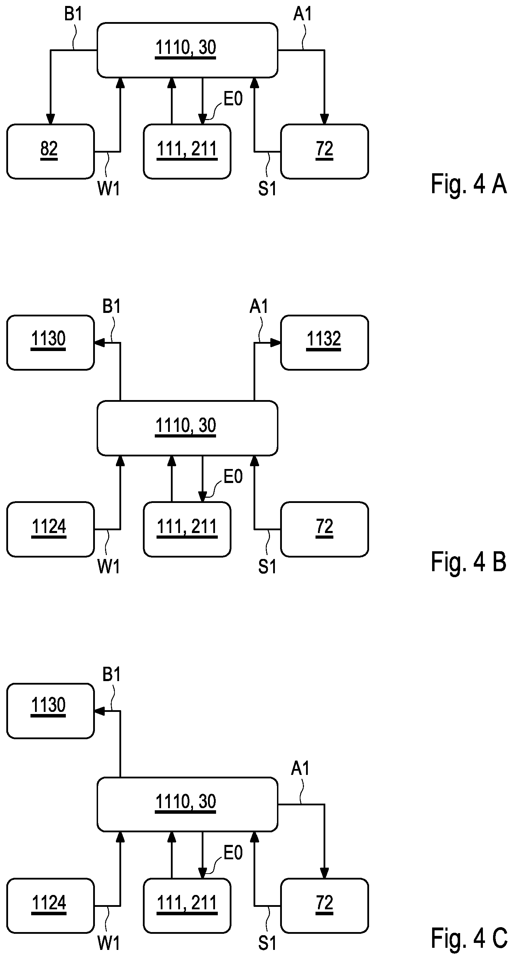

Figures 4A to 4C show schematically different operation modes of the electrodialysis device 1110. In a first operation mode, shown in Figure 4A, the streams as described above may be guided repeatedly through the fluidic stack 30 of the electrodialysis device 1110, which is referred to as "batch operation mode". Specifically, the incoming stream W1 of the aqueous medium 1118 may be passed from a container 82 to the fluidic stack 30 and the combined stream B1 of the at least one alkaline fluid 1112 may be passed back to the container 82. Thus, the fluid being repeatedly guided through the fluidic stack 30 as the incoming stream W1 of the aqueous medium 1118 may at least partially comprise the alkaline fluid 1112. The incoming stream S1 of the aqueous medium comprising the at least one salt 1116 may passed from the buffer container 72 to the fluidic stack 30 and the combined stream A1 of the at least one acidic fluid 1114 may be passed back to the buffer container 72. Thus, the fluid being repeatedly guided through the fluidic stack 30 as the incoming stream S1 of the aqueous medium comprising the at least one salt 1116 may at least partially comprise the acidic fluid 1114.

In a second operation mode, shown in Figure 4B, the streams may be guided only once through the fluidic stack 30 of the electrodialysis device 1110, which is also referred to as "continuous operation mode". Specifically, the incoming stream W1 of the aqueous medium 1118 may be passed from the container 1124 to fluidic stack 30 and the combined stream B1 of the at least one alkaline fluid 1112 may be passed forward to another device 1130, for example to a washing device as will be outlined in further detail below. The incoming stream S1 of the aqueous medium comprising the at least one salt 1116 may be passed from the buffer container 72 to the fluidic stack 30 and the combined stream A1 of the at least one acidic fluid 1114 may be passed forward to another device 1132, for example to an acidic container and/or to the washing device as will be outlined in further detail below.

In a third operation mode, shown in Figure 4C, a part of the streams may be guided repeatedly through the fluidic stack 30 of the electrodialysis device 1110, whereas another part of the streams may be guided only once through the fluidic stack 30, which is also referred to as "semi-batch operation mode". For example, the incoming stream W1 of the aqueous medium 1118 may be passed from the container 1124 to the fluidic stack 30 and the combined stream B1 of the at least one alkaline fluid 1112 may be passed forward to the other device 1130. The incoming stream S1 of the aqueous medium comprising the at least one salt 1116 may be passed from the buffer container 72 to the fluidic stack 30 and the combined stream A1 of the at least one acidic fluid 1114 may be passed back to the buffer container 72. Thus, the fluid being repeatedly guided through the fluidic stack 30 as the incoming stream S1 of the aqueous medium comprising the at least one salt 1116 may at least partially comprise the acidic fluid 1114. However, other options for operating the electrodialysis device 1110, such as a circulating of the alkaline fluid 1112, as exemplarily shown in Figure 4A, and a once through flow of the acidic fluid 1114, as exemplarily shown in Figure 4B, may also be feasible.

A possible drawback of the batch operation mode may rely in the fact that sodium hydroxide may be able to diffuse back to the aqueous medium comprising the at least one salt 1116 and/or the acidic fluid 1114, which will affect the energetic efficiency of the process. However, diffusion can be limited by avoiding the recirculation of the alkaline fluid 1112, as for example in the continuous operation mode of Figure 4B and in the semi-batch operation mode of Figure 4C.

In the operation modes of Figures 4A to 4C, a stream E0 of the electrode rinsing fluid is guided through the electrodialysis device 1110, specifically through the cathode compartment 11 and the anode compartment 21, in between the cathode chamber inlet 111 and the anode chamber inlet 211.

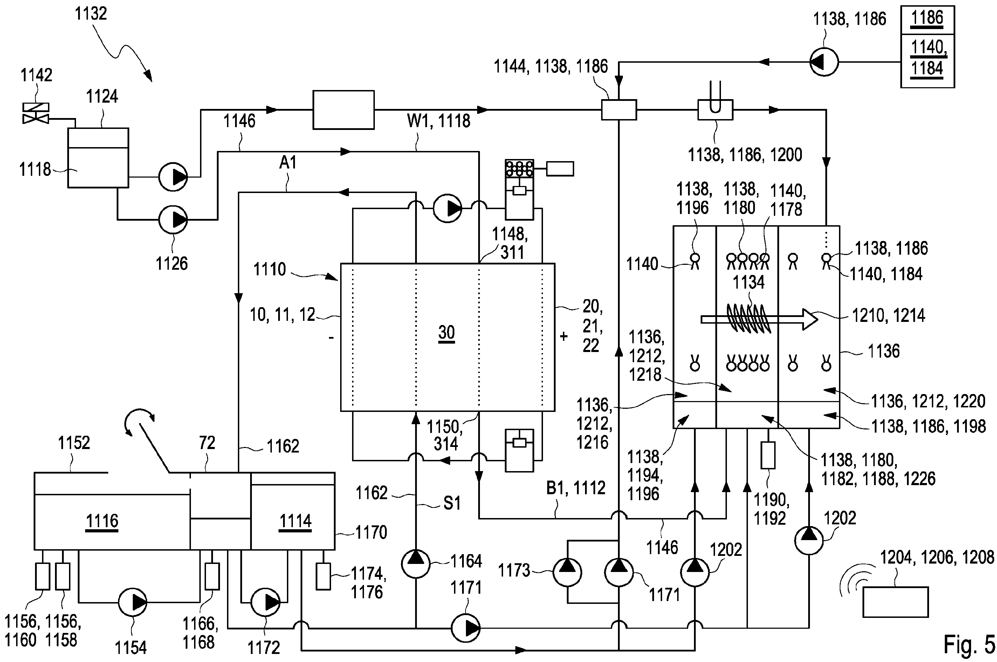

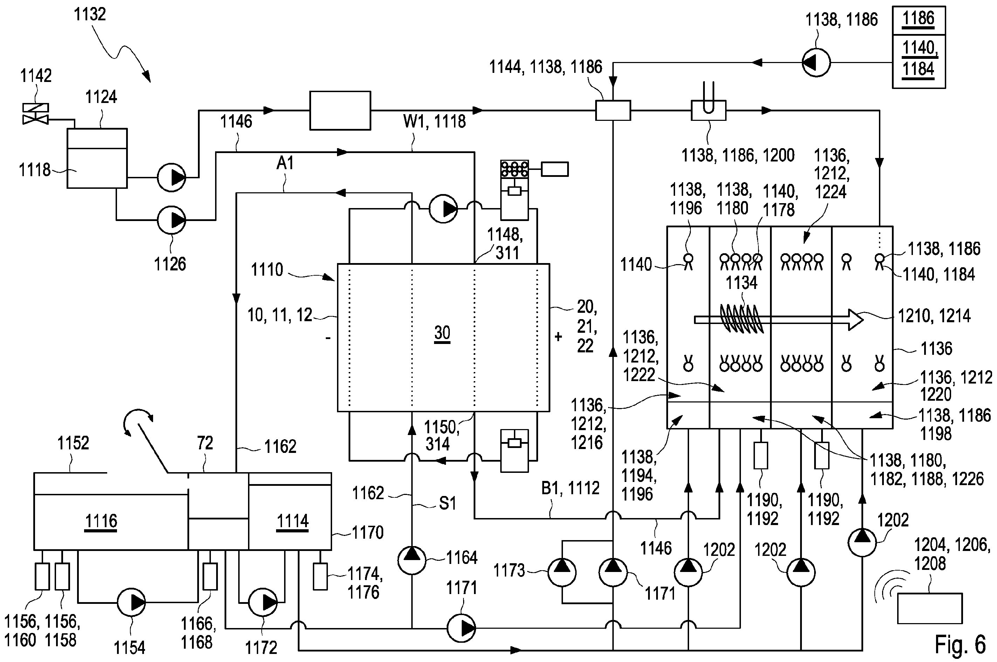

In Figures 5 and 6, different exemplary embodiments of a cleaning device 1132 for cleaning items 1134 are shown in a schematic view. In the following, the exemplary embodiments of the cleaning device 1132 of Figures 5 and 6 are described in conjunction.

The cleaning device 1132 comprises:
a. at least one cleaning chamber 1136 for receiving the items 1134;
b. at least one fluid application device 1138 for applying at least one cleaning fluid 1140 to the items 1134 received in the cleaning chamber 1136; and
c. the at least one electrodialysis device 1110 configured for preparing the at least one alkaline fluid 1112 and the at least one acidic fluid 1114 from the aqueous medium comprising at least one salt 1116, specifically a solution of at least one salt, by using bipolar membrane electrodialysis.

The cleaning device 1132 is configured for feeding at least a part of the alkaline fluid 1112 to the fluid application device 1138, specifically for use in the cleaning fluid 1140.

The electrodialysis device 1110 may specifically be embodied as explained above in the context of Figure 1. It shall be noted, however, that other embodiments of the electrodialysis device 1110 are also feasible in conjunction with the cleaning devices 1132 of Figures 5 and 6, such as the embodiment of the electrodialysis device of Figure 2 and/or other embodiments of the electrodialysis device 1110.

The cleaning device 1132 may comprise at least one supply 1142 for providing the aqueous medium 1118, specifically at least one water supply, more specifically at least one freshwater supply, more specifically at least one osmotic water supply. The supply 1142 may be fluidically connected to the electrodialysis device 1110, specifically to the at least one alkaline chamber 50i1 of the fluidic stack 30 of the electrodialysis device 1110. For example, the supply 1142 may comprise the container 1124 and the pump 1126 for providing the aqueous medium 1118 to the electrodialysis device 1110. However, the supply 1142 may also be configured for directly providing the aqueous medium 1118 to the electrodialysis device 1110. Additionally, the supply 1142 may be connected to further components of the cleaning device 1132 for providing the aqueous medium 1118 to further components of the cleaning device 1132, for example to at least one blending device 1144.

Further, the cleaning device 1132 may comprise a once through flow path 1146 through the electrodialysis device 1110 for providing the alkaline fluid 1112. At least one inlet 1148 of the electrodialysis device 1110, specifically the at least one common alkaline inlet 311, may be connected to the supply 1142 for providing the aqueous medium 1118 to the electrodialysis device 30. At least one outlet 1150 of the electrodialysis device 1110, specifically the at least one common alkaline outlet 314, may be fluidically connected to the fluid application device 1138 for providing the alkaline fluid 1112 to the fluid application device 1138. The once through flow path 1146 may comprise the at least one pump 1126 for at least one of pumping the aqueous medium 1118 to the electrodialysis device 1110 and for pumping the alkaline fluid 1112 to the fluid application device 1138. As can be seen in Figures 5 and 6, the at least one pump 1126 of the once through flow path 1146 may specifically be arranged upstream the electrodialysis device 1110.

The exemplary embodiments of the cleaning device 1132 shown in Figures 5 and 6 may further comprise at least one brine container 1152. The brine container 1152 may be configured for receiving a liquid supply of the aqueous medium comprising the at least one salt 1116, specifically the solution of the at least one salt. As an example, the brine container 1152 may be fluidically connected to the electrodialysis device 1110, specifically to the at least one acidic chamber 50i2 of the fluidic stack 30 of the electrodialysis device 1110. The brine container 1152 may comprise at least one pump 1154 for providing the aqueous medium comprising the at least one salt 1116 to the electrodialysis device 1110. As shown in Figure 5 and 6, the aqueous medium comprising the at least one salt 1116 may be provided indirectly to the acidic chamber 50i2 via the at least one buffer container 72. Further, the brine container 1152 may comprise at least one sensor device 1156 for determining at least one property of the aqueous medium comprising the at least one salt 1116. For example, the brine container 1152 may comprise at least one conductivity sensor 1158 and at least one filling level sensor 1160.

Further, the cleaning device 1132 may comprise at least one recirculation loop 1162, specifically at least one acidic recirculation loop. The recirculation loop 1162 may specifically be a closed recirculation loop. The recirculation loop 1162 may fluidically connect the brine container 1152 and/or the buffer container 72 with the electrodialysis device 1110, specifically with the at least one acidic chamber 50i2 of the fluidic stack 30 of the electrodialysis device 1110, and vice versa. The recirculation loop 1162 may comprise at least one circulation pump 1164. The cleaning device 1132 may be configured for repeatedly guiding fluid, specifically the acidic fluid 1114, through the electrodialysis device 1110, specifically through the at least one acidic chamber 50i2 of the fluidic stack 30 of the electrodialysis device 1110. Thus, in the exemplary embodiments of the cleaning device 1132 of Figures 5 and 6, the electrodialysis device 1110 is operated in the semi-batch operation mode, as described above in the context of Figure 4C. However, other operation modes are also feasible.

The recirculation loop 1162 may further comprise the at least one buffer container 72 being fluidically connected to the brine container 1152. The buffer container 72 may be configured for storing an amount of the fluid, specifically the acidic fluid 1114. The buffer container 72 may further comprise at least one sensor device 1166 for determining at least one property of the amount of the acidic fluid 1114. For example, the buffer container 72 may comprise at least one conductivity sensor 1168. The sensor device 1166, specifically the conductivity sensor 1168, may be used to detect a sufficient conversion of the aqueous medium comprising the at least one salt 1116 into the acidic fluid 1114. The sufficient conversion may be detected based on the pH values of the fluid in the buffer container 72, as described in further detail above. Based on the pH value determined by the sensor device 1166, the fluid, specifically the acidic fluid 1114, comprised by the buffer container 72 may be transfer into an container 1170.

The recirculation loop 1162, specifically the buffer container 72, may further be fluidically connected to the fluid application device 1138, for applying the acidic fluid 1114 to the items to be cleaned 1134. The fluid connection between the recirculation loop 1162 and the fluid application device 1138 may comprise at least one pump 1171 for pumping the acidic fluid 1114 from the acidic recirculation loop, specifically from the buffer container 72, to the fluid application device 1138. For example, the fluid connection may comprise two pumps 1171, 1173, wherein one pump 1171 may be configured for providing large amounts of fluid in short time, wherein another pump 1173 may be configured for providing small amounts of fluid. Thus, the pumps 1171 and 1173 may be dimensioned differently, e.g. in terms of at least one of power, flow rate and pressure, or in terms of their possibility of control.

As can be seen in Figures 5 and 6, the cleaning device 1132 may comprise the at least one container 1170, wherein in these exemplary embodiments the container 1170 is an acid container, fluidically connected to the buffer container 72 via at least one pump 1172. The container 1170 may be configured for storing an amount of the acidic fluid 1114. The container 1170 may also comprise at least one sensor device 1174 for determining at least one property of the fluid, specifically of the acidic fluid 1114, contained in the container 1170. For example, the container 1170 may comprise at least one filling level sensor 1176. The at least one pump 1172 may be configured for pumping fluid from the buffer container 72 to the container 1170, specifically for pumping the acidic fluid 1114 from the buffer container 72 to the acid container.

As outlined above, the fluid application device 1138 is configured for applying at least one cleaning fluid 1140 to the items 1134 received in the cleaning chamber 1136. The cleaning fluid 1140 may specifically comprise at least one washing fluid 1178. The fluid application device 1138 may comprise at least one washing device 1180 for applying the washing fluid 1178 to the items to be cleaned 1134. The cleaning device 1132 may be configured for feeding the alkaline fluid 1112 to the washing device 1180, specifically to at least one washing tank 1182 of the washing device 1180. Thus, the at least one washing fluid 1178 may at least partially comprise the at least one alkaline fluid 1112. The cleaning device 1132 may further be configured for feeding the acidic fluid 1114 to the washing device 1180, specifically to the at least one washing tank 1182 of the washing device 1180, and/or into another tank, such as into at least one of a prewash tank and an optional third washing tank between the prewash and the pumped rinse tank. Various options are feasible. As can be seen in Figures 5 and 6, the feeding of the acidic fluid 1114 may be separate from the feeding of the alkaline fluid 1112.

Further, the at least one cleaning fluid 1140 may comprise at least one rinsing fluid 1184. The fluid application device 1138 may comprise at least one rinsing device 1186 for applying the rinsing fluid 1184 to the items to be cleaned 1134. The rinsing device 1186 may be separate from the washing device 1180 and the cleaning device 1132 may be configured for feeding at least a part of the acidic fluid 1114 to the rinsing device 1186. The cleaning device 1132 may comprise the at least one blending device 1144 for mixing the acidic fluid 1114 with at least one further component of the rinsing fluid 1184, specifically at least one further component selected from the group consisting of: water, specifically freshwater, more specifically warm freshwater; a rinsing concentrate, specifically a rinsing concentrate comprising at least one surfactant, more specifically at least one non-ionic surfactant.

The cleaning device 1132 may additionally comprise at least one tank 1188 for holding an amount of the at least one cleaning fluid 1140. As can be seen in Figures 5 and 6, the tank 1188 may be comprised by the cleaning chamber 1136. However, other embodiments, such as a tank separated from the cleaning chamber 1136, may also be feasible. The tank 1188 may comprise at least one sensor device 1190 for determining at least one property of the amount of the at least one cleaning fluid 1140. For example, the sensor device may comprise a conductivity sensor 1192.

Further, the container 1170 may be fluidically connected to the fluid application device 1138, specifically to at least one of: the washing tank 1182 of the washing device 1180 of the fluid application device 1138; a pre-washing tank 1194 of a prewashing device 1196 of the fluid application device 1138; a rinsing tank 1198 of the rinsing device 1186 of the fluid application device 1138; the blending device 1144 for blending various components of the rinsing fluid 1140 of the rinsing device 1186 of the fluid application device 1138; a boiler 1200 of the rinsing device 1186 of the fluid application device 1138; a storage tank of the rinsing fluid 1184; a nozzle system of a cleaning compartment 1212, specifically a nozzle system of a prewashing compartment 1216, a nozzle system of a washing compartment 1218 and/or a nozzle system of a rinsing compartment 1220. The fluid connection between the acid container 1170 and the fluid application device 1138 may comprise at least one pump 1202.

The container 1170, specifically the acid container, may further be fluidically connected to at least one drain (not shown in Figures 5 and 6) of the cleaning device 1132. The cleaning fluid 1140 may be removable from the cleaning device 1132 via the at least one drain, specifically after being applied to the items to be cleaned 1134. The acidic fluid 1114 comprised by the container 1170 may be added to the cleaning fluid 1140 removed from the cleaning device, specifically neutralizing the used cleaning fluid 1140.

The cleaning device 1132 may be configured for feeding at least a part of the acidic fluid 1114 to the fluid application device 1138. The feeding of the acidic fluid 1114 may be at least partially separate from the feeding of the alkaline fluid 1112. The cleaning device 1132 may be configured for using the acidic fluid 1114 for at least one purpose selected from the group consisting of:
- a washing process, wherein, in the washing process, both a part of the alkaline fluid 1112 and a part of the acidic fluid 1114 are applied to the items to be cleaned 1134;
- a washing process, wherein, in the washing process, both a part of the alkaline fluid 1112 and a part of the acidic fluid 1114 are fed to at least one common washing tank of fluid application device 1138;
- a washing process, wherein, in the washing process, a part of the alkaline fluid 1112 and a part of the acidic fluid 1114 are fed to different washing tanks of the fluid application device 1138;
- a rinsing process, wherein, in the rinsing process, a part of the acidic fluid 1114 is applied to the items to be cleaned 1134;
- a decalcifying process, wherein, in the decalcifying process, a part of the acidic fluid 1114 is applied to at least one of the fluid application device 1138 and the items to be cleaned 1134, for decalcifying purposes; and
- a decalcifying process, wherein, in the decalcifying process, a part of the acidic fluid 1114 is applied to a feed stream of a reverse osmosis device (not shown in the Figures) comprised by the cleaning device 1132.

As schematically shown in Figures 5 and 6, the electrodialysis device 1110 may further comprise at least one electrodialysis controller 1204. The electrodialysis controller 1204 may be configured for controlling the preparing of the at least one alkaline fluid 1112 and the at least one acidic fluid 1114, specifically by controlling an electric power provided to the electrodialysis device 1110, more specifically by controlling an electric current density and/or an electric voltage applied to the cathode electrode 10 and the anode electrode 20 of the electrodialysis device 1110. Thus, it may be possible to enhance or lower the preparation of the alkaline fluid 1112 and the acidic fluid 1114 by controlling the electric power provided to the electrodialysis device 1110, specifically in accordance with an amount of the cleaning fluid 1140 required in the cleaning device 1132.

Further, the cleaning device 1132 may comprise at least one control device 1206 for controlling an operation of the cleaning device 1132. The control device 1206 may be configured for controlling the feeding of the alkaline fluid 1112 to the fluid application device 1138 and optionally also for controlling the feeding of the acidic fluid 1114 to the fluid application device 1138. For example, the control device 1206 may comprise at least one processor 1208 which may be configured, such as by software programming, for supporting controlling the operation of the cleaning device 1132. As can be seen in Figures 5 and 6, the electrodialysis controller 1204 and the control device 1206 may be embodied in one single device. However, other options, such as separate embodiments of the controller 1204, 1206 are also feasible. The electrodialysis controller 1204 and the control device 1206 may be configured for communicating, for example wire-based or wireless, with each other and the other components of the cleaning device 1132. The control device 1206 may be configured for controlling the cleaning device 1132 to perform at least two different modes of operation. The control device 1206 may be configured for controlling the electrodialysis controller 1204 differently in the at least two modes of operation. The control device 1206 may be configured for controlling the electrodialysis controller 1204 in accordance with an amount of cleaning fluid 1140 required in the cleaning device 1132, wherein a first mode of operation may comprise a high demand of cleaning fluid 1140 in the cleaning device 1132, wherein a second mode of operation may comprise a low demand of cleaning fluid 1140 in the cleaning device 1132.

As schematically shown in Figures 5 and 6, the cleaning device 1132 may further comprise at least one transport device 1210 for transporting the items to be cleaned 1134 through the cleaning chamber 1136. For example, the transport device 1210 may comprise a conveyor, such as a belt conveyor and/or a chain conveyor, for transporting the items to be cleaned 1134. The cleaning chamber 1136 may comprise a plurality of cleaning compartments 1212 sequentially arranged in a transport direction 1214 of the transport device 1210. As can be seen in Figure 5, the cleaning compartments 1212 may comprise a prewashing compartment 1216, followed by a washing compartment 1218 and a rinsing compartment 1220. In the washing compartment 1218, the alkaline fluid 1112 and the acidic fluid 1114 may be applied to the items to be cleaned 1134.

Alternatively to a single washing compartment and as shown in Figure 6, the cleaning compartments 1212 may also comprise at least one first washing compartment 1222 and at least one second washing compartment 1224 disposed downstream of the first washing compartment 1222 in the transport direction 1214. The cleaning device 1132 may be configured for feeding the alkaline fluid 1112 into the first washing compartment 1222 and for feeding the acidic fluid 1114 into the second washing compartment 1224. Thus, in the first washing compartment 1222, the alkaline fluid 1112 may be applied to the items to be cleaned 1134, whereas in the second washing compartment 1224, the acidic fluid 1114 may be applied to the items to be cleaned 1134. However, it may also be possible to arrange the first washing compartment 1222 downstream the second washing compartment 1224 such that the acidic fluid 1114 may be applied first to the items to be cleaned 1134. As another example, it may be possible to feed both, the alkaline fluid 1112 and the acidic fluid 1114 into at least one of the washing compartments 1212.

The cleaning compartments 1212 each may comprise compartment tanks 1226, wherein the compartment tanks 1226 may be fluidically connected in a cascade manner, allowing for fluid transfer between the compartment tanks 1226 in a direction opposing the transport direction 1214. Additionally, the cleaning device 1132 may comprise the at least one drying compartment (not shown in Figures 5 and 6) comprising at least one blower device for drying the items to be cleaned 1134.

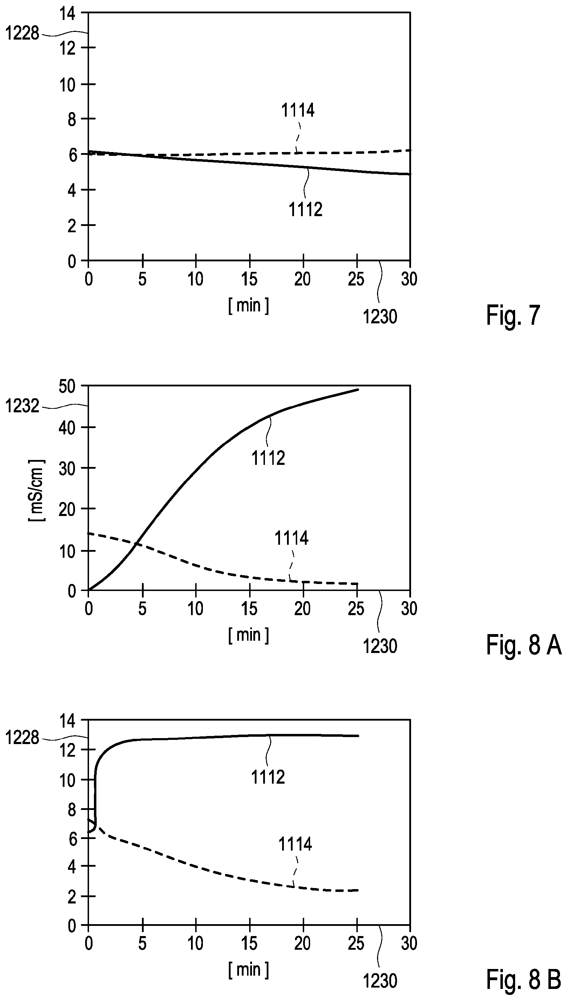

Figure 7 shows an evolution of pH value 1228 of the alkaline fluid 1112 and the acidic fluid 1114 during operation of the electrodialysis device 1110 as a function of time 1230. In Figure 7, the embodiment of the electrodialysis device 1110 as explained in the context of Figure 2 may be used, specifically being operated in the batch operation mode as explained in the context of Figure 4A. Specifically, the electrodialysis device 1110 may comprise 10 groups of chambers 40i. The aqueous medium comprising the at least one salt 1116 may contain 2 weight-% of sodium citrate with a volume of 0.5 L. The initial fluids may contain RO permeate with a volume of 0.5 L. The electrode rinsing fluid E0 may contain 5 weight-% of Na₂SO₄ with a volume of 0.5 L. The fluids may be recirculated at a flow rate of 12 L/h, which corresponds to a cross-sectional velocity in each group of chambers 40i of 1.2 cm/s. The concentrations, generally, may include tolerances, e.g. relative tolerances of no more than 15%, specifically of no more than 10%, specifically of no more than 5%.

An electric voltage of 20 V, corresponding to 2 V per group of chambers 40i, may be applied to achieve generation of sodium hydroxide in the alkaline fluid 1112 and citric acid in the acidic fluid 1114. The electric current may amount to 0.04 A, corresponding to 6 A/m², indicating that the electrodialysis device 1110 may have an electrical resistance of about 500 Ω. The low electric current may be accompanied by negligible changes in the electrical conductivity and pH value 1228 of the acidic fluid 1114 and the alkaline fluid 1112, as can be seen in Figure 7. The resistance may indicate a slow transport of citrate ions through the anion exchange membranes 44i, as citrate may comprise a relatively large anion with a molecular weight of 189 g/mol compared to other inorganic anions such as chloride, sulfate and bicarbonate: 35 - 96 g/mol.

In Figures 8A and 8B, an evolution of electrical conductivity 1232 (Figure 8A) and of pH value 1228 (Figure 8B) of the alkaline fluid 1112 and the acidic fluid 1114 during operation of the electrodialysis device 1110 is shown as a function of time 1230. In these Figures, the exemplary embodiment of the electrodialysis device 1110 as explained in the context of Figure 1 may be used, being operated with same conditions as discussed with respect to Figure 7.

In contrast to the findings of Figure 7, the electric current may be in the range of 0.6 - 1.4 A, corresponding to 94 - 219 A/m², indicating transport of ions and dissociation of water. As can be seen in Figures 8A and 8B, the pH value 1228 of the alkaline fluid 1112 may rapidly increase and may reach a plateau at pH = 13.0, while the pH value of the acidic fluid 1114 may steadily decrease down to 2.38. In addition, the electrical conductivity 1232 in the alkaline fluid 1112 may increase from 0 to 49 mS/cm, while the electrical conductivity 1232 of the acidic fluid 1114 may decrease from 13 to 2 mS/cm. The increase in pH value 1228 and electrical conductivity 1232 of the alkaline fluid 1112 may represent a successful generation of sodium hydroxide, while the decrease in pH value 1228 and electrical conductivity 1232 may represent a conversion of sodium citrate to citric acid. Thus, sodium hydroxide and citric acid solutions may be successfully produced from the aqueous medium comprising the at least one salt 1116, specifically containing sodium citrate, and RO permeate by using bipolar membrane electrodialysis in the electrodialysis device 1110. As a result of this operation, the initial sodium from the aqueous medium comprising the at least one salt 1116 may be completely transported to the alkaline fluid 1112 at an average transport flux of 1.27 g/m²/min. The energy consumption of producing sodium hydroxide from sodium citrate by using bipolar membrane electrodialysis may amount to 4 kWh/kg-NaOH.

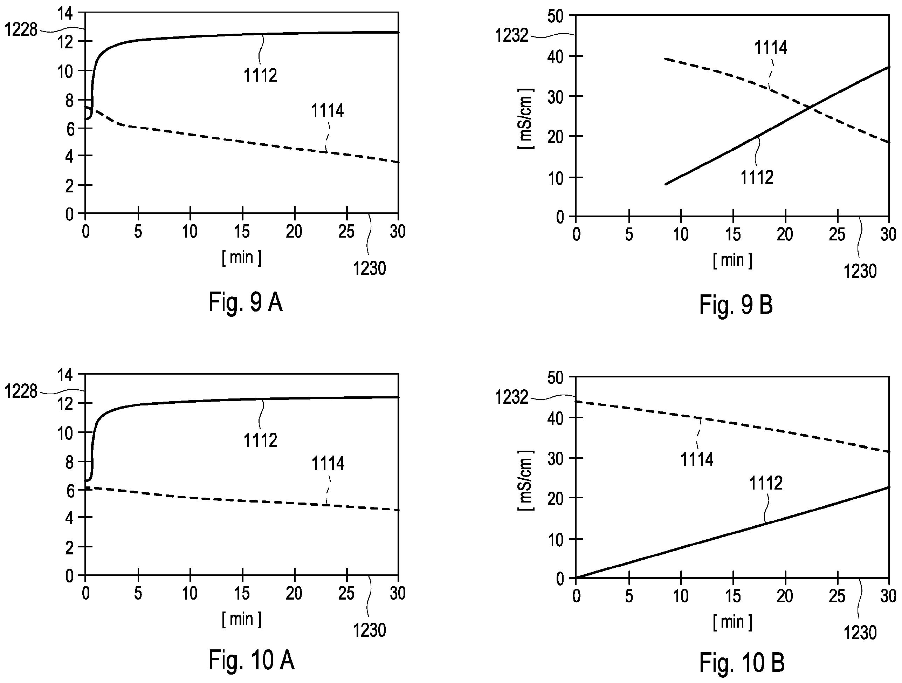

In Figures 9A and 9B, an evolution of electrical conductivity 1232 (Figure 9B) and of pH value 1228 (Figure 9A) of the alkaline fluid 1112 and the acidic fluid 1114 during operation of the electrodialysis device 1110 is shown as a function of time 1230. In these Figures, the exemplary embodiment of the electrodialysis device 1110 as explained in the context of Figure 1 may be used, being operated with similar conditions as discussed with respect to Figure 7. However, in the Figures 9A and 9B, a concentration of the aqueous medium comprising the at least one salt 1116 may amount to 10 weight-% of sodium citrate in a volume of 0.5 L and the electrode rinsing fluid E0 may contain 5 weight-% of Na₂SO₄ in a volume of 0.5 L. The volume of the initial fluids may be increased to 2 L. Again, as before and as generally applicable in the present application, the concentrations, generally, may include tolerances, e.g. relative tolerances of no more than 15%, specifically of no more than 10%, specifically of no more than 5%.

In the Figures 9A and 9B, a fixed electric voltage of 20 V, corresponding to 2 V per group of chambers 40i, may be applied to the electrodialysis device 1110. The high concentration of sodium hydroxide in the initial aqueous medium comprising the at least one salt 1116 may lower the electrical resistance of the electrodialysis device 1110 compared to the situation of Figure 7. The electric current for the application of the fixed electric voltage of 2 V per group of chambers 40i ranged from 0.6 - 2.6 A, corresponding to 94 - 406 A/m². The higher electrical current may represent a higher ion transport rates and, thus, the conversion rate of sodium citrate to sodium hydroxide and citric acid may increase when the concentration of sodium citrate in the initial aqueous medium comprising the at least one salt 1116 increased. As can be seen in Figures 9A and 9B, the pH value 1228 of the alkaline fluid 1112 may increase to 12.6, while the pH value 1228 of the acidic fluid 1114 may decrease to 4.1. The electrical conductivity 1232 of the alkaline fluid 1112 may increase to 46 mS/cm and the electrical conductivity 1232 of the acidic fluid may decrease from 38 to 10 mS/cm. During operation of the electrodialysis device 1110 with fixed electric voltage of 20 V, 38% of the sodium citrate may be converted to sodium hydroxide and citric acid at an average sodium flux of 1.9 g/m²/min.

In Figures 10A and 10B, an evolution of electrical conductivity 1232 (Figure 10B) and of pH value 1228 (Figure 10A) of the alkaline fluid 1112 and the acidic fluid 1114 during operation of the electrodialysis device 1110 is shown as a function of time 1230. In these Figures, the exemplary embodiment of the electrodialysis device 1110 as explained in the context of Figure 1 may be used, being operated with similar conditions as discussed with respect to Figures 9A and 9B. However, in the Figures 10A and 10B, a fixed electric current density at 200 A/m² may be applied to the electrodialysis device 1110.

In this embodiment, the conversion may be lower compared to the situation of Figures 9A and 9B with the fixed electric voltage of 2 V per group of chambers 49i, since the average current density may be found to be lower. As shown in Figures 10A and 10B, the pH value 1228 of the acidic fluid 1114 may decrease to 4.6 and the electrical conductivity 1232 of the acidic fluid 1114 may decrease from 43 to 31 mS/cm, indicating the lower conversion. In accordance, the pH value 1228 of alkaline fluid 1112 may increase to 12.4 and the electrical conductivity 1232 of the alkaline fluid 1112 may increase to 21.5 mS/cm.

During operation of the electrodialysis device 1110 with fixed electric current density of 200 A/m², the conversion efficiency of sodium citrate may amount to 24% at an average sodium flux of 1.2 g/m²/min. The energy consumption may be in the range from 5 - 6 kWh/kg-NaOH produced.

Adapting these parameters but operating the electrodialysis device 1110 in the continuous operation mode, as exemplary shown in Figure 4B, the initial fluids may be not recirculated through the electrodialysis device 1110, but pass the electrodialysis device 1110 only once. In this embodiment, again 10 weight-% of sodium citrate may be used in the initial solution comprising the at least one salt 1116, while again RO permeate may be used as the initial aqueous medium 1118. The flow rate may be set at 4 L/h per solution, corresponding to 0.4 cm/s. Various fixed current densities, ranging from 100 - 300 A/m² may be used resulting in a pH value of at least 12.5 for the prepared alkaline fluid 1112 and at most 5.6 for the acidic fluid 1114. An increase in applied electric current densities may result in both a higher electric potential per group of chambers 40i and an increase in pH value of the alkaline fluid 1112. Throughout the continuous operation mode, the conversion efficiency may be in the range of from 8 - 10%, while the average sodium flux may range in between 1.5 - 1.9 g/m²/h. The energy consumption may be in the rage of 2 - 7 kWh/kg-NaOH produced.

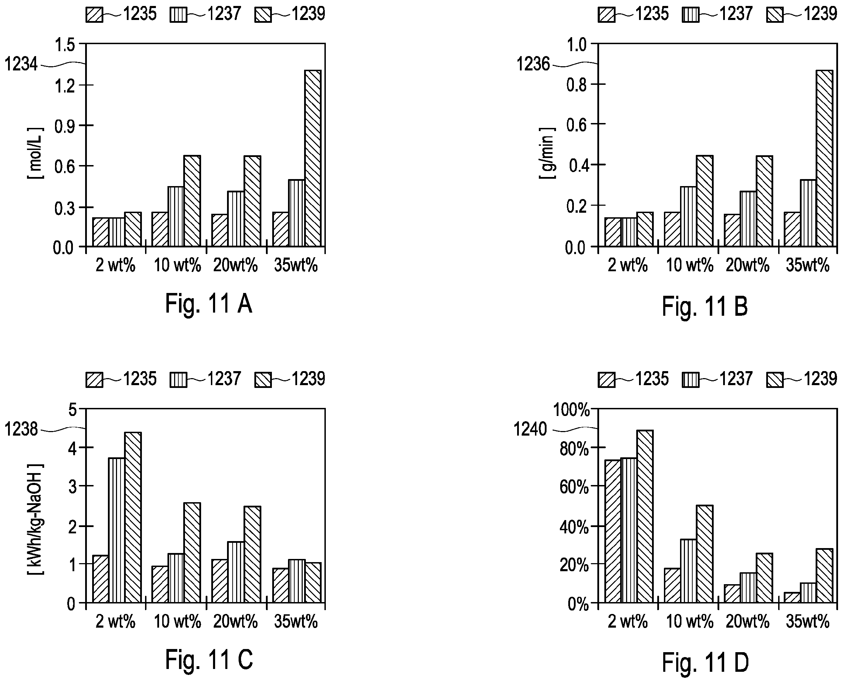

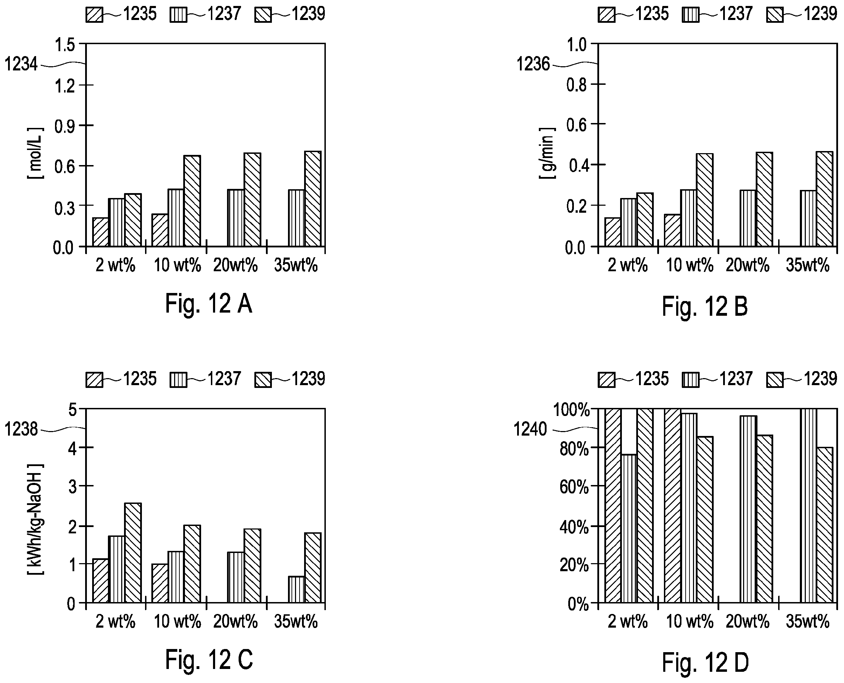

Figures 11A to 12D show diagrams of sodium hydroxide concentrations 1234 in the alkaline fluid 1112 (Figures 11A and 12 A), sodium hydroxide production rate 1236 (Figures 11B and 12B), energy consumption 1238 (Figure 11C and 12C) and conversion efficiency 1240 (Figures 11D and 12D) as a function of a ratio of the at least one salt in the aqueous medium comprising the at least one salt 1116 and as a function of applied electric current densities. In the Figures 11A to 12D, measurement values for 100 A/m² 1235, for 200 A/m² 1237 and for 400 A/m² 1239 are shown. In these Figures, the at least one salt may comprise sodium citrate, specifically trisodium citrate.

In the Figures 11A to 11D, the electrodialysis device 1110 according to the embodiment of Figure 1 may be used, specifically being operated in the continuous operation mode as explained with respect to Figure 4B. For the continuous operation mode, sodium citrate concentrations of 2, 10, 20 and 35 weight-% and electric current densities of 100, 200 and 400 A/m² may be used. Since the acidic fluid 1114 and the alkaline fluid 1112 are not recirculated in this operation mode, low flow rates may be applied to allow for maximum transport of sodium from the aqueous solution comprising the at least one salt 1116, specifically comprising the sodium citrate, to the aqueous medium 1118 to produce sodium hydroxide. By using low flow rates of the aqueous medium 1118 through the electrodialysis device 1110, high concentrations of sodium hydroxide may be achieved. The sodium citrate solutions and the aqueous medium 1118 may be pumped through the electrodialysis device 1110 at a flow rate of 1 L/h, in order to maximize the residence time of both fluids in the electrodialysis device 1110.

As shown in Figure 11A, higher sodium hydroxide concentrations 1234 in the alkaline fluid 1112 may be achieved when higher electric current densities are applied, since more sodium cations may be transported from the aqueous medium comprising the at least one salt 1116 to the aqueous medium 1118 and more hydroxide anions may be produced by the bipolar membranes 42i. The flow rate of the aqueous medium 1118 may be fixed at 1 L/h and the sodium hydroxide production rate 1236 increased as a function of the applied current density, as shown in Figure 11B. Further, for 10, 20 and 35 weight-% of sodium citrate, the sodium hydroxide concentrations 1234 in the alkaline fluid 1112 and the sodium hydroxide production rates 1236 may be similar for the same applied current densities, except for the peak at 35 weight-% and 400 A/m². For 2 weight-%, the sodium hydroxide concentrations 1234 in the alkaline fluid 1112 and the sodium hydroxide production rates 1236 may be lower, because insufficient sodium cations was supplied for this relatively low sodium citrate concentration. As can be seen in the Figures, for 10, 20 and 35 weight-%, the sodium hydroxide concentration 1234 produced at 100 A/m² may be 0.2 mol/L, while the sodium hydroxide concentration 1234 may range in between 0.4 - 0.5 mol/L for 200 A/m² and 0.7 - 1.3 mol/L for 400 A/m². Thus, the sodium hydroxide concentration 1234 and sodium hydroxide production rates 1236 may increase linearly as a function of the applied current density. The energy consumption may range in between 1 - 4 kWh/kg-NaOH as can be seen in Figure 11C, which is lower compared to the batch operation modes as explained with regard to Figures 7 to 10B (4 - 6 kWh/kg-NaOH). Not wishing to be bound by theory, the higher applied current densities may result in higher sodium hydroxide production rates 1236 and in higher energy consumption 1238.

As shown in Figure 11D, the conversion efficiency 1240 may range in between 74 - 89% when a sodium citrate concentration of 2 weight-% is used. However, the conversion efficiency 1240 may decrease to 18 - 49%, 8 - 24% and 5 - 28% when sodium citrate concentration of 10, 20 and 35 weight-% are used, respectively. Thus, for higher sodium citrate concentrations and production rates of sodium hydroxide as a function of the current density, the conversion efficiency 1240 may increase as a function of the current density, since more sodium cations may be removed from the aqueous medium comprising the at least one salt 1116 and may be converted to sodium hydroxide in the alkaline fluid 1112. The decrease in conversion efficiency 1240 as a function of the increasing sodium citrate concentrations may be explained by a limited sodium cation transport when the aqueous medium comprising the at least one salt 1116 is only circulated once through the electrodialysis device 1110. In order to transport all sodium cations from the concentrated aqueous medium comprising the at least one salt 1116, current densities higher than 1,500 A/m² may be required to be applied, which is not reasonable. However, including more groups of chambers 40i in the fluidic stack 30 to increase the conversion efficiency 1240 in continuous operation mode, may require to increase the electric voltage to values up over 100 V, which is also undesirable.

In the Figures 12A to 12D, the electrodialysis device 1110 according to the embodiment of Figure 1 may be used, specifically being operated in the semi-batch operation mode as explained with respect to Figure 4C. For the semi-continuous operation mode, again sodium citrate concentrations of 2, 10, 20 and 35 weight-% and electric current densities of 100, 200 and 400 A/m² may be used. The initial volume of the solution comprising sodium citrate may be at 0.5 L. The flow rate of the aqueous medium 1118 may be 1 L/h, in order to maximize the sodium hydroxide concentration, while the flow rate of the sodium citrate solution may be 12 L/h to allow for sufficient supply of sodium.

As shown in Figures 12A and 12B and in line with the situation of Figures 11A to 11D, the sodium hydroxide concentrations 1234 in the alkaline fluid 1112 and the sodium hydroxide production rates 1236 may increase as a function of the applied electric current density. For 100 A/m², the sodium hydroxide concentration 1234 in the alkaline fluid 1112 may amount to 0.2 mol/L, while for 200 and 400 A/m², the sodium hydroxide concentrations 1234 may increase to 0.4 mol/L and 0.7 mol/L, respectively. Thus, the semi-batch operation mode may be advantageously for obtaining high sodium hydroxide concentrations 1234 in the alkaline fluid 1112 and high sodium hydroxide production rates 1236 at high conversion efficiencies 1240. As shown in Figure 12C, the energy consumption 1238 for the semi-batch operation mode may also be comparable to the energy consumption for the continuous operation mode. The energy consumption 1238 may range from 1 - 3 kWh/kg-NaOH for the semi-batch operation mode.

Further, as can be seen in Figure 12D and in contrast to the continuous operation mode, the conversion efficiency 1240 of the semi-batch operation mode may be higher than 76%. The conversion efficiencies 1240 may range in between 76 - 121% and at 96% on average. The obtained conversion efficiencies 1240 above 100%, which is the theoretical maximum, can be explained by measurement errors in the mass balances for sodium hydroxide cations. However, the high conversion efficiencies 1240 achieved in the semi-batch operation mode, specifically with the achieved high sodium hydroxide concentrations 1234 and high sodium hydroxide production rates 1236 may indicate that the semi-batch operation mode may be suitable for achieving high sodium hydroxide concentrations 1234 and high sodium hydroxide production rates 1236 as well as high conversion efficiencies 1240.

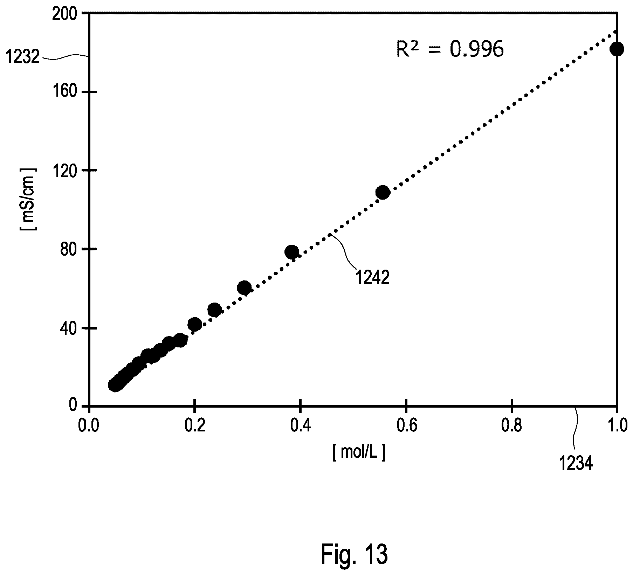

Figure 13 shows a diagram of the electrical conductivity 1232 of the alkaline fluid 1112 as a function of the sodium hydroxide concentration 1234. As used through various exemplary embodiments described herein, the concentration of produced sodium hydroxide may be determined by a calibration 1242 of the sodium hydroxide concentration 1234 and a measured electrical conductivity 1232. To this end, various diluted samples of 1 M sodium hydroxide stock solution may be prepared and the corresponding electrical conductivity 1232 may be measured. Thus, the electrical conductivity 1232 of the alkaline fluid 1112 and/or any other fluid may be used to determine the sodium hydroxide concentration 1234 contained therein by using the calibration 1242. Specifically, the electrical conductivity 1232 determined by one or more conductivity sensors as explained above in the context of Figures 3, 5 and 6 may be used to determine the sodium hydroxide concentration 1234 contained in the corresponding fluid by using the calibration 1242. As can be seen in Figure 13, the calibration comprises a linear relationship between sodium hydroxide concentration 1234 and the electrical conductivity 1232. Thus, this calibration 1242 may be used subsequently to determine the sodium hydroxide concentration 1234 in the alkaline fluid 1112 and/or in other fluids.

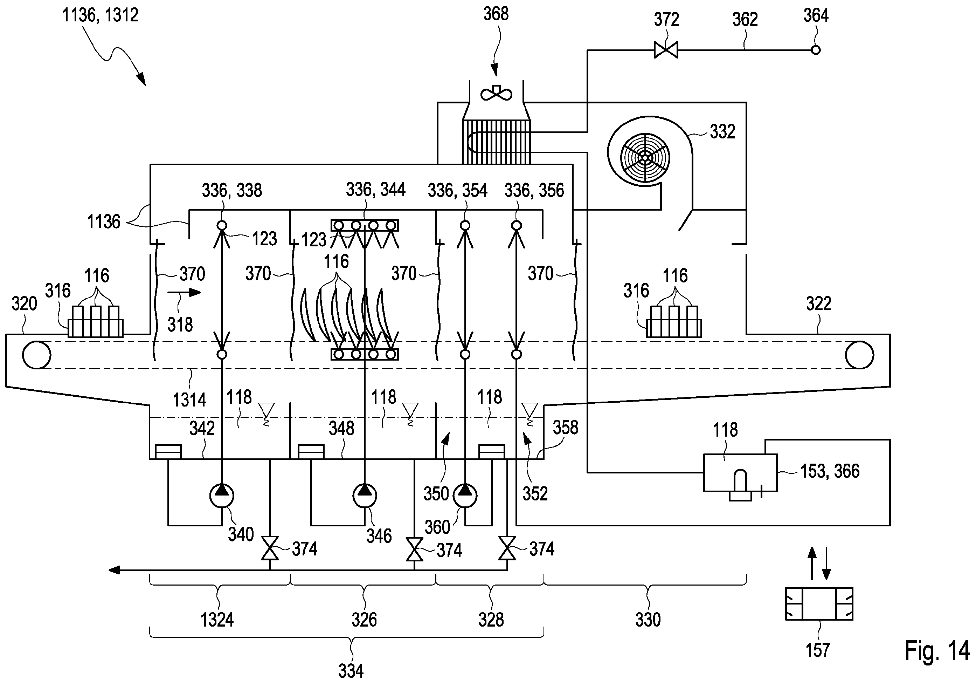

In Figure 14, an exemplary embodiment of the cleaning chamber 1136 is shown in a sectional illustration parallel to the transport direction 318. The cleaning chamber 1136 may specifically be comprised by the cleaning device 1132 according to the present disclosure, such as according to any one of embodiments shown in Figure 5 and 6 and/or other embodiments.

The cleaning chamber 1136 is formed in this exemplary embodiment as a pass-through dishwasher 1312 and has a transport device 1314, by means of which the items to be cleaned 116, for example crockery, can be transported through the cleaning chamber 1136. By way of example, the cleaning chamber 1136 can be formed as a rack conveyor dishwasher and can be designed to transport the items to be cleaned 116 in transport racks 316, or can be formed as a flight-type dishwasher, in which the items to be cleaned 116 are transported directly on a conveyor belt, as shown in this exemplary embodiment.

The items to be cleaned 116 can be transported by means of the transport device 1314 in a transport direction 318 from an entry zone 320 to a discharge zone 322. The cleaning chamber 1136 can be divided here into a plurality of zones, wherein for example a pre-removal zone 1324, a wash zone 326, and a final rinse zone 328 can be provided. These zones can then also be followed by at least one drying zone 330, in which the items to be cleaned 116 are dried by means of a fan 332.

Zones 1324, 326 and 328 can be referred to generally as rinse zones 334, within which application devices 336 in the form of nozzle systems comprising nozzles 123 are provided in order to apply the at least one cleaning fluid 118 to the items to be cleaned 116.

A pre-removal nozzle system 338 can thus be provided in the pre-removal zone 1324, which pre-removal nozzle system is fed via a pre-removal pump 340 from a pre-removal tank 342. A wash zone nozzle system 344 can be provided in the wash zone 326, which wash zone nozzle system can be fed via a wash zone pump 346 from a wash tank 348. The final rinse zone 328 can contain a pump final rinse section 350 and a fresh water final rinse section 352, which follows in the transport direction 318. The pump final rinse section 350 has a pump final rinse nozzle system 354, and the fresh water final rinse section 352 has a fresh water final rinse nozzle system 356. Whereas the pump final rinse section nozzle system 354 is fed from a final rinse tank 358 via a final rinse pump 360, the fresh water final rinse section nozzle system 356 is fed via a fresh water feed line 362 with fresh water from a fresh water connection point 364 in a building. The fresh water feed line 362 can comprise for example a reverse osmosis system and/or a temperature-control device 153 in the form of a heating device 366, by means of which the fed fresh water can be heated, for example to a temperature from 80°C to 100°C, preferably to a temperature of at least 85°C. The fresh water feed line 362 can be guided optionally via at least one heat recovery device 368, in which waste heat of the cleaning chamber 1136 can be used in order to heat fed fresh water.

The items to be cleaned 116 can be guided continuously or discontinuously through the rinse zones 334 by means of the transport device 1314 before the items to be cleaned 116 are dried in the drying zone 330. The rinse zones 334 can each be terminated by separation curtains 370.

The cleaning chamber 1136 preferably uses a number of types of cleaning fluid 118, such as the alkaline fluid 1112 and/or the acidic fluid 1114, in the form of rinse fluids, which are preferably all aqueous rinse fluids. Fresh water is thus preferably used in the fresh water rinse section 352 as rinse fluid, optionally with added final rinse aid, such as the acidic fluid 1114. In the fresh water final rinse section 352, the rinse fluid comes into contact just once with the items to be cleaned 116. By contrast, in the pump final rinse section 350, final rinse liquid from the final rinse tank 358 is applied to the items to be cleaned 116 in a recirculation mode. In the wash tank 348 the rinse liquid can be mixed for example with the cleaning agent, for example cleaning solution, the alkaline fluid 1112 and/or the acidic fluid 1114. In the wash zone 326 the items to be cleaned 116 can be cleaned in a recirculation mode using the rinse liquid from the wash tank 348. The items to be cleaned 116 can be acted on in the pre-removal zone 1324 in the recirculation mode.

As discussed above, the cleaning fluid 118 in the form of the rinse liquids can be mixed in the tanks 342, 348 and 358 with one or more detergent substances, such as one or more of the alkaline fluid 1112 and/or the acidic fluid 1114. For this purpose, one or more metering devices can be provided, which are not indicated in Figure 14. For example, a metering device can optionally be provided at the fresh water feed line 362, by means of which metering device a final rinse agent and/or a disinfectant can be fed to the fresh water final rinse section 352. The connection of the at least one metering point can be before and/or after the heating device, for example. Alternatively or additionally, a metering device can be provided at the final rinse tank 358, by means of which a final rinse agent and/or a disinfectant can be metered into the final rinse tank 358. By way of example, at least one metering device can optionally be provided in the wash zone 326, by means of which metering device one or more cleaning agents can be metered into the wash tank 348. Alternatively or additionally, at least one metering device can be provided in the pre-removal zone 1324, by means of which metering device(s) at least one cleaning agent can be metered into the pre-removal tank 342. The metering device(s) can be provided individually, in pairs or in specified combinations. A different arrangement, combination and type of metering are also possible, however, in principle.

The cleaning chamber 1136 in the illustrated arrangement also again can contain at least one control device 157, which for example can be formed similarly to the control device in Figures 5 and 6. Here, the control device 157 may be for example a central machine control unit, which can also be formed in a decentralized manner, however, in principle. By way of example, one or more cleaning programs can be controlled in the cleaning chamber 1136 by means of the at least one control device 157. The control device 157 can be connected in particular to at least one feed valve 372, which can control a fresh water feed, and/or can be connected to one or more of the specified metering devices in order to control these elements. The control device 157 for example can also be connected wholly or partially to the pumps 340, 346 and 360, and can control these pumps. Furthermore, the control device 157 can be connected for example to the at least one transport device 1314, and can control the transport device 1314. The control device 157 can be formed for example wholly or partially as a regulation device and/or can comprise at least one regulation.

The cleaning chamber 1136 can again contain one or more sensors for detecting one or more operating parameters. The cleaning chamber 1136 can thus contain, for example, one or more sensors for detecting a feed and/or a concentration of one or more components of the rinse liquid. The sensors can be generally connected directly or indirectly to the at least one control device 157. The cleaning chamber 1136 can thus contain, for example, at least one flowmeter for detecting a volumetric flow and/or mass flow of a feed of fresh water. Alternatively or additionally, the cleaning chamber 1136 can also contain one or more sensors in the tanks 342, 348 and 358. By way of example, turbidity sensors and/or conductivity sensors can be provided there, by means of which for example a cleaning agent concentration and/or a degree of soiling can be detected. In order to carry out the regulation of a feed of one or more components of the one or more rinse liquids of the cleaning chamber 1136, for example in order to regulate a fresh water feed and/or in order to regulate a metering of cleaning agent, the control device 157 can comprise for example one or more regulators, which for example can be implemented in the form of a software and/or in the form of a hardware. These can detect one or more actual values, for example by means of the sensors and/or by means of a flowmeter, and can regulate a feed to at least one desired value, for example by means of the specified metering devices and/or the feed valve 372.

As shown in Figure 14, the cleaning device 1132 may comprise at least one drain 374. The cleaning device 1132 may be configured for removing the cleaning fluid 1140 from the cleaning chamber 1136, specifically from one or more cleaning compartments 1212 (not shown in Figure 14), via the drain 374. The container 1170 (not shown in Figure 14), specifically the acid container, may be fluidically connected to the drain 374. The cleaning fluid 1140 may be removable from the cleaning device 1132 via the drain 374, specifically after being applied to the items to be cleaned 1134, 116. The acidic fluid 1114 comprised by the container 1170 may be added to the cleaning fluid 1140 removed from the cleaning device 1132, specifically for neutralizing the used cleaning fluid 1140.

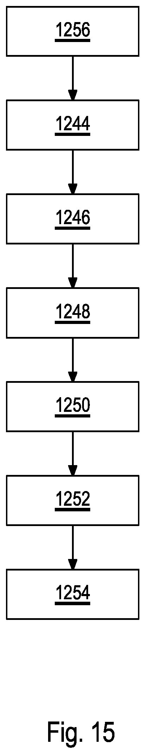

Figure 15 shows a flow chart of a process of cleaning items 1134, 116. The process comprises the following steps which specifically may be performed in the given order. It shall be noted, however, that a different order is also possible. Further, it is also possible to perform one or more of the process steps once or repeatedly. Further, it is possible to perform two or more of the process steps simultaneously or in a timely overlapping fashion. The process may comprise further steps which are not listed.

The process of cleaning items 1134, 116 comprises:
i. (denoted by reference number 1244) receiving the items 1134, 116 to be cleaned in the at least one cleaning chamber 1136 of the cleaning device 1132;
ii. (denoted by reference number 1246) preparing the at least one alkaline fluid 1112 and the at least one acidic fluid 1114 from the aqueous medium comprising the at least one salt 1116, specifically the solution of the at least one salt, by using bipolar membrane electrodialysis in the at least one electrodialysis device 1110 of the cleaning device 1132; and
iii. (denoted by reference number 1248) feeding the at least one alkaline fluid 1112 to the at least one fluid application device 1138 of the cleaning device 1132; and
iv. (denoted by reference number 1250) applying the at least one cleaning fluid 1140, 118 to the items 1134, 116 received in the cleaning chamber 1136 by using the at least one fluid application device 1138 of the cleaning device 1132.

The process may specifically comprise using the cleaning device 1132 according to the present invention, such as according to any one of the embodiments disclosed above in the context of Figures 5 and 6. However, other embodiment are also feasible.

In the process, step ii. may comprise passing the incoming stream W1 of the aqueous medium 1118 into the electrodialysis device 1110, specifically via the at least one alkaline chamber inlet 511i1 into the at least one alkaline chamber 50i1 of the fluidic stack 30 of the electrodialysis device 1110, more specifically via the at least one common alkaline inlet 311. Further, step ii. may comprise removing the combined stream B1 of the at least one alkaline fluid 1112 from the electrodialysis device 1110, specifically via the at least one alkaline outlet 512i1 of the at least one alkaline chamber 50i1 of the fluidic stack 30 of the electrodialysis device 1110, more specifically via the at least one common alkaline outlet 314.

Further, step ii. may comprise passing the incoming stream S1 of the aqueous medium comprising the at least one salt 1116, specifically the solution of the at least one salt, into the electrodialysis device 1110, specifically via the at least one acidic chamber inlet 521i2 into the at least one acidic chamber 50i2 of the fluidic stack 30 of the electrodialysis device 1110, more specifically via the at least one common acidic inlet 321. Additionally, step ii. may comprise removing the combined stream A1 of the at least one acidic fluid 1114 from the electrodialysis device 1110, specifically via the at least one acidic outlet 522i2 of the at least one acidic chamber 50i2 of the fluidic stack 30 of the electrodialysis device 1110, more specifically via the at least one common acidic outlet 324.

In the exemplary embodiment shown in Figure 15, the process may comprise the optional step of:
v. (denoted by reference number 1252) feeding at least a part of the acidic fluid 1114 to the fluid application device 1138.

The process may further comprise a plurality of partial process steps. The partial process steps may comprise at least two process steps selected from the group consisting of:
- a washing process, wherein, in the washing process, both a part of the alkaline fluid 1112 and a part of the acidic fluid 1114 are applied to the items 1134, 116 to be cleaned;
- a washing process, wherein, in the washing process, both a part of the alkaline fluid 1112 and a part of the acidic fluid 1114 are fed to at least one common washing tank of fluid application device 1138;
- a washing process, wherein, in the washing process, a part of the alkaline fluid 1112 and a part of the acidic fluid 1114 are fed to different washing tanks of the fluid application device 1138;
- a rinsing process, wherein, in the rinsing process, a part of the acidic fluid 1114 is applied to the items 1134, 116 to be cleaned;
- a decalcifying process, wherein, in the decalcifying process, a part of the acidic fluid 1114 is applied to at least one of the fluid application device 1138 and the items 1134, 116 to be cleaned, for decalcifying purposes; and
- a decalcifying process, wherein, in the decalcifying process, the acidic fluid 1114 is applied to a feed stream of a reverse osmosis device (not shown in the Figures) comprised by the cleaning device 1132.

Specifically, in the exemplary embodiments of the cleaning device 1132 explained with regard to Figures 5 and 6, the plurality of partial process steps may be performed in a manner such that items 1134, 116 to be cleaned may be transported sequentially through the plurality of cleaning compartments 1212 of the cleaning chamber 1136, wherein the cleaning compartments 1212 may be configured for performing different partial process steps. However, other options for performing the partial process steps may be feasible, for example in a manner such the items 1134, 116 to be cleaned may remain stationary in the cleaning chamber 1136, wherein the partial process steps may be performed sequentially in time. A combination thereof may also be feasible.

The process may further comprise removing the items 1134, 116 to be cleaned from the cleaning chamber 1136 and decalcifying at least a part of the cleaning device 1132 (denoted by reference number 1254), specifically at least a part of the fluid application device 1138, by using the acidic fluid 1114. This process step may specifically be performed at the end of the washing process as shown in Figure 15, such as in the end of the day of using the cleaning device 1132 for cleaning the items 1134, 116 to be cleaned.

Optionally, the process may further comprise self-testing the electrodialysis device 1110 (denoted by reference number 1256). The self-testing may comprise passing the stream S1 of the aqueous medium comprising the at least one salt 1116 and the stream W1 of the aqueous medium 1118 through the electrodialysis device 1110 without providing electric power to the electrodialysis device 1110. The self-testing may comprise determining a conductance of the electrodialysis device 1110. In case a peak in the conductance is observed, the self-testing may indicate a defective electrodialysis device 1110. The self-testing may specifically be performed prior to step i.. Alternatively or additionally, the self-testing may comprise determining the conductivity of the recirculated fluid via a sensor device in the recirculation loop 1162 and/or via the sensor device 1166 in the buffer container 72.

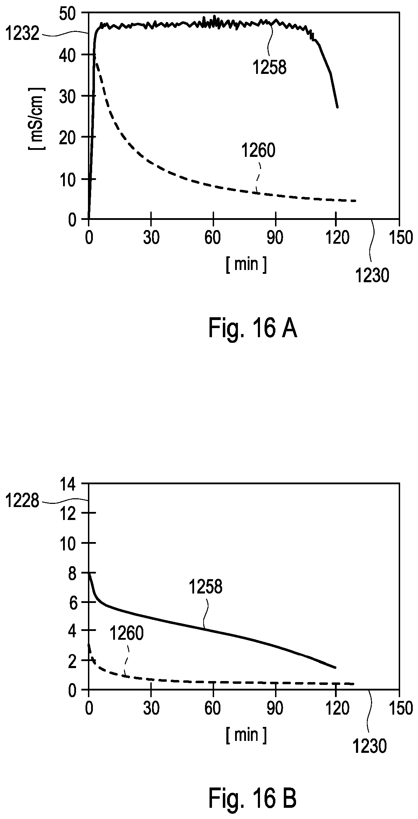

Figures 16A and 16B show diagrams of an evolution of the electrical conductivity 1232 of the alkaline fluid 1112 (Figure 16A) and of the pH value 1228 of the acidic fluid 1114 (Figure 11B) for two different salts as a function of time 1230. In this example, the aqueous medium comprising the at least one salt 1116 may comprise sodium citrate or sodium sulfate. Thus, measurement values for sodium citrate 1258 or for sodium sulfate 1260 are shown in Figures 16A and 16B. Therein, the electrodialysis device 1110 as shown in Figure 1 may be used, specifically being operated in the semi-batch operation mode.

The electrical conductivity 1232 of the alkaline fluid 1112, shown in Figure 16A, may indicate the presence of sodium hydroxide. When using sodium citrate 1258, the production of sodium hydroxide may be steady and sufficiently high, until at approximately 100 minutes the salt may be almost completely converted to acid. As can be seen in Figure 16B, the pH value 1228 of the acidic fluid 1114 may gradually decrease. Thus, the present citrate ions may gradually bind with more protons.

In case the salt of the aqueous medium comprising the at least salt 1116 is sodium sulfate 1260, a different trend may be observed. The electrical conductivity 1232 of the alkaline fluid 1112 may decline rapidly, indicating that the sodium hydroxide may be neutralized by proton transport from the acidic fluid 1114. As can be seen in Figure 16B, the pH value 1228 of the acidic fluid 1114 may also decrease rapidly, indicating a high concentration of protons in the acidic fluid 1114.

Thus, using sodium citrate in the bipolar membrane electrodialysis may provide the following advantages. First, sodium citrate may be able to bind calcium. Secondly, citrate ions being present in the acidic fluid 1114 may be able to bind with generated protons, such as H⁺. Thus, citrate ions may be able to reduce free protons being present in the acidic fluid 1114 once the aqueous medium comprising the at least one salt 1116 is converted to the acidic fluid 1114. This binding of protons to the anion may also be referred to as the buffering effect.

However, using other inorganic salts, such as sodium sulfate, for producing sodium hydroxide in the two-cell stack configuration may not work as good as sodium citrate, since there is no buffering effect. Therefore, the protons may remain freely dissolved in the mixture of the aqueous medium comprising the at least one salt 1116 and the acidic fluid 1114. The protons may compete with sodium to be transported to the alkaline fluid 1112. In case the protons are transported to the alkaline fluid 1112, where hydroxide ions are introduced, there may be less production of sodium hydroxide because protons and hydroxide ions may recombine to water.

Thus, using inorganic non-buffering salt may not be suitable for the production of sodium hydroxide in the electrodialysis device 1110 with the configuration of the two-cell stack. Not wishing to be bound by theory, the observed behavior may also be valid for other inorganic non-buffering salts, such as sodium chloride and sodium nitrate.

### List of reference numbers

- A1: combined stream of the at least one acidic fluid
- A1i: stream of the at least one acidic fluid from the acidic chamber
- A2i: stream of the at least one acidic fluid into the acidic chamber
- B1: combined stream of the at least one alkaline fluid
- B1i: stream of the at least one alkaline fluid from the alkaline chamber
- D1: degassing device
- D2: degassing device
- E0: electrode rinsing fluid
- E11: stream of the cathode rinsing fluid into the cathode chamber
- E12: stream of the cathode rinsing fluid from the cathode chamber
- E21: stream of anode rinsing fluid into the anode chamber
- E22: stream of the anode rinsing fluid from the anode chamber
- S1: incoming stream of the aqueous medium comprising the at least one salt
- S1i: stream of the aqueous medium comprising the at least one salt into the acidic chamber or into the brine chamber
- S2i: stream of the aqueous medium comprising the at least one salt from the brine chamber
- W1: incoming stream of the aqueous medium
- W1i: stream of an aqueous medium into the alkaline chamber
- 10: cathode electrode
- 11: cathode compartment
- 12: cathode chamber
- 20: anode electrode
- 21: anode compartment
- 22: anode chamber
- 30: fluidic stack
- 40i: group of chambers
- 41i: cation exchange membrane on the cathode side
- 42i: bipolar membrane
- 43i: cation exchange membrane on the anode side
- 44i: anion exchange membrane
- 50ik: chamber k in group i
- 50i1: alkaline chamber
- 50i2: acidic chamber
- 50i3: brine chamber
- 511i1: alkaline chamber inlet
- 512i1: alkaline outlet
- 521i2: acidic chamber inlet
- 522i2: acidic outlet
- 521i3: brine chamber inlet
- 531i2: acidic chamber inlet
- 532i3: brine outlet
- 111: cathode chamber inlet
- 112: cathode chamber outlet
- 211: anode chamber inlet
- 212: anode chamber outlet
- 311: common alkaline inlet
- 312: dividing device configured for dividing incoming stream W1
- 313: combining device for combining the streams B1i
- 314: common alkaline outlet
- 321: common acidic inlet
- 322: dividing device configured for dividing incoming stream S1
- 323: combining device for combining the streams A1i
- 324: common acidic outlet
- 72: buffer container
- 73: Pump
- 82: Container
- 90: separation device
- 1110: electrodialysis device
- 1112: alkaline fluid
- 1114: acidic fluid
- 1116: aqueous medium comprising at least one salt
- 1118: aqueous medium
- 1120: electrode rinse fluid path
- 1122: circulation pump
- 1123: streaming direction
- 1124: Container
- 1126: Pump
- 1128: sensor device
- 1130: Device
- 1132: cleaning device
- 1134: items to be cleaned
- 1136: cleaning chamber
- 1138: fluid application device
- 1140: cleaning fluid
- 1142: Supply
- 1144: blending device
- 1146: once through flow path
- 1148: inlet of the electrodialysis device
- 1150: outlet of the electrodialysis device
- 1152: brine container
- 1154: Pump
- 1156: sensor device
- 1158: conductivity sensor
- 1160: filling level sensor
- 1162: recirculation loop
- 1164: circulation pump
- 1166: sensor device
- 1168: conductivity sensor
- 1170: Container
- 1171: Pump
- 1172: Pump
- 1173: Pump
- 1174: sensor device
- 1176: filling level sensor
- 1178: washing fluid
- 1180: washing device
- 1182: washing tank
- 1184: rinsing fluid
- 1186: rinsing device
- 1188: Tank
- 1190: sensor device
- 1192: conductivity sensor
- 1194: pre-washing tank
- 1196: prewashing device
- 1198: rinsing tank
- 1200: Boiler
- 1202: Pump
- 1204: electrodialysis controller
- 1206: control device
- 1208: Processor
- 1210: transport device
- 1212: cleaning compartment
- 1214: transport direction
- 1216: prewashing compartment
- 1218: washing compartment
- 1220: rinsing compartment
- 1222: first washing compartment
- 1224: second washing compartment
- 1226: compartment tank
- 1228: pH value
- 1230: Time
- 1232: electrical conductivity
- 1234: sodium hydroxide concentration
- 1235: measurement value for 100 A/m²
- 1236: sodium hydroxide production rate
- 1237: measurement value for 200 A/m²
- 1238: energy consumption
- 1239: measurement value for 400 A/m²
- 1240: conversion efficiency
- 1242: Calibration
- 1244: receiving the items to be cleaned
- 1246: preparing the at least one alkaline fluid and the at least one acidic fluid
- 1248: feeding the at least one alkaline fluid to the fluid application device
- 1250: applying the at least one cleaning fluid to the items
- 1252: feeding at least a part of the acidic fluid to the fluid application device
- 1254: decalcifying at least a part of the cleaning device
- 1256: self-testing the electrodialysis device
- 1258: measurement values for sodium citrate
- 1260: measurement values for sodium sulfate
- 116: items to be cleaned
- 118: cleaning fluid
- 123: Nozzle
- 153: temperature-control device
- 157: control device
- 1312: pass-through dishwasher
- 1314: transport device
- 316: transport racks
- 318: transport direction
- 320: entry zone
- 322: discharge zone
- 1324: pre-removal zone
- 326: wash zone
- 328: final rinse zone
- 330: drying zone
- 332: Fan
- 334: rinse zones
- 336: application devices
- 338: pre-removal nozzle system
- 340: pre-removal pump
- 342: pre-removal tank
- 344: wash zone nozzle system
- 346: wash zone pump
- 348: wash tank
- 350: pump final rinse section
- 352: fresh water final rinse section
- 354: pump final rinse nozzle system
- 356: fresh water final rinse nozzle system
- 358: final rinse tank
- 360: final rinse pump
- 362: fresh water feed line
- 364: fresh water connection point
- 366: heating device
- 368: heat recovery device
- 370: separation curtains
- 372: feed valve
- 374: drain

## Claims

1. A cleaning device (1132) for cleaning items (1134), comprising:
a. at least one cleaning chamber (1136) for receiving the items (1134);
b. at least one fluid application device (1138) for applying at least one cleaning fluid (1140) to the items (1134) received in the cleaning chamber (1136); and
c. at least one electrodialysis device (1110) configured for preparing at least one alkaline fluid (1112) and at least one acidic fluid (1114) from an aqueous medium comprising at least one salt (1116) by using bipolar membrane electrodialysis,
wherein the cleaning device (1132) is configured for feeding at least a part of the alkaline fluid (1112) to the fluid application device (1138),
the electrodialysis device (1110) comprising:
c.1 a fluidic stack (30) comprising
- at least one acidic chamber (50i2) having at least one acidic outlet (522i2) for providing the acidic fluid (1114), wherein the acidic chamber (50i2) further comprises at least one acidic chamber inlet (521i2) for streaming fluid through the acidic chamber (50i2);
- at least one alkaline chamber (50i1) having at least one alkaline outlet (512i1) for providing the alkaline fluid (1112), wherein the alkaline chamber (50i1) comprises at least one alkaline chamber inlet (511i1) for streaming fluid through the alkaline chamber (50i1); and
- at least one bipolar membrane (42i) separating the acidic chamber (50i2) and the alkaline chamber (50i1), the bipolar membrane (42i) enabling bipolar ion exchange between the acidic chamber (50i2) and the alkaline chamber (50i1);
c.2 a cathode compartment (11) comprising at least one cathode electrode (10), the cathode compartment (11) being separated from the fluidic stack (30) by at least one membrane (41i) enabling ion exchange between the cathode compartment (11) and the fluidic stack (30); and
c.3 an anode compartment (21) comprising at least one anode electrode (20), the anode compartment (21) being separated from the fluidic stack (30) by the at least one membrane (43i) enabling ion exchange between the anode compartment and (21) the fluidic stack (30),
wherein the fluidic stack (30) is disposed in between the cathode compartment (11) and the anode compartment (21),
wherein the cathode compartment (11) comprises a cathode chamber (12) for receiving a cathode rinsing fluid, wherein the cathode electrode (10) is disposed in the cathode chamber (12),
wherein the anode compartment (21) comprises an anode chamber (20) for receiving an anode rinsing fluid, wherein the anode electrode (20) is disposed in the anode chamber (22), and
wherein the cathode chamber (12) and the anode chamber (22) are connected via at least one electrode rinse fluid path (1120).

2. The cleaning device (1132) according to claim 1, wherein the cleaning device (1132) is further configured for feeding at least a part of the acidic fluid (1114) to the fluid application device (1138).

3. The cleaning device (1132) according to claim 2, further comprising at least one control device (1206) for controlling an operation of the cleaning device (1132), wherein the control device (1206) is configured for controlling the feeding of the alkaline fluid (1112) to the fluid application device (1138) and also for controlling the feeding of the acidic fluid (1114) to the fluid application device (1138), wherein the cleaning device (1132) is configured for using the acidic fluid (1114) for at least one purpose selected from the group consisting of:
- a washing process, wherein, in the washing process, both a part of the alkaline fluid (1112) and a part of the acidic fluid (1114) are applied to the items to be cleaned (1134);
- an acidic exposure process, wherein, in the acidic exposure process, at least a part of the acidic fluid (1114) is directly applied to the items to be cleaned (1134);
- a washing process, wherein, in the washing process, both a part of the alkaline fluid (1112) and a part of the acidic fluid (1114) are fed to at least one common washing tank (1182) of the fluid application device (1138);
- a washing process, wherein, in the washing process, a part of the alkaline fluid (1112) and a part of the acidic fluid (1114) are fed to different washing tanks (1182) of the fluid application device (1138);
- a rinsing process, wherein, in the rinsing process, a part of the acidic fluid (1114) is applied to the items to be cleaned (1134); and
- a decalcifying process, wherein, in the decalcifying process, a part of the acidic fluid (1114) is applied to at least one of the fluid application device (1138) and the items to be cleaned (1134), for decalcifying purposes; and
- a decalcifying process, wherein, in the decalcifying process, a part of the acidic fluid (1114) is applied to a feed stream of a reverse osmosis device comprised by the cleaning device (1132).

4. The cleaning device (1132) according to any one of claims 1-3, wherein the at least one cleaning fluid (1140) comprises at least one washing fluid (1178), wherein the fluid application device (1138) comprises at least one washing device (1180) for applying the washing fluid (1178) to the items to be cleaned (1134), wherein the cleaning device (1132) is configured for feeding the alkaline fluid (1112) to the washing device (1180).

5. The cleaning device (1132) according to claim 4, wherein the at least one cleaning fluid (1140) further comprises at least one rinsing fluid (1184), wherein the fluid application device (1138) comprises at least one rinsing device (1186) for applying the rinsing fluid (1184) to the items to be cleaned (1134), wherein the rinsing device (1186) is separate from the washing device (1180), wherein the cleaning device (1132) is configured for feeding at least a part of the acidic fluid (1114) to the rinsing device (1186).

6. The cleaning device (1132) according to any one of claims 1-5, wherein the cleaning device (1132) further comprises at least one brine container (1152), wherein the brine container (1152) is configured for receiving a liquid supply of the aqueous medium comprising the at least one salt (1116), wherein the brine container (1152) is fluidically connected to the electrodialysis device (1110).

7. The cleaning device (1132) according to any one of claims 1-6, wherein the cleaning device (1132) comprises at least one recirculation loop (1162), wherein the cleaning device (1132) is configured for repeatedly guiding fluid through the electrodialysis device (1110), wherein the recirculation loop (1162) comprises at least one buffer container (72), wherein the buffer container (72) is configured for storing an amount of the fluid, wherein the recirculation loop (1162) is fluidically connected to the fluid application device (1138) for applying the acidic fluid (1114) to the items to be cleaned (1134).

8. The cleaning device (1132) according to claim 7, wherein the cleaning device (1132) further comprises at least one container (1170) fluidically connected to at least one of the buffer container (72) and a brine container (1152), wherein the container (1170) is fluidically connected to the fluid application device (1138).

9. The cleaning device (1132) according to any one of claims 1-8, wherein the cleaning device (1132) further comprises at least one supply (1142) for providing an aqueous medium (1118), wherein the supply (1142) is fluidically connected to the electrodialysis device (1110), wherein the cleaning device (1132) comprises a once through flow path (1146) through the electrodialysis device (1110) for providing the alkaline fluid (1112), wherein at least one inlet (1148) of the electrodialysis device (1110) is connected to the supply (1142) for providing the aqueous medium (1118) and wherein at least one outlet (1150) of the electrodialysis device (1110) is fluidically connected to the fluid application device (1138) for providing the alkaline fluid (1112) to the fluid application device (1138).

10. The cleaning device (1132) according to claim 9, wherein the cleaning device (1132) further comprises at least one acidic recirculation loop, wherein the cleaning device (1132) is configured for repeatedly guiding the acidic fluid (1114) through the electrodialysis device (1110).

11. The cleaning device (1132) according to any one of claims 1-10, wherein the electrode rinse fluid path (1120) comprises at least one degassing device (D1).

12. The cleaning device (1132) according to any one of claims 1-11 wherein the fluidic stack (30) further comprises at least one brine chamber (50i3) for receiving the aqueous medium comprising the at least one salt (1116), wherein the fluidic stack (30) further comprises at least one anion exchange membrane (44i) separating the brine chamber (50i3) and the acidic chamber (50i2), the anion exchange membrane (44i) enabling anion exchange between the brine chamber (50i3) and the acidic chamber (50i2).

13. The cleaning device (1132) according to any one of claims 1-12, wherein the fluidic stack (30) comprises a plurality of the acidic chambers (50i2), a plurality of the alkaline chambers (50i1) and a plurality of the bipolar membranes (42i), and optionally a plurality of the brine chambers (50i3) and a plurality of the anion exchange membranes (44i), wherein the fluidic stack (30) comprises a plurality of stacked groups of chambers (40i), the groups of chambers (40i) each comprising at least one of the acidic chambers (50i2) and at least one of the alkaline chambers (50i1), the acidic chamber (50i2) and the at least one alkaline chamber (50i1) of each group (40i) being separated by the bipolar membrane (42i).

14. The cleaning device (1132) according to any one of claims 1-13, wherein the cleaning device (1132) comprises at least one transport device (1210) for transporting the items to be cleaned (1134) through the cleaning chamber (1136), wherein the cleaning chamber (1136) comprises a plurality of cleaning compartments (1212) sequentially arranged in a transport direction (1214) of the transport device (1210), wherein the cleaning compartments (1212) comprise at least a first washing compartment (1222) and at least a second washing compartment (1224) disposed downstream of the first washing compartment (1222) in the transport direction (1214), wherein the cleaning device (1132) is configured for feeding the alkaline fluid (1112) into the first washing compartment (1222) and for feeding the acidic fluid (1114) into the second washing compartment (1224).

15. A process of cleaning items (1134), wherein the process comprises using the cleaning device (1132) according to any one of claims 1 to 14, the process further comprising:
i. receiving the items to be cleaned (1134) in at least one cleaning chamber (1136) of a cleaning device (1132);
ii. preparing at least one alkaline fluid (1112) and at least one acidic fluid (1114) from an aqueous medium comprising at least one salt (1116) by using bipolar membrane electrodialysis in at least one electrodialysis device (1110) of the cleaning device (1132); and
iii. feeding the at least one alkaline fluid (1112) to at least one fluid application device (1138) of the cleaning device (1132); and
iv. applying at least one cleaning fluid (1140) to the items (1134) received in the cleaning chamber (1136) by using the at least one fluid application device (1138) of the cleaning device (1132).

16. The process according to claim 15, wherein step ii. comprises passing a stream of an aqueous medium (W1) into the electrodialysis device (1110) and removing a stream (B1) of the at least one alkaline fluid (1112) from the electrodialysis device (1110), wherein the at least one alkaline fluid (1112) comprises the aqueous medium (1118) comprising an alkali metal hydroxide MOH, wherein M comprises one or more of Na, K, and Li, preferably one or more of Na and K, more preferably Na, wherein more preferably, M is Na.

17. The process according to any one of claims 15-16, wherein step ii. comprises passing a stream (S1) of the aqueous medium comprising the at least one salt (1116) into the electrodialysis device (1110) and removing a stream (A1) of the at least one acidic fluid (1114) from the electrodialysis device (1110), wherein the aqueous medium comprising the at least one salt (1116) comprises at least one alkali metal salt MA of a Bronsted acid HA, wherein the at least one acidic fluid (1114) comprises the aqueous medium comprising the Bronsted acid HA, wherein the Bronsted acid HA has one or more pKa values, wherein at least one pKa value is in the range of from 2 to 7, wherein at least one of the salts MA has a calcium dissociation constant pCa of at least 5, wherein from 1 kg of the alkali metal salts MA, M preferably being Na, at least 350 g, preferably at least 400 g MOH, preferably NaOH, are produced.

18. The process according to any one of claims 15-17, further comprising:
v. feeding at least a part of the acidic fluid (1114) to the fluid application device (1138).

19. The process according to any one of claims 15-18, wherein, in step ii., an electric current density of 10 A/m² to 1500 A/m² is used, and wherein, further in step ii., an electric voltage of less than 50 V is used.

20. The process according to any one of claims 15-19, wherein the process further comprises removing the items to be cleaned (1134) from the cleaning chamber (1136) and decalcifying at least a part of the cleaning device (1132) by using the acidic fluid (1114).

21. The process according to any one of claims 15-20, wherein the process further comprises self-testing the electrodialysis device (1110), wherein the self-testing comprises passing a stream (S1) of the aqueous medium comprising the at least one salt (1116) and a stream (W1) of the aqueous medium (1118) through the electrodialysis device (1110) without providing electric power to the electrodialysis device (1110).

## Patentansprüche

1. Reinigungsvorrichtung (1132) zum Reinigen von Gegenständen (1134), umfassend:
a. mindestens eine Reinigungskammer (1136) zum Aufnehmen der Gegenstände (1134);
b. mindestens eine Fluidaufbringungsvorrichtung (1138) zum Aufbringen mindestens eines Reinigungsfluids (1140) auf die in der Reinigungskammer (1136) aufgenommenen Gegenstände (1134); und
c. mindestens eine Elektrodialysevorrichtung (1110), die dazu eingerichtet ist, mindestens ein alkalisches Fluid (1112) und mindestens ein saures Fluid (1114) aus einem wässrigen Medium, das mindestens ein Salz (1116) enthält, unter Verwendung von Bipolar-Membran-Elektrodialyse herzustellen,
wobei die Reinigungsvorrichtung (1132) dazu eingerichtet ist, mindestens einen Teil des alkalischen Fluids (1112) der Fluidaufbringungsvorrichtung (1138) zuzuführen,
wobei die Elektrodialysevorrichtung (1110) umfasst:
c.1 einen fluidischen Stapel (30), umfassend
- mindestens eine saure Kammer (50i2) mit mindestens einem sauren Auslass (522i2) zum Bereitstellen des sauren Fluids (1114), wobei die saure Kammer (50i2) ferner mindestens einen Einlass der sauren Kammer (521i2) zum Durchströmen von Fluid durch die saure Kammer (50i2) umfasst;
- mindestens eine alkalische Kammer (50i1) mit mindestens einem alkalischen Auslass (512i1) zum Bereitstellen des alkalischen Fluids (1112), wobei die alkalische Kammer (50i1) mindestens einen Einlass der alkalischen Kammer (511i1) zum Durchströmen von Fluid durch die alkalische Kammer (50i1) umfasst; und
- mindestens eine bipolare Membran (42i), welche die saure Kammer (50i2) und die alkalische Kammer (50i1) trennt, wobei die bipolare Membran (42i) einen bipolaren Ionenaustausch zwischen der sauren Kammer (50i2) und der alkalischen Kammer (50i1) ermöglicht;
c.2 ein Kathodenkompartiment (11), umfassend mindestens eine Kathodenelektrode (10), wobei das Kathodenkompartiment (11) durch mindestens eine Membran (41i), die einen Ionenaustausch zwischen dem Kathodenkompartiment (11) und dem fluidischen Stapel (30) ermöglicht, von dem fluidischen Stapel (30) getrennt ist; und
c.3 ein Anodenkompartiment (21), umfassend mindestens eine Anodenelektrode (20), wobei das Anodenkompartiment (21) durch die mindestens eine Membran (43i), die einen Ionenaustausch zwischen dem Anodenkompartiment und (21) dem fluidischen Stapel (30) ermöglicht, von dem fluidischen Stapel (30) getrennt ist,
wobei der fluidische Stapel (30) zwischen dem Kathodenkompartiment (11) und dem Anodenkompartiment (21) angeordnet ist,
wobei das Kathodenkompartiment (11) eine Kathodenkammer (12) zum Aufnehmen eines Kathodenspülfluids umfasst, wobei die Kathodenelektrode (10) in der Kathodenkammer (12) angeordnet ist,
wobei das Anodenkompartiment (21) eine Anodenkammer (20) zum Aufnehmen eines Anodenspülfluids umfasst, wobei die Anodenelektrode (20) in der Anodenkammer (22) angeordnet ist, und
wobei die Kathodenkammer (12) und die Anodenkammer (22) über mindestens einen Elektrodenspülfluidpfad (1120) verbunden sind.

2. Reinigungsvorrichtung (1132) nach Anspruch 1, wobei die Reinigungsvorrichtung (1132) ferner dazu eingerichtet ist, mindestens einen Teil des sauren Fluids (1114) der Fluidaufbringungsvorrichtung (1138) zuzuführen.

3. Reinigungsvorrichtung (1132) nach Anspruch 2, weiterhin umfassend mindestens eine Steuervorrichtung (1206) zum Steuern eines Betriebs der Reinigungsvorrichtung (1132), wobei die Steuervorrichtung (1206) dazu eingerichtet ist, das Zuführen des alkalischen Fluids (1112) zu der Fluidaufbringungsvorrichtung (1138) zu steuern und auch das Zuführen des sauren Fluids (1114) zu der Fluidaufbringungsvorrichtung (1138) zu steuern, wobei die Reinigungsvorrichtung (1132) dazu eingerichtet ist, das saure Fluid (1114) für mindestens einen Zweck zu verwenden, ausgewählt aus der Gruppe bestehend aus:
- einem Waschprozess, wobei in dem Waschprozess sowohl ein Teil des alkalischen Fluids (1112) als auch ein Teil des sauren Fluids (1114) auf die zu reinigenden Gegenstände (1134) aufgebracht werden;
- einem sauren Expositionsprozess, wobei in dem sauren Expositionsprozess mindestens ein Teil des sauren Fluids (1114) direkt auf die zu reinigenden Gegenstände (1134) aufgebracht wird;
- einem Waschprozess, wobei in dem Waschprozess sowohl ein Teil des alkalischen Fluids (1112) als auch ein Teil des sauren Fluids (1114) mindestens einem gemeinsamen Waschtank (1182) der Fluidaufbringungsvorrichtung (1138) zugeführt werden;
- einem Waschprozess, wobei in dem Waschprozess ein Teil des alkalischen Fluids (1112) und ein Teil des sauren Fluids (1114) unterschiedlichen Waschtanks (1182) der Fluidaufbringungsvorrichtung (1138) zugeführt werden;
- einem Spülprozess, wobei in dem Spülprozess ein Teil des sauren Fluids (1114) auf die zu reinigenden Gegenstände (1134) aufgebracht wird; und
- einem Entkalkungsprozess, wobei in dem Entkalkungsprozess ein Teil des sauren Fluids (1114) zu Entkalkungszwecken auf mindestens eines von der Fluidaufbringungsvorrichtung (1138) und den zu reinigenden Gegenständen (1134) aufgebracht wird; und
- einem Entkalkungsprozess, wobei in dem Entkalkungsprozess ein Teil des sauren Fluids (1114) auf einen Zulaufstrom einer Umkehrosmosevorrichtung aufgebracht wird, die von der Reinigungsvorrichtung (1132) umfasst ist.

4. Reinigungsvorrichtung (1132) nach einem der Ansprüche 1 bis 3, wobei das mindestens eine Reinigungsfluid (1140) mindestens ein Waschfluid (1178) umfasst, wobei die Fluidaufbringungsvorrichtung (1138) mindestens eine Waschvorrichtung (1180) zum Aufbringen des Waschfluids (1178) auf die zu reinigenden Gegenstände (1134) umfasst, wobei die Reinigungsvorrichtung (1132) dazu eingerichtet ist, das alkalische Fluid (1112) der Waschvorrichtung (1180) zuzuführen.

5. Reinigungsvorrichtung (1132) nach Anspruch 4, wobei das mindestens eine Reinigungsfluid (1140) ferner mindestens ein Spülfluid (1184) umfasst, wobei die Fluidaufbringungsvorrichtung (1138) mindestens eine Spülvorrichtung (1186) zum Aufbringen des Spülfluids (1184) auf die zu reinigenden Gegenstände (1134) umfasst, wobei die Spülvorrichtung (1186) von der Waschvorrichtung (1180) getrennt ist, wobei die Reinigungsvorrichtung (1132) dazu eingerichtet ist, mindestens einen Teil des sauren Fluids (1114) der Spülvorrichtung (1186) zuzuführen.

6. Reinigungsvorrichtung (1132) nach einem der Ansprüche 1 bis 5, wobei die Reinigungsvorrichtung (1132) ferner mindestens einen Solebehälter (1152) umfasst, wobei der Solebehälter (1152) dazu eingerichtet ist, einen Flüssigkeitsvorrat des wässrigen Mediums, das das mindestens eine Salz (1116) umfasst, aufzunehmen, wobei der Solebehälter (1152) fluidisch mit der Elektrodialysevorrichtung (1110) verbunden ist.

7. Reinigungsvorrichtung (1132) nach einem der Ansprüche 1 bis 6, wobei die Reinigungsvorrichtung (1132) mindestens einen Rezirkulationskreislauf (1162) umfasst, wobei die Reinigungsvorrichtung (1132) dazu eingerichtet ist, Fluid wiederholt durch die Elektrodialysevorrichtung (1110) zu führen, wobei der Rezirkulationskreislauf (1162) mindestens einen Pufferbehälter (72) umfasst, wobei der Pufferbehälter (72) dazu eingerichtet ist, eine Menge des Fluids zu speichern, wobei der Rezirkulationskreislauf (1162) fluidisch mit der Fluidaufbringungsvorrichtung (1138) verbunden ist, um das saure Fluid (1114) auf die zu reinigenden Gegenstände (1134) aufzubringen.

8. Reinigungsvorrichtung (1132) nach Anspruch 7, wobei die Reinigungsvorrichtung (1132) ferner mindestens einen Behälter (1170) umfasst, der fluidisch mit mindestens einem von dem Pufferbehälter (72) und einem Solebehälter (1152) verbunden ist, wobei der Behälter (1170) fluidisch mit der Fluidaufbringungsvorrichtung (1138) verbunden ist.

9. Reinigungsvorrichtung (1132) nach einem der Ansprüche 1 bis 8, wobei die Reinigungsvorrichtung (1132) ferner mindestens eine Versorgung (1142) zum Bereitstellen eines wässrigen Mediums (1118) umfasst, wobei die Versorgung (1142) fluidisch mit der Elektrodialysevorrichtung (1110) verbunden ist, wobei die Reinigungsvorrichtung (1132) einen Einmal-Durchlauf-Strömungspfad (1146) durch die Elektrodialysevorrichtung (1110) zum Bereitstellen des alkalischen Fluids (1112) umfasst, wobei mindestens ein Einlass (1148) der Elektrodialysevorrichtung (1110) mit der Versorgung (1142) zum Bereitstellen des wässrigen Mediums (1118) verbunden ist und wobei mindestens ein Auslass (1150) der Elektrodialysevorrichtung (1110) fluidisch mit der Fluidaufbringungsvorrichtung (1138) verbunden ist, um das alkalische Fluid (1112) der Fluidaufbringungsvorrichtung (1138) bereitzustellen.

10. Reinigungsvorrichtung (1132) nach Anspruch 9, wobei die Reinigungsvorrichtung (1132) ferner mindestens einen sauren Rezirkulationskreislauf umfasst, wobei die Reinigungsvorrichtung (1132) dazu eingerichtet ist, das saure Fluid (1114) wiederholt durch die Elektrodialysevorrichtung (1110) zu führen.

11. Reinigungsvorrichtung (1132) nach einem der Ansprüche 1 bis 10, wobei der Elektrodenspülfluidpfad (1120) mindestens eine Entgasungsvorrichtung (D1) umfasst.

12. Reinigungsvorrichtung (1132) nach einem der Ansprüche 1 bis 11, wobei der fluidische Stapel (30) ferner mindestens eine Solekammer (50i3) zum Aufnehmen des wässrigen Mediums, das das mindestens eine Salz (1116) umfasst, umfasst, wobei der fluidische Stapel (30) ferner mindestens eine Anionenaustauschmembran (44i) umfasst, welche die Solekammer (50i3) und die saure Kammer (50i2) trennt, wobei die Anionenaustauschmembran (44i) einen Anionenaustausch zwischen der Solekammer (50i3) und der sauren Kammer (50i2) ermöglicht.

13. Reinigungsvorrichtung (1132) nach einem der Ansprüche 1 bis 12, wobei der fluidische Stapel (30) eine Mehrzahl der sauren Kammern (50i2), eine Mehrzahl der alkalischen Kammern (50i1) und eine Mehrzahl der bipolaren Membranen (42i) und optional eine Mehrzahl der Solekammern (50i3) und eine Mehrzahl der Anionenaustauschmembranen (44i) umfasst, wobei der fluidische Stapel (30) eine Mehrzahl gestapelter Gruppen von Kammern (40i) umfasst, wobei die Gruppen von Kammern (40i) jeweils mindestens eine der sauren Kammern (50i2) und mindestens eine der alkalischen Kammern (50i1) umfassen, wobei die saure Kammer (50i2) und die mindestens eine alkalische Kammer (50i1) jeder Gruppe (40i) durch die bipolare Membran (42i) getrennt sind.

14. Reinigungsvorrichtung (1132) nach einem der Ansprüche 1 bis 13, wobei die Reinigungsvorrichtung (1132) mindestens eine Transportvorrichtung (1210) zum Transportieren der zu reinigenden Gegenstände (1134) durch die Reinigungskammer (1136) umfasst, wobei die Reinigungskammer (1136) eine Mehrzahl von Reinigungskompartimenten (1212) umfasst, die in einer Transportrichtung (1214) der Transportvorrichtung (1210) nacheinander angeordnet sind, wobei die Reinigungskompartimente (1212) mindestens ein erstes Waschkompartiment (1222) und mindestens ein zweites Waschkompartiment (1224), das stromabwärts des ersten Waschkompartiments (1222) in der Transportrichtung (1214) angeordnet ist, umfassen, wobei die Reinigungsvorrichtung (1132) dazu eingerichtet ist, das alkalische Fluid (1112) dem ersten Waschkompartiment (1222) zuzuführen und das saure Fluid (1114) dem zweiten Waschkompartiment (1224) zuzuführen.

15. Verfahren zum Reinigen von Gegenständen (1134), wobei das Verfahren das Verwenden der Reinigungsvorrichtung (1132) nach einem der Ansprüche 1 bis 14 umfasst, wobei das Verfahren ferner umfasst:
i. Aufnehmen der zu reinigenden Gegenstände (1134) in mindestens einer Reinigungskammer (1136) einer Reinigungsvorrichtung (1132);
ii. Herstellen mindestens eines alkalischen Fluids (1112) und mindestens eines sauren Fluids (1114) aus einem wässrigen Medium, das mindestens ein Salz (1116) umfasst, unter Verwendung von Bipolar-Membran-Elektrodialyse in mindestens einer Elektrodialysevorrichtung (1110) der Reinigungsvorrichtung (1132); und
iii. Zuführen des mindestens einen alkalischen Fluids (1112) zu mindestens einer Fluidaufbringungsvorrichtung (1138) der Reinigungsvorrichtung (1132); und
iv. Aufbringen mindestens eines Reinigungsfluids (1140) auf die in der Reinigungskammer (1136) aufgenommenen Gegenstände (1134) unter Verwendung der mindestens einen Fluidaufbringungsvorrichtung (1138) der Reinigungsvorrichtung (1132).

16. Verfahren nach Anspruch 15, wobei Schritt ii. umfasst, einen Strom eines wässrigen Mediums (W1) in die Elektrodialysevorrichtung (1110) einzuleiten und einen Strom (B1) des mindestens einen alkalischen Fluids (1112) aus der Elektrodialysevorrichtung (1110) zu entfernen, wobei das mindestens eine alkalische Fluid (1112) das wässrige Medium (1118) umfasst, das ein Alkalimetallhydroxid MOH umfasst, wobei M eines oder mehrere von Na, K und Li umfasst, vorzugsweise eines oder mehrere von Na und K, stärker bevorzugt Na, wobei stärker bevorzugt M Na ist.

17. Verfahren nach einem der Ansprüche 15 bis 16, wobei Schritt ii. umfasst, einen Strom (S1) des wässrigen Mediums, das das mindestens eine Salz (1116) umfasst, in die Elektrodialysevorrichtung (1110) einzuleiten und einen Strom (A1) des mindestens einen sauren Fluids (1114) aus der Elektrodialysevorrichtung (1110) zu entfernen, wobei das wässrige Medium, das das mindestens eine Salz (1116) umfasst, mindestens ein Alkalimetallsalz MA einer Brønsted-Säure HA umfasst, wobei das mindestens eine saure Fluid (1114) das wässrige Medium umfasst, das die Brønsted-Säure HA umfasst, wobei die Brønsted-Säure HA einen oder mehrere pKa-Werte aufweist, wobei mindestens ein pKa-Wert im Bereich von 2 bis 7 liegt, wobei mindestens eines der Salze MA eine Calcium-Dissoziationskonstante pCa von mindestens 5 aufweist, wobei aus 1 kg der Alkalimetallsalze MA, wobei M vorzugsweise Na ist, mindestens 350 g, vorzugsweise mindestens 400 g MOH, vorzugsweise NaOH, hergestellt werden.

18. Verfahren nach einem der Ansprüche 15 bis 17, ferner umfassend:
v. Zuführen mindestens eines Teils des sauren Fluids (1114) zu der Fluidaufbringungsvorrichtung (1138).

19. Verfahren nach einem der Ansprüche 15 bis 18, wobei in Schritt ii. eine elektrische Stromdichte von 10 A/m² bis 1500 A/m² verwendet wird und wobei ferner in Schritt ii. eine elektrische Spannung von weniger als 50 V verwendet wird.

20. Verfahren nach einem der Ansprüche 15 bis 19, wobei das Verfahren ferner das Entfernen der zu reinigenden Gegenstände (1134) aus der Reinigungskammer (1136) und das Entkalken mindestens eines Teils der Reinigungsvorrichtung (1132) unter Verwendung des sauren Fluids (1114) umfasst.

21. Verfahren nach einem der Ansprüche 15 bis 20, wobei das Verfahren ferner ein Selbsttesten der Elektrodialysevorrichtung (1110) umfasst, wobei das Selbsttesten umfasst, einen Strom (S1) des wässrigen Mediums, das das mindestens eine Salz (1116) umfasst, und einen Strom (W1) des wässrigen Mediums (1118) durch die Elektrodialysevorrichtung (1110) zu leiten, ohne der Elektrodialysevorrichtung (1110) elektrische Leistung zuzuführen.

## Revendications

1. Dispositif de nettoyage (1132) pour nettoyer des articles (1134), comprenant :
a. au moins une chambre de nettoyage (1136) pour recevoir les articles (1134) ;
b. au moins un dispositif d'application de fluide (1138) pour appliquer au moins un fluide de nettoyage (1140) aux articles (1134) reçus dans la chambre de nettoyage (1136) ; et
c. au moins un dispositif d'électrodialyse (1110) configuré pour préparer au moins un fluide alcalin (1112) et au moins un fluide acide (1114) à partir d'un milieu aqueux comprenant au moins un sel (1116) en utilisant une électrodialyse à membrane bipolaire,
lequel dispositif de nettoyage (1132) est configuré pour délivrer au moins une partie du fluide alcalin (1112) au dispositif d'application de fluide (1138),
le dispositif d'électrodialyse (1110) comprenant :
c.1 un empilement fluidique (30) comprenant
- au moins une chambre à acide (50i2) ayant au moins une sortie d'acide (522i2) pour délivrer le fluide acide (1114), laquelle chambre à acide (50i2) comprend en outre au moins une entrée de chambre à acide (521i2) pour diriger en continu le fluide à travers la chambre à acide (50i2) ;
- au moins une chambre à alcali (50i1) ayant au moins une sortie d'alcali (512i1) pour délivrer le fluide alcalin (1112), laquelle chambre à alcali (50i1) comprend au moins une entrée de chambre à alcali (511i1) pour diriger en continu le fluide à travers la chambre à alcali (50i1) ; et
- au moins une membrane bipolaire (42i) séparant la chambre à acide (50i2) et la chambre à alcali (50i1), la membrane bipolaire (42i) permettant un échange d'ions bipolaire entre la chambre à acide (50i2) et la chambre à alcali (50i1) ;
c.2 un compartiment de cathode (11) comprenant au moins une électrode cathode (10), le compartiment de cathode (11) étant séparé de l'empilement fluidique (30) par au moins une membrane (41i) permettant un échange d'ions entre le compartiment de cathode (11) et l'empilement fluidique (30) ; et
c.3 un compartiment d'anode (21) comprenant au moins une électrode anode (20), le compartiment d'anode (21) étant séparé de l'empilement fluidique (30) par l'au moins une membrane (43i) permettant un échange d'ions entre le compartiment d'anode (21) et l'empilement fluidique (30),
dans lequel l'empilement fluidique (30) est disposé entre le compartiment de cathode (11) et le compartiment d'anode (21),
dans lequel le compartiment de cathode (11) comprend une chambre de cathode (12) pour recevoir un fluide de rinçage de cathode, dans lequel l'électrode cathode (10) est disposée dans la chambre de cathode (12),
dans lequel le compartiment d'anode (21) comprend une chambre d'anode (20) pour recevoir un fluide de rinçage d'anode, dans lequel l'électrode anode (20) est disposée dans la chambre d'anode (22), et
dans lequel la chambre de cathode (12) et la chambre d'anode (22) sont connectées via au moins un trajet de fluide de rinçage d'électrode (1120).

2. Dispositif de nettoyage (1132) selon la revendication 1, lequel dispositif de nettoyage (1132) est en outre configuré pour délivrer au moins une partie du fluide acide (1114) au dispositif d'application de fluide (1138).

3. Dispositif de nettoyage (1132) selon la revendication 2, comprenant en outre au moins un dispositif de commande (1206) pour commander le fonctionnement du dispositif de nettoyage (1132), dans lequel le dispositif de commande (1206) est configuré pour commander la délivrance du fluide alcalin (1112) au dispositif d'application de fluide (1138) et aussi pour commander la délivrance du fluide acide (1114) au dispositif d'application de fluide (1138), lequel dispositif de nettoyage (1132) est configuré pour utiliser le fluide acide (1114) dans au moins un but choisi dans le groupe constitué par :
- un procédé de lavage, dans lequel, dans le procédé de lavage, tant une partie du fluide alcalin (1112) qu'une partie du fluide acide (1114) sont appliquées aux articles devant être nettoyés (1134) ;
- un procédé d'exposition à un acide, dans lequel, dans le procédé d'exposition à un acide, au moins une partie du fluide acide (1114) est directement appliqué aux articles devant être nettoyés (1134) ;
- un procédé de lavage, dans lequel, dans le procédé de lavage, tant une partie du fluide alcalin (1112) qu'une partie du fluide acide (1114) sont délivrées à au moins une cuve de lavage (1182) commune du dispositif d'application de fluide (1138) ;
- un procédé de lavage, dans lequel, dans le procédé de lavage, une partie du fluide alcalin (1112) et une partie du fluide acide (1114) sont délivrées à des cuves de lavage (1182) différentes du dispositif d'application de fluide (1138) ;
- un procédé de rinçage, dans lequel, dans le procédé de rinçage, une partie du fluide acide (1114) est appliquée aux articles devant être nettoyés (1134) ; et
- un procédé de décalcification, dans lequel, dans le procédé de décalcification, une partie du fluide acide (1114) est appliquée à au moins l'un parmi le dispositif d'application de fluide (1138) et les articles devant être nettoyés (1134), dans un but de décalcification ; et
- un procédé de décalcification, dans lequel, dans le procédé de décalcification, une partie du fluide acide (1114) est appliquée à un courant d'alimentation d'un dispositif à osmose inverse compris dans le dispositif de nettoyage (1132).

4. Dispositif de nettoyage (1132) selon l'une quelconque des revendications 1 à 3, dans lequel l'au moins un fluide de nettoyage (1140) comprend au moins un fluide de lavage (1178), dans lequel le dispositif d'application de fluide (1138) comprend au moins un dispositif de lavage (1180) pour appliquer le fluide de lavage (1178) aux articles devant être nettoyés (1134), lequel dispositif de nettoyage (1132) est configuré pour délivrer le fluide alcalin (1112) au dispositif de lavage (1180).

5. Dispositif de nettoyage (1132) selon la revendication 4, dans lequel l'au moins un fluide de nettoyage (1140) comprend en outre au moins un fluide de rinçage (1184), dans lequel le dispositif d'application de fluide (1138) comprend au moins un dispositif de rinçage (1186) pour appliquer le fluide de rinçage aux articles devant être nettoyés (1134), dans lequel le dispositif de rinçage (1186) est séparé du dispositif de lavage (1180), lequel dispositif de nettoyage (1132) est configuré pour délivrer au moins une partie du fluide acide (1114) au dispositif de rinçage (1186).

6. Dispositif de nettoyage (1132) selon l'une quelconque des revendications 1 à 5, lequel dispositif de nettoyage (1132) comprend en outre un récipient à saumure (1152), dans lequel le récipient à saumure (1152) est configuré pour recevoir une fourniture liquide du milieu aqueux comprenant l'au moins un sel (1116), dans lequel le récipient à saumure (1152) est connecté de manière fluidique au dispositif d'électrodialyse (1110).

7. Dispositif de nettoyage (1132) selon l'une quelconque des revendications 1 à 6, lequel dispositif de nettoyage (1132) comprend au moins une boucle de recirculation (1162), lequel dispositif de nettoyage (1132) est configuré pour guider de façon répétée du fluide à travers le dispositif d'électrodialyse (1110), dans lequel la boucle de recirculation (1162) comprend au moins un récipient à tampon (72), dans lequel le récipient à tampon (72) est configuré pour stocker une certaine quantité du fluide, dans lequel la boucle de recirculation (1162) est connectée de manière fluidique au dispositif d'application de fluide (1138) pour appliquer le fluide acide (1114) aux articles devant être nettoyés (1134).

8. Dispositif de nettoyage (1132) selon la revendication 7, lequel dispositif de nettoyage (1132) comprend en outre au moins un récipient (1170) connecté de manière fluidique à au moins l'un parmi le récipient à tampon (72) et un récipient à saumure (1152), dans lequel le récipient (1170) est connecté de manière fluidique au dispositif d'application de fluide (1138).

9. Dispositif de nettoyage (1132) selon l'une quelconque des revendications 1 à 8, lequel dispositif de nettoyage (1132) comprend en outre au moins une alimentation (1142) pour délivrer un milieu aqueux (1118), dans lequel l'alimentation (1142) est connectée de manière fluidique au dispositif d'électrodialyse (1110), lequel dispositif de nettoyage (1132) comprend un trajet d'écoulement à passage unique (1146) à travers le dispositif d'électrodialyse (1110) pour délivrer le fluide alcalin (1112), dans lequel l'au moins une entrée (1148) du dispositif d'électrodialyse (1110) est connectée à l'alimentation (1142) pour délivrer le milieu aqueux (1118) et dans lequel au moins une sortie (1150) du dispositif d'électrodialyse (1110) est connectée de manière fluidique au dispositif d'application de fluide (1138) pour délivrer le fluide alcalin (1112) au dispositif d'application de fluide (1138).

10. Dispositif de nettoyage (1132) selon la revendication 9, lequel dispositif de nettoyage (1132) comprend en outre au moins une boucle de recirculation d'acide, lequel dispositif de nettoyage (1132) est configuré pour guider de façon répétée le fluide acide (1114) à travers le dispositif d'électrodialyse (1110).

11. Dispositif de nettoyage (1132) selon l'une quelconque des revendications 1 à 10, dans lequel le trajet de fluide de rinçage d'électrode (1120) comprend au moins un dispositif de dégazage (D1).

12. Dispositif de nettoyage (1132) selon l'une quelconque des revendications 1 à 11, dans lequel l'empilement fluidique (30) comprend au moins une chambre à saumure (50i3) pour recevoir le milieu aqueux comprenant l'au moins un sel (1116), dans lequel l'empilement fluidique (30) comprend en outre au moins une membrane échangeuse d'anions (44i) séparant la chambre à saumure (50i3) et la chambre à acide (50i2), la membrane échangeuse d'anions (44i) permettant un échange d'anions entre la chambre à saumure (50i3) et la chambre à acide (50i2).

13. Dispositif de nettoyage (1132) selon l'une quelconque des revendications 1 à 12, dans lequel l'empilement fluidique (30) comprend une pluralité des chambres à acide (50i2), une pluralité des chambres à alcali (50i1) et une pluralité des membranes bipolaires (42i), et éventuellement une pluralité des chambres à saumure (50i3) et une pluralité des membranes échangeuses d'anions (44i), dans lequel l'empilement fluidique (30) comprend une pluralité de groupes empilés de chambres (40i), chacun des groupes de chambres (40i) comprenant au moins une des chambres à acide (50i2) et au moins une des chambres à alcali (50i1), la chambre à acide (50i2) et l'au moins une chambre à alcali (50i1) de chaque groupe (40i) étant séparées par la membrane bipolaire (42i).

14. Dispositif de nettoyage (1132) selon l'une quelconque des revendications 1 à 13, lequel dispositif de nettoyage (1132) comprend au moins un dispositif de transport (1210) pour transporter les articles devant être nettoyés (1134) à travers la chambre de nettoyage (1136), dans lequel la chambre de nettoyage (1136) comprend une pluralité de compartiments de nettoyage (1212) disposés en séquence dans la direction de transport (1214) du dispositif de transport (1210), dans lequel les compartiments de nettoyage (1212) comprennent au moins un premier compartiment de lavage (1222) et au moins un deuxième compartiment de lavage (1224) disposé en aval du premier compartiment de lavage (1222) dans la direction de transport (1214), lequel dispositif de nettoyage (1132) est configuré pour introduire le fluide alcalin (1112) dans le premier compartiment de lavage (1222) et pour introduire le fluide acide (1114) dans le deuxième compartiment de lavage (1224).

15. Procédé de nettoyage d'articles (1134), lequel procédé comprend l'utilisation du dispositif de nettoyage (1132) de l'une quelconque des revendications 1 à 14, le procédé comprenant en outre :
i. la réception des articles devant être nettoyés (1134) dans au moins une chambre de nettoyage (1136) d'un dispositif de nettoyage (1132) ;
ii. la préparation d'au moins un fluide alcalin (1112) et d'au moins un fluide acide (1114) à partir d'un milieu aqueux comprenant au moins un sel (1116) par utilisation d'une électrodialyse à membrane bipolaire dans au moins un dispositif d'électrodialyse (1110) du dispositif de nettoyage (1132) ; et
iii. l'introduction de l'au moins un fluide alcalin (1112) dans l'au moins un dispositif d'application de fluide (1138) du dispositif de nettoyage (1132) ; et
iv. l'application d'au moins un fluide de nettoyage (1140) aux articles (1134) reçus dans la chambre de nettoyage (1136) par utilisation de l'au moins un dispositif d'application de fluide (1138) du dispositif de nettoyage (1132).

16. Procédé selon la revendication 15, dans lequel l'étape ii. comprend le passage d'un courant d'un milieu aqueux (W1) dans le dispositif d'électrolyse (1110) et le retrait d'un courant (B1) de l'au moins un fluide alcalin (1112) hors du dispositif d'électrodialyse (1110), dans lequel l'au moins un fluide alcalin (1112) comprend le milieu aqueux (1118) comprenant un hydroxyde de métal alcalin MOH dans lequel M comprend un ou plusieurs parmi Na, K et Li, de préférence un ou plusieurs parmi Na et K, mieux encore Na, dans lequel mieux encore M est Na.

17. Procédé selon l'une quelconque des revendications 15 et 16, dans lequel l'étape ii. comprend le passage d'un courant (S1) du milieu aqueux comprenant l'au moins un sel (1116) dans le dispositif d'électrodialyse (1110) et le retrait d'un courant (A1) de l'au moins un fluide acide (1114) hors du dispositif d'électrodialyse (1110), dans lequel le milieu aqueux comprenant l'au moins un sel (1116) comprend au moins un sel de métal alcalin MA d'un acide de Bronsted HA, dans lequel l'au moins un fluide acide (1114) comprend le milieu aqueux comprenant l'acide de Bronsted HA, dans lequel l'acide de Bronsted HA a une ou plusieurs valeurs de pKa, dans lequel au moins une valeur de pKa est située dans la plage allant de 2 à 7, dans lequel au moins l'un des sels MA a une constante de dissociation du calcium pCa d'au moins 5, dans lequel, à partir de 1 kg des sels de métal alcalin MA, M étant de préférence Na, au moins 350 g, de préférence au moins 400 g, de MOH, de préférence de NaOH, sont produits.

18. Procédé selon l'une quelconque des revendications 15 à 17, comprenant en outre :
v. l'introduction d'au moins une partie du fluide acide (1114) dans le dispositif d'application de fluide (1138).

19. Procédé selon l'une quelconque des revendications 15 à 18, dans lequel, dans l'étape ii., une densité de courant électrique de 10 A/m² à 1 500 A/m² est utilisée, et dans lequel, encore dans l'étape ii., une tension électrique inférieure à 50 V est utilisée.

20. Procédé selon l'une quelconque des revendications 15 à 19, lequel procédé comprend en outre le retrait des articles devant être nettoyés (1134) hors de la chambre de nettoyage (1136) et la décalcification d'au moins une partie du dispositif de nettoyage (1132) par utilisation du fluide acide (1114).

21. Procédé selon l'une quelconque des revendications 15 à 20, lequel procédé comprend en outre l'autotest du dispositif d'électrodialyse (1110), dans lequel l'autotest comprend le passage d'un courant (S1) du milieu aqueux comprenant l'au moins un sel (1116) et d'un courant (W1) du milieu aqueux (1118) à travers le dispositif d'électrodialyse (1110) sans fourniture d'énergie électrique au dispositif d'électrodialyse (1110).
